(19) Europäisches Patentamt

European Patent Office

Office européen des brevets

(11) **EP 1 352 187 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(21) Anmeldenummer: **01991876.2**

(22) Anmeldetag: **21.12.2001**

(51) Int Cl.:
**F16H 61/04** (2006.01)

(86) Internationale Anmeldenummer:
**PCT/EP2001/015192**

(87) Internationale Veröffentlichungsnummer:
**WO 2002/055910 (18.07.2002 Gazette 2002/29)**

(54) **Verfahren zur Steuerung einer Mehrfachkupplungseinrichtung und eines Lastschaltgetriebes**

Method for the operation of a multiple clutching device and a power shift transmission

Procédé permettant de faire fonctionner un ensemble transmission possédant un dispositif embrayage multiple et une boite de vitesse coupable sous chargé et ensemble transmission de ce type dote d'un unité de commande correspondante

(84) Benannte Vertragsstaaten:
**AT BE CH CY DE DK ES FI FR GB GR IE IT LI LU MC NL PT SE TR**

(30) Priorität: **12.01.2001 DE 10101176**
**01.10.2001 DE 10148429**
**07.12.2001 DE 10160308**

(43) Veröffentlichungstag der Anmeldung:
**15.10.2003 Patentblatt 2003/42**

(73) Patentinhaber: **ZF Sachs AG**
**97424 Schweinfurt (DE)**

(72) Erfinder:
• **KUHSTREBE, Jochen**
**97318 Westheim (DE)**
• **JOHN, Thomas**
**97529 Sulzheim (DE)**
• **REUTHAL, Rainer**
**97294 Unterpleichfeld (DE)**
• **STRASSER, Thomas**
**97422 Schweinfurt (DE)**

(56) Entgegenhaltungen:
**EP-A- 0 288 779        EP-A- 0 632 217**
**WO-A-99/33682        DE-A- 4 432 946**
**DE-A- 19 853 824        DE-A- 19 939 334**
**DE-C- 19 631 983        DE-C- 19 853 825**
**US-A- 5 172 602        US-A- 5 407 401**
**US-A- 5 603 672**

**Beschreibung**

**[Technisches Gebiet]**

Die Erfindung betrifft ein Verfahren zum Betrieb eines zu einem Kraftfahrzeug gehörenden Antriebsstrangs, der aufweist: eine Momentenerzeugungsanordnung, die wenigstens eine Antriebseinheit, gegebenenfalls in Form einer Brennkraftmaschine, sowie gewünschtenfalls ein Hilfsaggregat zur Erzeugung eines Hilfsmoments umfasst; ein eine Synchronisiereinrichtung aufweisendes Getriebe (insbesondere Lastschaltgetriebe) mit wenigstens zwei Getriebeeingangswellen und wenigstens einer Getriebeausgangswelle, wobei eine erste Getriebeeingangswelle wenigstens einem ersten Gang und eine zweite Getriebeeingangswelle wenigstens einem zweiten Gang zugeordnet ist; eine zwischen der Antriebseinheit und dem Getriebe angeordnete Mehrfach-Kupplungseinrichtung, gegebenenfalls Doppel-Kupplungseinrichtung, zur Momentenübertragung zwischen der Antriebseinheit und dem Getriebe, die eine der ersten Getriebeeingangswelle zugeordnete erste Kupplungsanordnung und eine der zweiten Getriebeeingangswelle zugeordnete zweite Kupplungsanordnung aufweist, wobei die beiden Kupplungsanordnungen unabhängig voneinander betätigbar sind.

**[Stand der Technik]**

Ein derartiges Verfahren ist aus der gattungsgemäßen DE 196 31 983 C1 bekannt. Dem in dieser Patentschrift offenbarten Verfahren lag die Zielsetzung zugrunde, beim Schalten völlig ohne Eingriff in das Management (Motormanagement) der Brennkraftmaschine auszukommen, also deren Leistungsstellglied beim Umschalten nicht zu beeinflussen. Ferner sollte das Verfahren ermöglichen, so weit wie möglich ohne interne Synchronisierung des Getriebes auszukommen. Gemäß diesem Ansatz reicht ein Getriebe aus, das nur für bestimmte Schaltungsarten eine interne Synchronisierung des Getriebes benötigt, wohingegen für andere Schattungsarten die Synchronisierung gewissermaßen extern vermittels der Kupplungseinrichtung erreicht wird.

Das Verfahren der DE 196 31 983 C1 bedingt, dass das am Abtrieb wirkende Drehmoment während des Schaltablaufs nicht konstant ist. Hierdurch kann es zu unerwünschten Zwischenbeschleunigungsvorgängen oder Zwischenverzögerungsvorgängen während des Schaltablaufs kommen. Die Folge sind Komforteinbußen für den Fahrer und die Fahrzeuginsassen während des Schaltvorgangs.

Weiterhin ist aus der US-A-5 603 672 ein Verfahren zum Betrieb eines zu einem Kraftfahrzeug gehörenden Antriebsstrang bekannt. Hierbei weist der Antriebsstrang auf: eine Momentenerzeugungsanordnung, die wenigstens eine Antriebseinheit umfasst; ein Getriebe mit wenigstens zwei Getriebeeingangswellen und wenigstens einer Getriebeausgangswelle, wobei eine erste Getriebeeingangswelle wenigstens einem ersten Gang und eine zweite Getriebeeingangswelle wenigstens einem zweiten Gang zugeordnet ist; eine zwischen der Antriebseinheit und dem Getriebe angeordnete Mehrfach-Kupplungseinrichtung zur Momentenübertragung zwischen der Antriebseinheit und dem Getriebe, die eine der ersten Getriebeingangswelle zugeordnete erste Kupplungsanordnung und eine der zweiten Getriebeingangswelle zugeordnete zweite Kupplungsanordnung aufweist, wobei die beiden Kupplungsanordnungen dahingehend unabhängig voneinander betätigbar sind, dass die eine Kupplungsanordnung im Sinne eines Einkuppelns oder Auskuppelns betätigbar ist und gleichzeitig die andere Kupplungsanordnung im Sinne eines Einkuppelns oder Auskuppelns betätigbar ist; wobei zumindest in einem Betriebszustand von einem Zug-Betriebszustand und einem Schub-Betriebszustand des Antriebsstrangs bzw. des Kraftfahrzeugs beim Schalten zwischen einem der einen Kupplungsanordnung zugeordneten ersten Gang und einem der zweiten Kupplungsanordnung zugeordneten zweiten Gang die Kupplungsanordnungen derart betätigt und die Momentenerzeugungseinrichtung derart angesteuert werden, damit Schaltungen möglich werden, bei denen die folgenden Kriterien in Bezug auf einen das Schalten umfassenden Schaltablauf erfüllt sind:

- während des Schattablaufs tritt an der Getriebeausgangswelle oder abtriebsseitig derselben in einer Übergangsphase ein sich monoton änderndes, zumindest teilweise vom Getriebe zur Getriebeausgangswelle vermitteltes, auf das Fahrzeug im Sinne einer Beschleunigung oder Verzögerung wirkendes Moment auf;

- während des Schaltablaufs bleibt das an der Getriebeausgangswelle oder abtriebsseitig derselben auftretende, zumindest teilweise vom Getriebe zur Getriebeausgangswelle vermittelte Moment vor und nach der Übergangsphase im Wesentlichen konstant;

- während des Schaltablaufs wird eine im Wesentlichen monoton ansteigende oder im Wesentlichen monoton abfallende Fahrzeugbeschleunigung erreicht.

**[Aufgabe der Erfindung]**

Die Nachteile des Standes der Technik sollen bei der erfindudgsgemäßen Lösung durch ein Verfahren gemäß Ansprüchen 1 und 2 und einen Antriebsstrang gemäß Anspruch 62 vermieden werden.

**[Darstellung der Erfindung]**

Demgegenüber schlägt die Erfindung zur Gewährleistung eines hohen Komforts für den Fahrer und die Fahrzeuginsassen vor, dass zwischen ersten und zweiten Betriebszuständen unterschieden wird und dass zumindest in einem ersten Betriebszustand von einem Zug-Betriebszustand und einem Schub-Betriebszustand des Antriebsstrangs bzw. des Kraftfahrzeugs beim Schalten zwischen einem ersten Gang und einem zweiten Gang die Kupplungsanordnungen derart betätigt und die Momentenerzeugungsanordnung derart angesteuert werden, dass wenigstens eines, vorzugsweise mehrere oder - höchstvorzugsweise - alle der folgenden Kriterien in Bezug auf einen das Schalten umfassenden Schaltablauf erfüllt sind: a) während des Schaltablaufs tritt an der Getriebeausgangswelle oder abtriebsseitig derselben in einer Übergangsphase ein sich monoton änderndes, zumindest teilweise vom Getriebe zur Getriebeausgangswelle vermitteltes, auf das Fahrzeug im Sinne einer Beschleunigung oder Verzögerung wirkendes Moment auf, wobei vorzugsweise eine Differenz zwischen einem Momentwert am Anfang der Übergangsphase und einem Momentwert am Ende der Übergangsphase im Wesentlichen einer Übersetzungsänderung des Getriebes beim Schalten entspricht, b) während des Schaltablaufs bleibt das an der Getriebeausgangswelle oder abtriebsseitig derselben auftretende, zumindest teilweise vom Getriebe zur Getriebeausgangswelle vermittelte Moment vor und nach der Übergangsphase im Wesentlichen konstant, c) während des Schattablaufs wird über die Getriebeeingangswellen ein im Wesentlichen konstant bleibendes, zeitweilig einer Summe aus einem über die erste Getriebeeingangswelle eingeleiteten ersten Momentenbeitrag und einem über die zweite Getriebeeingangswelle eingeleiteten zweiten Momentenbeitrag entsprechendes Getriebeeingangsmoment in das Getriebe eingeleitet, d) während des Schattablaufs wird eine im Wesentlichen monoton ansteigende oder im Wesentlichen monoton abfallende Fahrzeugbeschleunigung erreicht; und wobei zumindest in einem zweiten Betriebszustand von einem Zug-Betriebszustand und einem Schub-Betriebswstand der Schaltablauf beim Schalten zwischen dem ersten und dem zweiten Gang im Sinne eines Hochschaltens oder im Sinne eines Herunterschaltens derart durchgeführt wird, dass eine Zugkraftunterbrechung oder eine Schubkraftunterbrechung auftritt.

Wenn vorstehend und im Folgenden von monoton steigend (monoton ansteigend) bzw. monoton fallend (monoton abfallend) gesprochen wird, so meint "monoton steigend/ansteigend", dass die betreffende Größe konstant bleibt bzw. ansteigt, und meint "monoton fallend/abfallend', dass die betreffende Größe konstant bleibt bzw. fällt. Diesen Begriffen kommt also ihre jeweils aus der Mathematik bekannte Bedeutung zu:

Eine Funktion f heißt monoton fallend (steigend), wenn für alle $x_1$, $x_2$ aus [a, b] mit a $x_1 < x_2$ b gilt:

$$f(x_1) \geq f(x_2) \; (f(x_1) \leq f(x_2)).$$

In entsprechender Weise kommt den im Folgenden verwendeten Begriffen "streng monoton steigend/ansteigend" und "streng monoton fallend/abfallend" ihre jeweils aus der Mathematik bekannte Bedeutung zu:

Die Funktion f heißt in [a, b] streng monoton fallend (steigend), falls für alle $x_1$, $x_2$ aus [a, b] mit a $x_1 < x_2$ b gilt:

$$f(x_1) > f(x_2) \; (f(x_1) < f(x_2)).$$

Auch dem im Folgenden verwendeten Begriff "stetig" soll seine aus der Mathematik bekannte Bedeutung zukommen.

Gemäß dem Erfindungsvorschlag ist beispielsweise vorgesehen, dass durch einen aktiven Eingriff ins Motormanagement bzw. eine aktive Beeinflussung des Leistungsstellglieds der Antriebseinheit (gegebenenfalls Brennkraftmaschine) sowie gegebenenfalls durch entsprechende Aktivierung des Hilfsaggregats das von der Momentenerzeugungsanordnung abgegebene Moment (gegebenenfalls Motormoment) so gesteuert wird, dass am Abtrieb auftretende Momentschwankungen infolge von erzwungenen Beschleunigungs- und Verzögerungsvorgängen des Motors oder/und der Getriebeeingangswellen (allgemein infolge von erzwungenen positiven und negativen Beschleunigungsvorgängen) kompensiert werden. Durch diese Kompensation ist das Ziel einer monoton steigenden oder monoton fallenden Längsbeschleunigung erreichbar.

Bevorzugt ist das wenigstens eine Kriterium beim Hochschalten von einem niedrigeren Gang (Ausgangsgang) zu einem höheren Gang (Zielgang) erfüllt. Ferner ist bevorzugt, dass das wenigstens eine Kriterium beim Herunterschalten von einem höheren Gang (Ausgangsgang) zu einem niedrigeren Gang (Zielgang) erfüllt ist. Handelt es sich bei dem Ausgangsgang um einen ersten Gang, so ist der Zielgang ein zweiter Gang. Handelt es sich bei dem Ausgangsgang um einen zweiten Gang, so ist der Zielgang ein erster Gang.

Gemäß einer bevorzugten Realisierung ist das wenigstens eine Kriterium sowohl im Zug-Betriebszustand als auch im Schub-Betriebszustand erfüllt.

Es wird vorgeschlagen, dass der Schaltablauf vor dem Einlegen des Zielgangs eine Betätigung der dem Zielgang zuordneten Kupplungsanordnung im Sinne eines weitgehenden oder vollständigen Auskuppelns umfasst. Vor oder/und während dem Einlegen des Zielgangs kann der Schaltablauf eine Betätigung der dem Ausgangsgang zugeordneten Kupplungsanordnung im Sinne einer Reduktion des von der Kupplungsanordnung übertragbaren Moments umfassen. Hierzu wird weiterbildend vorgeschlagen, dass in dem Zug-Betriebszustand das von der Kupplungsanordnung übertragbare Moment auf einen Wert eingestellt wird, der etwa dem momentan oder vorausgehend von der Momentenerzeugungsanordnung bereitgestellten Moment entspricht. Betreffend den Schub-Betriebszustand wird weiterbildend vorgeschlagen, dass in dem Schub-Betriebszustand das von der Kupplungsanordnung übertragbare Moment auf einen Wert eingestellt wird, der betragsmäßig unter dem momentan oder vorausgehend von der Momentenerzeugungsanordnung bereitgestellten Moment liegt.

Der Schaltablauf kann vor oder/und während oder/und nach dem Einlegen des Zielgangs eine Ansteuerung der Momentenerzeugungsanordnung im Sinne einer Erhöhung oder Verringerung eines von der Momentenerzeugungsanordnung bereitgestellten Moments umfassen.

Um höchsten Komfortansprüchen zu genügen, kann vorgesehen sein, dass ein Momentenbeitrag aufgrund einer im Zuge des Einlegens des Zielgangs auftretenden Beschleunigung oder Abbremsung einer Drehmassenanordnung kompensiert wird durch Einstellung eines entsprechenden Kompensationsmomentenbeitrags der Momentenerzeugungsanordnung oder/und durch entsprechende Betätigung der dem Ausgangsgang zugeordneten Kupplungsanordnung.

Zur "Umlagerung" des zu übertragenden Moments von der einen Kupplungsanordnung zur anderen Kupplungsanordnung wird vorgeschlagen, dass die dem Ausgangsgang zugeordnete Kupplungsanordnung in einen Schlupfzustand gebracht wird und danach die dem schon eingelegten Zielgang zugeordnete Kupplungsanordnung im Sinne eines Einkuppelns und die dem Ausgangsgang zugeordnete Kupplungsanordnung im Sinne eines Auskuppelns betätigt wird. Bevorzugt erfolgt die Betätigung der Kupplungsanordnungen aufeinander abgestimmt, derart, dass ein von den Kupplungsanordnungen insgesamt übertragenes Moment im Wesentlichen konstant bleibt. Dies kann beispielsweise dadurch erfolgen, dass eine gewählte Schlupfdrehzahl konstant gehalten wird.

Bei dieser "Umlagerung" des zu übertragenden Moments kann die dem Zielgang zugeordnete Kupplungsanordnung gesteuert im Sinne des Einkuppelns betätigt werden und die dem Ausgangsgang zugeordnete Kupplungsanordnung geregelt im Sinne des Auskuppelns betätigt werden. Alternativ kann die dem Ausgangsgang zugeordnete Kupplungsanordnung gesteuert im Sinne des Auskuppelns betätigt werden und die dem Zielgang zugeordnete Kupplungsanordnung geregelt im Sinne des Einkuppelns betätigt werden.

Die Umlagerung des zu übertragenen Moments von der einen zur anderen Getriebeeingangswelle aufgrund der beschriebenen Betätigung der Kupplungsanordnungen (man spricht in diesem Zusammenhang von einer so genannten "Überschneidungsschaltung") hat eine entsprechende Änderung des an der Getriebeausgangswelle auftretenden Moments zur Folge, da die Getriebeübersetzung im Ausgangsgang und die Getriebeübersetzung im Zielgang voneinander verschieden sind. In der "Überschneidungsschaltungsphase" ist anfänglich die Getriebeübersetzung des Ausgangsgangs maßgeblich und am Ende der "Überschneidungsschaltungsphase" ist die Getriebeübersetzung des Zielgangs maßgeblich. Im Verlauf der Überschneidungsschaltungsphase treten gewissermaßen ein kleiner werdender Beitrag der Getriebeübersetzung des Ausgangsgangs und ein größer werdender Beitrag der Getriebeübersetzung des Zielgangs zum insgesamt auf die Getriebeausgangswelle übertragenen Moment auf. Man kann wohl von einer sich in der Überschneidungsschaltungsphase kontinuierlich ändernden "effektiven Übersetzung" des Getriebes sprechen, jedenfalls im Zusammenhang mit der Übertragung des an den Getriebeeingangswellen insgesamt anliegenden Moments zur Getriebeausgangswelle und der sich dabei ergebenden Momententransformation entsprechend den wirksamen Getriebeübersetzungen.

Betreffend den Zug-Betriebszustand wird vorgeschlagen, dass in dem Zug-Betriebszustand im Zuge oder nach einer Einstellung des von der dem Zielgang zugeordneten Kupplungsanordnung übertragbaren Moments auf einen Wert, der etwa dem momentan oder vorausgehend von der Momentenerzeugungsanordnung bereitgestellten Moment entspricht, die Momentenerzeugungsanordnung im Sinne einer Absenkung des von dieser bereitgestellten Moments angesteuert wird, um eine Drehzahl der Momentenerzeugungsanordnung an eine Drehzahl der dem Zielgang zugeordneten Getriebeeingangswelle zumindest anzunähern.

Betreffend den Schub-Betriebszustand wird vorgeschlagen, dass in dem Schub-Betriebszustand im Zuge oder nach einer Einstellung des von der dem Zielgang zugeordneten Kupplungsanordnung übertragbaren Moments auf einen Wert, der etwa dem momentan oder vorausgehend von der Momentenerzeugungsanordnung bereitgestellten Moment entspricht, die Momentenerzeugungsanordnung derart angesteuert oder/und die dem Zielgang zugeordnete Kupplungsanordnung derart betätigt wird, dass das von dieser Kupplungsanordnung übertragbare Moment betragsmäßig größer ist als ein von der Momentenerzeugungsanordnung gleichzeitig bereitgestelltes Moment, um eine Drehzahl der Momentenerzeugungsanordnung an eine Drehzahl der dem Zielgang zugeordneten Getriebeeingangswelle zumindest anzunähem.

Zur Erfüllung besonders hoher Komfortansprüche kann vorgesehen sein, dass ein Momentenbeitrag aufgrund einer im Zuge der Annäherung der Drehzahlen auftretenden Beschleunigung oder Abbremsung einer Drehmassenanordnung kompensiert wird, gegebenenfalls durch Einstellung eines entsprechenden Kompensationsmomentenbeitrags der Momentenerzeugungsanordnung.

Generell wird es zweckmäßig,sein, dass im Zuge oder nach der Annäherung der Drehzahl der Momentenerzeugungsanordnung an die Drehzahl der dem Zielgang zugeordneten Getriebeeingangswelle die dem Zielgang zugeordnete Kupplungsanordnung im Wesentlichen vollständig eingekuppelt wird. Spätestens mit Abschluss dieses Einkuppelvorgangs ist die "Umlagerung" des zu übertragenden Moments von der einen Kupplungsanordnung zur anderen Kupplungsanordnung beendet.

Um für einen darauffolgenden Schaltvorgang definierte und im Hinblick auf die Zielsetzung vorteilhafte Bedingungen zu schaffen, kann im Zuge oder nach der Annäherung der Drehzahl der Momentenerzeugungsanordnung an die Drehzahl der dem Zielgang zugeordneten Getriebeeingangswelle die dem Ausgangsgang zugeordnete Kupplungsanordnung zumindest so weit eingekuppelt werden, dass eine Drehzahl der dem Ausgangsgang zugeordneten Getriebeeingangswelle an die Drehzahl der dem Zielgang zugeordneten Getriebeeingangswelle zumindest angenähert wird. Hierbei kann, etwa wenn hohe Komfortansprüche zu erfüllen sind, ein Momentenbeitrag aufgrund einer im Zuge der Annäherung der Drehzahlen auftretenden Beschleunigung oder Abbremsung einer Drehmassenanordnung kompensiert werden durch Einstellen eines entsprechenden Kompensationsmomentenbeitrags der Momentenerzeugungsanordnung.

In der Regel wird es zweckmäßig sein, dass im Zuge oder nach der Annäherung der Drehzahl der Momentenerzeugungsanordnung an die Drehzahl der dem Zielgang zugeordneten Getriebeeingangswelle die Momentenerzeugungsanordnung derart angesteuert wird, dass diese ein Moment bereitstellt, dass dem von der Momentenerzeugungsanordnung vor dem Schaltablauf bereitgestellten zumindest näherungsweise entspricht. Hierdurch werden definierte und im Hinblick auf die Zielsetzung vorteilhafte Anfangsbedingungen für einen folgenden Schaltvorgang geschaffen.

Das von der Momentenerzeugungsanordnung bereitgestellte Moment kann in wenigstens einer Schaltablaufphase einen von der Antriebseinheit bereitgestellten Momentbeitrag und einen von dem Hilfsaggregat bereitgestellten Momentenbeitrag umfassen. Beide Beiträge können positiv sein (etwa in einem Zug-Betriebszustand) oder beide Beiträge können negativ sein (beispielsweise in einem Schub-Betriebszustand) oder es kann sein, dass ein Beitrag positiv und der andere negativ ist. Ein negativer Momentenbeitrag wird in der Regel zutreffend als Schleppmoment bezeichnet werden können.

Als Hilfsaggregat kann vorteilhaft ein Kurbelwellenstartergenerator verwendet werden. Auch eine Bremsenanordnung (beispielsweise gebildet von den Fahrzeugbremsen oder einer gesonderten Hilfsbremse an einer geeigneten Stelle des Antriebsstrangs) kommt als Hilfsaggregat in Betracht.

Bezug nehmend auf das Kriterium a) gemäß Erfindungsvorschlag kann vorgesehen sein, dass die Übergangsphase im Wesentlichen von einer Überschneidungsschaltungsphase gebildet ist, in der die Kupplungsanordnungen gegenläufig betätigt werden, um ein zwischen der Antriebseinheit und dem Getriebe zu übertragendes Moment von der dem Ausgangsgang zugeordneten Getriebeeingangswelle zu der dem Zielgang zugeordneten Getriebeeingangswelle zu verlagern. Die Länge der Übergangsphase und die darin erfolgende Änderung der Fahrzeuglängsbeschleunigung bzw. Fahrzeugverzögerung, also des Beschleunigungs- bzw. Verzögerungsgradienten in der Übergangsphase, ist ein wesentlicher Faktor für den Fahrkomfort der Fahrzeuginsassen, da sich die Beschleunigungs- bzw. Verzögerungsänderungen als Änderungen der auf die Fahrzeuginsassen wirkenden Trägheitskräfte äußern. Eine allmähliche Änderung der auf einen Fahrzeuginsassen, gegebenenfalls den Fahrer, wirkenden Trägheitskraft kann von diesem durch entsprechende Muskelarbeit leicht kompensiert werden und ist deshalb nicht komfortmindemd. Derartige Trägheitskräfte bzw. Änderungen der wirkenden Trägheitskräfte werden von den Fahrzeuginsassen beim Beschleunigen bzw. Verzögern bzw. einer Änderung der Beschleunigung bzw. Verzögerung auch in einem gewissen Maße erwartet.

Ein in der Regel hinreichender Fahrkomfort kann beispielsweise dadurch erreicht werden, dass die Übergangsphase etwa 700 ms dauert. Gegebenenfalls wird man die Dauer der Übergangsphase von den betroffenen Getriebegängen (Ausgangsgang und Zielgang) abhängig machen, so dass sich entsprechend der Getriebespreizung unterschiedliche Längen für die Übergangsphase je nach Ausgangsgang ergeben. Beispielsweise kann man die Längen der Übergangsphasen derart wählen, dass ein Verzögerungs- bzw. Beschleunigungs-Wunschgradient erreicht wird.

Wird die Übergangsphase im Wesentlichen von der Überschneidungsschaltungsphase gebildet, so bedeutet eine dem Komfortanspruch entsprechende zeitliche Ausdehnung dieser Phase eine vergleichsweise große Reibarbeit für die Kupplungsanordnungen der Kupplungseinrichtung. Im Falle von nasslaufenden Lamellen-Doppelkupplungen ist dies in der Regel völlig unproblematisch, da diese zumeist eine entsprechend große Reibarbeit ohne weiteres aushalten können, ohne dass die Standzeit bzw. Lebensdauer, nennenswert beeinträchtigt wird.

Im Falle von trockenlaufenden Kupplungsanordnungen, etwa der Reibscheibenbauart, würde eine derartige, vergleichsweise lange Dauer der Übergangsphase (= Überschneidungsschaltungsphase) hingegen eine recht große, wenn nicht sogar zu starke Belastung für die Kupplungsanordnungen bedeuten, wodurch eine entsprechend kurze Standzeit bzw. Lebensdauer resultieren würde. Für trockenlaufende Kupplungsanordnungen sollte im Hinblick auf die Standzeit bzw. Lebensdauer die Überschneidungsschaltungsphase deshalb so kurz wie möglich sein.

Der Zusammenhang zwischen Belastung bzw. Lebensdauer einerseits und der Länge der Überschneidungsschaltungsphase wird aus folgenden Überlegungen besonders deutlich: Die an einer Doppelkupplung bei der Überschneidungsschaltung auftretende Reibleistung, die im Prinzip bauartunabhängig ist, kann als Produkt des übertragenen Moments und der Schlupfdrehzahl angegeben werden (Reibleistung = Moment x Schlupfdrehzahl). Die die Lebensdauer im Falle der trockenlaufenden Doppelkupplung maßgeblich bestimmende Reibarbeit ist demgemäss im Wesentlichen proportional zur zeitlichen Länge der Überschneidungsschaltungsphase. Es gilt: Reibarbeit = Reibleistung x $\Delta t$.

Im Falle von trockenlaufenden Kupplungsanordnungen ergibt sich also der Zielkonflikt, dass im Hinblick auf die Belastung bzw. Lebensdauer die Überschneidungsschaltungsphase möglichst kurz sein sollte, dass dies aber dem Ziel eines möglichst weichen Übergangs beim Schalten, also dem Komfortanspruch in Konflikt steht. Für einen möglichst weichen Übergang müsste nämlich die Überschneidungsschaltungsphase möglichst lang sein, um so ein "Rucken" bei der Verlagerung des Moments von der einen Getriebeeingangswelle zur anderen Getriebeeingangswelle zu vermeiden.

Um den Zielkonflikt aufzulösen oder/und thermische Probleme zu vermeiden bzw. leichter beherrschbar zu machen, wird insbesondere für trockenlaufende Kupplungsanordnungen, gewünschtenfalls aber auch für nasslaufende Kupplungsanordnungen (beispielsweise Lamellen-Kupplungsanordnungen) vorgeschlagen, dass die Übergangsphase im Wesentlichen gebildet ist von einer Überschneidungsschaltungsphase, in der die Kupplungsanordnungen gegenläufig betätigt werden, um ein zwischen der Antriebseinheit und dem Getriebe zu übertragendes Moment von der dem Ausgangsgang zugeordneten Getriebeeingangswelle zu der dem Zielgang zugeordneten Getriebeeingangswelle zu verlagern, sowie von einer der Überschneidungsschaltungsphase vorausgehenden Gradientenphase oder/und einer der Überschneidungsschaltungsphase nachfolgenden Gradientenphase, in der eine monotone Änderung des auf das Fahrzeug wirkenden Moments, gegebenenfalls des an der Getriebeausgangswelle auftretenden Moments, bewirkt wird durch entsprechende Ansteuerung der Momentenerzeugungsanordnung oder/und durch entsprechende Betätigung der dem Ausgangsgang bzw. dem Zielgang zugeordneten Kupplungsanordnung.

Auf Grundlage der Erkenntnis, dass die aus dem Schalten wegen der Änderung der Getriebeübersetzung resultierende Änderung des Antriebsmoments bzw. Schleppmoments am Getriebeausgang bekannt ist und damit ausgehend vom momentanen Moment vor dem Schaltablauf das am Ende des Schaltablaufs auftretende Moment bekannt bzw. bestimmbar ist (gleiches gilt im Prinzip für die wirksame Fahrzeug-Längsbeschleunigung bzw. Fahrzeug-Längsverzögung vor und nach dem Schaltvorgang), wird nach dem Weiterbildungsvorschlag insbesondere vorgeschlagen, die entsprechende Änderung der Fahrzeug-Längsbeschleunigung bzw. Fahrzeug-Längsverzögerung (bzw. die entsprechende Änderung des Moments am Getriebeausgang) nicht alleine durch die während der Überschneidungsschaltungsphase, für ein Lastschaltgetriebe sich kontinuierlich ändernde "effektive" Übersetzung des Getriebes zu realisieren, sondern durch andere (zusätzliche) Maßnahmen (einschließlich dem Eingriff in das Management der Antriebseinheit (Motormanagement) oder/und einer entsprechenden Ansteuerung eines ein Hilfsmoment liefernden Hilfsaggregats oder/und einer entsprechenden Betätigung der Kupplungsanordnungen) das wirksame Antriebsmoment bzw. Schlepp- oder Bremsmoment so zu ändern, dass die sich in der Überschneidungsschaltungsphase inhärent ergebende Änderung der Längsbeschleunigung bzw. Längsverzögerung des Fahrzeugs gewissermaßen eingebettet ist in eine vorangehende oder/und nachfolgende Änderung der Längsbeschleunigung bzw. Längsverzögerung vermittels der zusätzlichen Maßnahmen, also etwa des Eingriffs in das Motormanagement oder/und einer entsprechenden Ansteuerung der Kupplungsanordnungen. Es resultiert ein gegenüber der Überschneidungsschaltungsphase zeitlich um eine vorausgehende oder/und eine nachfolgende Gradientenphase verlängerte Übergangsphase, die von den Fahrzeuginsassen wie eine entsprechend lange Überschneidungsschaltungsphase empfunden wird. Es wird also gewissermaßen eine die vorausgehende oder/und nachfolgende Gradientenphase einschließende "Überschneidungsschaltung" simuliert. Geht man, um ein Beispiel zu nennen, von einer Übergangsphase der Länge 700 ms aus, so könnte beispielsweise die Überschneidungsschaltungsphase eine Länge von beispielsweise 100 bis 150 ms haben. Im Beispielsfalle entfielen also etwa 550 bis 600 ms auf wenigstens eine Gradientenphase, beispielsweise eine der Überschneidungsschaltungsphase vorausgehende Gradientenphase der Länge 400 bis 500 ms und eine der Überschneidungsschaltungsphase nachfolgende Gradientenphase der Länge 100 bis 150 ms. Für die Reduzierung der insgesamt anfallenden Reibarbeit sollten vor allem jene zeitlichen Abschnitte der Übergangsphase möglichst lang sein, in denen kein oder nur ein minimaler Kupplungsschlupf auftritt. Beispielsweise kann man die der Überschneidungsschaltungsphase vorausgehende Gradientenphase so ausführen, dass nur wenig oder sogar kein Kupplungsschlupf auftritt. Es empfiehlt sich dann, die der Überschneidungsschaltungsphase vorausgehende Gradientenphase zeitlich so weit wie möglich auszudehnen.

Es wird darauf hingewiesen, dass der weiterbildende Erfindungsvorschlag auch dann von Interesse ist, wenn
- etwa im Falle einer nasslaufenden Doppelkupplung der Lamellen-Bauart die Belastung der Kupplungsanordnungen durch Schlupf durch entsprechende Kühlung an sich beherrschbar ist und die Lebensdauer der Doppelkupplung durch lange Überschneidungsschaltungsphasen nicht übermäßig beeinträchtigt werden würde. Durch Verringerung der Reibarbeit ist nämlich der Wärmeeintrag geringer, so dass durch Anwendung des Erfindungsvorschlags der Kühlölkreislauf nur für die Abfuhr kleinerer Wärmemengen ausgelegt sein müsste, wodurch sich Kosten- und Energieeinsparungen ergeben.

In der Überschneidungsschaltungsphase können die Kupplungsanordnungen derart angesteuert werden, dass eine streng monotone, vorzugsweise eine stetige, höchstvorzugsweise eine zumindest näherungsweise lineare Änderung des an der Getriebeausgangswelle auftretenden Moments erreicht wird. Ferner wird vorgeschlagen, dass in der der Überschneidungsschaltungsphase vorausgehenden Gradientenphase oder/und in der der Überschneidungsschaltungsphase nachfolgenden Gradientenphase die Momentenerzeugungsanordnung derart angesteuert oder/und die dem Ausgangsgang bzw. dem Zielgang zugeordnete Kupplungsanordnung derart betätigt wird, dass eine streng monotone, vorzugsweise stetige, höchstvorzugsweise eine zumindest näherungsweise lineare Änderung des auf das Fahrzeug wirkenden, gegebenenfalls an der Getriebeausgangswelle auftretenden Moments erreicht wird. Für einen besonders hohen Fahrkomfort wird vorgeschlagen, dass die Ansteuerung bzw. Betätigung derart ist, dass über die ganze Übergangsphase eine streng monotone, vorzugsweise eine stetige, höchstvorzugsweise eine zumindest näherungsweise lineare Änderung des auf das Fahrzeug wirkenden, gegebenenfalls an der Getriebeausgangswelle auftretenden Moments erreicht wird.

Wie schon angedeutet, kann man vorteilhaft vorsehen, dass die monotone, vorzugsweise stetige und gegebenenfalls streng monotone oder lineare Änderung des auf das Fahrzeug wirkenden, gegebenenfalls an der Getriebeausgangswelle auftretenden Moments in der der Überschneidungsschaltungsphase vorausgehenden Gradientenphase oder/und in der der Überschneidungsschaltungsphase, nachfolgenden Gradientenphase eingestellt wird auf Grundlage einer sich aus der Änderung der Getriebeübersetzung beim Schalten ergebenen Änderung eines an der Getriebeausgangswelle auftretenden Moments. In diesem Zusammenhang wird insbesondere daran gedacht, dass die monotone, vorzugsweise stetige und gegebenenfalls streng monotone oder lineare Änderung des auf das Fahrzeug wirkenden, gegebenenfalls an der Getriebeausgangswelle auftretenden Moments in der betreffenden Gradientenphase eingestellt wird unter Zugrundelegung eines Momenten-Sollgradienten oder Beschleunigungs-Sollgradienten oder/und einer vorgegebenen Zeitdauer für die Überschneidungsschaltungsphase oder/und einer vorgegebenen Zeitdauer für die betreffende Gradientenphase oder/und einer vorgegebenen Zeitdauer für die Übergangsphase oder/und einer dem Ausgangsgang zugeordneten Getriebeübersetzung oder/und einer dem Zielgangsgang zugeordneten Getriebeübersetzung oder/und eines momentanen Antriebsmoments oder Schleppmoments der Antriebseinheit oder/und eines gewünschten Antriebsmoments oder Schleppmoments der Antriebseinheit.

Die vorstehenden, sich auf die Reduzierung der Reibarbeit bzw. thermischen Belastung an den Kupplungsanordnungen ohne wesentliche Komforteinbußen beziehenden Vorschläge sind im Prinzip bei allen oben schon angesprochenen Schaltungsarten (Hoch-Zug, Hoch-Schub, Zurück-Zug, Zurück-Schub) anwendbar. Im Folgenden werden für diese Schaltungsarten speziellere Weiterbildungsvorschläge gemacht, die nur als Beispiele oder bevorzugte Ausgestaltungen anzusehen sind und keinesfalls beschränkend auszulegen sind.

Betreffend die Schaltungsart Hoch-Zug wird beispielsweise vorgeschlagen, dass beim Hochschalten von einem niedrigeren Gang (Ausgangsgang) zu einem höheren Gang (Zielgang) im Zug-Betriebszustand ein von der Antriebseinheit bereitgestelltes Antriebsmoment oder/und das von der dem Ausgangsgang zugeordneten Kupplungsanordnung übertragene oder übertragbare Moment in der der Überschneidungsschaltungsphase vorausgehenden Gradientenphase monoton, vorzugsweise streng monoton, höchstvorzugsweise linear, von einem Ausgangswert auf einen Zwischenwert abgesenkt wird. Hierbei kann es vorteilhaft sein, wenn in der Überschneidungsschaltungsphase das von der Antriebseinheit bereitgestellte Antriebsmoment von dem Zwischenwert monoton, vorzugsweise streng monoton, höchstvorzugsweise linear, angehoben wird. Weiterbildend wird vorgeschlagen, dass das von der Antriebseinheit bereitgestellte Antriebsmoment in der Überschneidungsschaltungsphase auf einen weiteren Zwischenwert oberhalb des Ausgangswerts angehoben wird und vorzugsweise im Verlauf der der Überschneidungsschaltungsphase nachfolgenden Gradientenphase von dem weiteren Zwischenwert auf einen gewünschtenfalls dem Ausgangswert zumindest näherungsweise entsprechenden Endwert gebracht wird. Dabei kann vorteilhaft vorgesehen sein, dass das von der Antriebseinheit bereitgestellte Antriebsmoment in der der Überschneidungsschaltungsphase nachfolgenden Gradientenphase von dem weiteren Zwischenwert zuerst auf einen Wert unter dem Ausgangswert gebracht wird und dann auf den Endwert angehoben wird oder/und dass ein von der dem Zielgang zugeordneten Kupplungsanordnung übertragenes oder übertragbares Moment in der der Überschneidungsschaltungsphase nachfolgenden Gradientenphase von dem/einem Zwischenwert am Ende der Überschneidungsschaltungsphase zuerst monoton, vorzugsweise streng monoton, höchstvorzugsweise linear, abgesenkt wird, und dann gegebenenfalls wieder angehoben wird, insbesondere nachdem das von der Antriebseinheit bereitgestellte Moment den Endwert erreicht hat.

Betreffend die Herunter-Zug-Schaltungsart wird beispielsweise vorgeschlagen, dass beim Herunterschalten von einem höheren Gang (Ausgangsgang) zu einem niedrigeren Gang (Zielgang) im Zug-Betriebszustand ein von der Antriebseinheit bereitgestelltes Antriebsmoment oder/und das von der dem Ausgangsgang zugeordneten Kupplungsanordnung übertragene oder übertragbare Moment in der der Überschneidungsschaltungsphase vorausgehenden Gradientenphase monoton, vorzugsweise streng monoton, höchstvorzugsweise linear, von einem Ausgangswert auf einen Zwischenwert angehoben wird. Hierbei kann vorteilhaft vorgesehen sein, dass in der Überschneidungsschaltungsphase das von der Antriebseinheit bereitgestellte Antriebsmoment von dem Zwischenwert monoton, vorzugsweise streng monoton, höchstvorzugsweise linear, abgesenkt wird.

Weiterbildend wird vorgeschlagen, dass das von der Antriebseinheit bereitgestellte Antriebsmoment in der Überschneidungsschaltungsphase auf einen weiteren Zwischenwert unterhalb des Ausgangswerts abgesenkt wird und vorzugsweise im Verlauf der der Überschneidungsschaltungsphase nachfolgenden Gradientenphase von dem weiteren Zwischenwert auf einen gewünschtenfalls dem Ausgangswert zumindest näherungsweise entsprechenden Endwert gebracht wird. In diesem Zusammenhang kann man vorteilhaft vorsehen, dass ein von der dem Zielgang zugeordneten Kupplungsanordnung übertragenes oder übertragbares Moment in der der Überschneidungsschaltungsphase nachfolgenden Gradientenphase von dem/einem Zwischenwert am Ende der Überschneidungsschaltungsphase monoton, vorzugsweise streng monoton, höchstvorzugsweise linear auf einen weiteren, gegebenenfalls dem Endwert entsprechenden Zwischenwert angehoben wird, und dann gegebenenfalls weiter angehoben wird, insbesondere nachdem das von der Antriebseinheit bereitgestellte Moment den Endwert erreicht hat.

Betreffend die Herunter-Schub-Schaltungsart wird beispielsweise vorgeschlagen, dass beim Herunterschalten von einem höheren Gang (Ausgangsgang) zu einem niedrigeren Gang (Zielgang) im Schub-Betriebszustand ein von der Antriebseinheit aufgebrachtes Schleppmoment in der Überschneidungsschaltungsphase von einem Ausgangswert monoton, vorzugsweise streng monoton, höchstvorzugsweise linear, auf einen Zwischenwert reduziert wird. Dabei kann man vorteilhaft vorsehen, dass das von der Antriebseinheit aufgebrachte Schleppmoment im Verlauf der der Überschneidungsschaltungsphase nachfolgenden Gradientenphase von dem Zwischenwert zuerst weiter reduziert und dann auf einen gewünschtenfalls dem Ausgangswert zumindest näherungsweise entsprechenden Endwert gebracht wird. Weiterbildend wird vorgeschlagen, dass ein von der dem Zielgang zugeordneten Kupplungsanordnung übertragenes oder übertragbares Moment in der der Überschneidungsschaltungsphase nachfolgenden Gradientenphase von einem Zwischenwert am Ende der Überschneidungsschaltungsphase monoton, vorzugsweise streng monoton, höchstvorzugsweise linear auf einen weiteren, gegebenenfalls betragsmäßig dem Endwert entsprechenden Zwischenwert angehoben wird, und dann gegebenenfalls weiter angehoben wird, insbesondere nachdem das von der Antriebseinheit aufgebrachte Schleppmoment den Endwert erreicht hat.

Betreffend die Hoch-Schub-Schaltungsart wird beispielsweise vorgeschlagen, dass beim Hochschalten von einem niedrigeren Gang (Ausgangsgang) zu einem höheren Gang (Zielgang) im Schub-Betriebszustand ein von der Antriebseinheit aufgebrachtes Schleppmoment in der der Überschneidungsschaltungsphase vorausgehenden Gradientenphase monoton, vorzugsweise streng monoton, höchstvorzugsweise linear, von einem Ausgangswert auf einen Zwischenwert reduziert wird oder/und dass das von der dem Ausgangsgang zugeordneten Kupplungsanordnung übertragene oder übertragbare Moment in der der Überschneidungsschaltungsphase vorausgehenden Gradientenphase monoton, vorzugsweise streng monoton, höchstvorzugsweise linear, von einem Ausgangswert auf einen Zwischenwert abgesenkt wird. Hierbei kann man vorteilhaft das von der dem Ausgangsgang zugeordneten Kupplungsanordnung übertragbare Moment in der Gradientenphase betragsmäßig unter das von der Antriebseinheit aufgebrachte Schleppmoment absenken.

Vorteilhaft kann die Übergangsphase zumindest teilweise von einer Bremsphase gebildet sein, in der eine monotone Änderung des auf das Fahrzeug wirkenden Moments bewirkt wird durch entsprechende Betätigung einer/der Bremsenanordnung des Fahrzeugs, ggf. der auf die Laufräder des Fahrzeugs wirkenden Fahrzeugbremsen, vorzugsweise zumindest in einer Teilphase der Bremsphase in Abstimmung auf eine Betätigung wenigstens einer der Kupplungsanordnungen. Bezug nehmend auf den Weiterbildungsvorschlag betreffend die "Verlängerung" der Überschneidungsschaltungsphase um wenigstens eine Gradientenphase kann beispielsweise die der Überschneidungsschaltungsphase vorausgehende Gradientenphase oder/und die der Überschneidungsschaltungsphase nachfolgende Gradientenphase zumindest teilweise von einer Bremsphase gebildet sein.

Allgemein wird vor allem daran gedacht, dass ein in einem Schub-Betriebszustand auftretendes Bremsmoment der Antriebseinheit in wenigstens einer Phase des Schaltablaufs durch ein von einer/der Bremsenanordnung des Fahrzeugs, vorzugsweise durch ein von den auf die Laufräder des Fahrzeugs wirkenden Fahrzeugbremsen, aufgebrachtes Ersatz-Bremsmoment zumindest teilweise substituiert wird. Durch die Substitution des Bremsmoments durch das Ersatz-Bremsmoment können unerwünschte positive Beschleunigungsvorgänge oder ein unerwünschtes vorübergehendes Nachlassen einer Fahrzeugverzögerung vorteilhaft vermieden werden, beispielsweise im Zusammenhang mit einer aktiven Synchronisierung betreffend den Zielgang unter Mitwirkung der Antriebseinheit (ggf. Brennkraftmaschine).

In diesem Zusammenhang wird weiterhin vorgeschlagen, dass eine Substitution derart vorgesehen ist, dass aufeinander abgestimmt i) die zuvor das Bremsmoment der Antriebseinheit in das Getriebe einleitende, dem Ausgangsgang zugeordnete Kupplungsanordnung im Sinne eines Ausrückens und ii) die Bremsenanordnung im Sinne einer Erzeugung des Ersatz-Bremsmoments betätigt wird. Hierbei kann vorteilhaft vorgesehen sein, dass zumindest anfänglich dass Ersatz-Bremsmoment dem zuvor von der der dem Ausgangsgang zugeordneten Kupplungsanordnung übertragenen Bremsmoment im Wesentlichen entspricht, wobei diese Kupplungsanordnung in Folge der Betätigung im Sinne des Ausrückens vorzugsweise kein wesentliches Moment mehr überträgt, oder dass zumindest anfänglich ein Summen-Bremsmoment aus dem Ersatz-Bremsmoment und einem von der dem Ausgangsgang zugeordneten Kupplungsanordnung noch übertragenen Rest-Moment im Wesentlichen dem zuvor von der der dem Ausgangsgang zugeordneten Kupplungsanordnung übertragenen Bremsmoment entspricht.

Weiterbildend wird vorgeschlagen, dass das Ersatz-Bremsmoment kontinuierlich reduziert wird, abgestimmt auf eine Betätigung der dem Zielgang zugeordneten Kupplungsanordnung im Sinne eines Einrückens oder/und auf eine Änderung eines von der Antriebseinheit bereitgestellten momentanen Moments im Sinne einer Reduzierung eines positiven momentanen Antriebsmoments der Antriebseinheit bzw. im Sinne einer Vergrößerung eines momentanen Bremsmoments der Antriebseinheit. Im Hinblick auf die eingangs erläuterten Zielsetzungen kann die Reduzierung des Ersatz-Bremsmoments derart erfolgen, dass sich das insgesamt auf das Fahrzeug wirkende Bremsmoment aufgrund des von der Antriebseinheit bereitgestellten momentanen Moments und der momentanen Bremswirkung der Bremsenanordnung monoton, vorzugsweise streng monoton ändert. In diesem Zusammenhang ist es bevorzugt, dass das Ersatz-Bremsmoment entsprechend einer kontinuierlichen Änderung des über die Kupplungseinrichtung in das Getriebe eingeleiteten Moments aufgrund des von der Antriebseinheit bereitgestellten Moments reduziert wird und vorzugsweise dann im Wesentlichen verschwindet, wenn die dem Zielgang zugeordnete Kupplungsanordnung im Wesentlichen vollständig das oder ein vorgegebenes Bremsmoment der Antriebseinheit überträgt.

In diesem Zusammenhang ist zu bedenken, dass der Fahrer während der Fahrt durch Betätigung des Bremspedals das Fahrzeug verzögern könnte. Daraus könnte aufgrund fallender Motordrehzahl oder Fahrgeschwindigkeit eine Schub-Rückschaltung erforderlich werden. Diese Schub-Rückschaltung kann entsprechend den vorangehenden Ausführungen bremsunterstützt erfolgen. Hierbei kann das Bremsmoment gegenüber dem zuvor schon durch Betätigung des Bremspedals eingestellten Bremsmoment vor oder/und während einer Überschneidungsschaltungsphase (sofern vorgesehen) bzw. einer aktiven Synchronisierung weiter erhöht werden. Der Schaltablauf startet betreffend das Bremsmoment dann sozusagen schon mit einem vom Fahrer vorgegebenen Bremsmoment, so dass nach der "Schaltung" das Bremsmoment unter Umständen nicht auf Null, sondern auf das vom Fahrer vorgegebene Bremsmoment oder jenes Bremsmoment reduziert werden sollte, das vor der "Schaltung" vorlag.

Im Hinblick auf die schon angesprochene Entlastung der Synchroneinrichtung oder Synchroneinrichtungen des Getriebes speziell bei einem Herunterschalten in einem Schub-Betriebszustand wird als besonders bevorzugt vorgeschlagen, dass im Schub-Betriebszustand in Vorbereitung eines Herunterschaltens von einem höheren Gang (Ausgangsgang) zu einem niedrigeren Gang (Zielgang) in einer Vorbereitungsphase des Schaltablaufs die dem Ausgangsgang zugeordnete Kupplungsanordnung im Wesentlichen vollständig ausgerückt, die Antriebseinheit zur Bereitstellung eines positiven Antriebsmoments angesteuert und die dem Zielgang zugeordnete Kupplungsanordnung in einen ein Beschleunigungsmoment übertragenden, einer teilweisen Einrückung der Kupplungsanordnung entsprechenden Teileinrückzustand gebracht wird, derart, dass die dem Zielgang zugeordnete Getriebeeingangswelle unter Vermittlung dieser Kupplungsanordnung auf Grundlage des positiven Antriebsmoments gemeinsam mit der Antriebseinheit selbst in Richtung einer dem Zielgang zugeordneten Synchrondrehzahl hochbeschleunigt wird. Betreffend die Einlegung des Zielgangs wird in diesem Zusammenhang speziell vorgeschlagen, dass der Zielgang dann eingelegt wird, wenn die Drehzahl der dem Zielgang zugeordneten Getriebeeingangswelle die Synchrondrehzahl im Wesentlichen erreicht oder sich entsprechend einem vorgegebenen Schwellen-Differenzdrehzahlintervall der Synchrondrehzahl angenähert hat. Es resultiert eine entsprechende Entlastung der Synchronisiereinrichtung bzw. Synchronisiereinrichtungen des Getriebes, ohne dass eine Zugkraftunterbrechung bzw. Schubkraftunterbrechung in Kauf genommen werden muss.

In der Regel wird es sinnvoll sein, spätestens nach dem Einlegen des Zielgangs die Antriebseinheit im Sinne einer Reduzierung des positiven Antriebsmoments und der Bereitstellung eines Bremsmoments anzusteuern. Vorzugsweise wird das von der Antriebseinheit bereitgestellte Moment kontinuierlich geändert, bis das bereitgestellte Bremsmoment einen vorgegebenen Wert, ggf. den zu Beginn des Schaltablaufs herrschenden Wert, erreicht hat.

Zwar ist der erfindungsgemäße Erhalt der Zugkraft bzw. Schubkraft aus Komfortgründen stets wünschenswert. In gewissen Situationen kann man aber eine Schubkraftunterbrechung oder Zugkraftunterbrechung auch im Hinblick auf die der resultierenden Komforteinbußen akzeptieren, um die Reibarbeit an den Kupplungsanordnungen bei einer Überschneidungsschaltung oder/und an der Synchronisiereinrichtung bzw. den Synchronisiereinrichtungen des Getriebes zu begrenzen bzw. zu minimieren. Es ist deshalb vorgesehen, dass zwischen ersten und zweiten Zug-Betriebszuständen unterschieden wird, wobei für erste Zug-Betriebszustände beim Schalten zwischen dem ersten Gang und dem zweiten Gang im Sinne eines Hochschalten oder/und im Sinne eines Herunterschaltens die Kupplungsanordnungen derart betätigt und die Momenterzeugungsanordnung derart angesteuert werden, dass wenigstens eines der Kriterien a) bis d) in Bezug auf den Schaltablauf erfüllt ist, und wobei für zweite Zug-Betriebszustände unter Verzicht auf die Erfüllung wenigstens eines der Kriterien a) bis d) in Bezug auf den Schaltablauf der Schaltablauf derart durchgeführt wird, dass eine Zugkraftunterbrechung auftritt. Ferner wird vorgesehen, dass zwischen ersten und zweiten Schub-Betriebszuständen unterschieden wird, wobei für erste Schub-Betriebszustände beim Schalten zwischen dem ersten Gang und dem zweiten Gang im Sinne eines Hochschalten oder/und im Sinne eines Herunterschaltens die Kupplungsanordnungen derart betätigt und die Momenterzeugungsanordnung derart angesteuert werden, dass wenigstens eines der Kriterien a) bis d) in Bezug auf den Schaltablauf erfüllt ist, und wobei für zweite Schub-Betriebszustände unter Verzicht auf die Erfüllung wenigstens eines der Kriterien a) bis d) in Bezug auf den Schaltablauf der Schaltablauf derart durchgeführt wird, dass eine Schubkraftunterbrechung auftritt.

Die Erfindung betrifft ferner einen Antriebsstrang, gegebenenfalls in einem Kraftfahrzeug, umfassend: eine Momentenerzeugungsanordnung, die wenigstens eine Antriebseinheit, gegebenenfalls in Form einer Brennkraftmaschine, sowie gewünschtenfalls ein Hilfsaggregat zur Erzeugung eines Hilfsmoments umfasst; ein eine Synchronisiereinrichtung aufweisendes Getriebe (insbesondere Lastschaltgetriebe) mit wenigstens zwei Getriebeeingangswellen und wenigstens einer Getriebeausgangswelle, wobei eine erste Getriebeeingangswelle wenigstens einem ersten Gang und eine zweite Getriebeeingangswelle wenigstens einem zweiten Gang zugeordnet ist; eine zwischen der Antriebseinheit und dem Getriebe angeordnete Mehrfach-Kupplungseinrichtung, gegebenenfalls Doppel-Kupplungseinrichtung, zur Momentenübertragung zwischen der Antriebseinheit und dem Getriebe, die eine der ersten Getriebeeingangswelle zugeordnete erste Kupplungsanordnung und eine der zweiten Getriebeeingangswelle zugeordnete zweite Kupplungsanordnung aufweist, wobei die beiden Kupplungsanordnungen unabhängig voneinander betätigbar sind. Nach der Erfindung kann eine Steuereinheit dem Antriebsstrang zugeordnet sein, wobei die Steuereinheit Mittel zur Ansteuerung der Momentenerzeugungsanordnung und zur Betätigung der Kupplungseinrichtung nach dem erfindungsgemäßen Verfahren aufweist.

Wie schon erwähnt, kann es sich bei dem Hilfsaggregat um einen Kurbelwellenstartergenerator handeln. Man kann auch eine Bremsenanordnung, ggf. die auf die Laufräder des Fahrzeugs wirkenden Fahrzeugbremsen, als Hilfsaggregat vorsehen bzw. verwenden. Die Kupplungsanordnungen können vorteilhaft als nasslaufende Lamellenkupplungsanordnungen ausgeführt sein. Es wird beispielsweise an eine Mehrfach-Kupplungseinrichtung, speziell Doppel-Kupplungseinrichtung, gedacht, wie sie in verschiedenen Patentanmeldungen der Anmelderin offenbar ist.

Bei den Kupplungsanordnungen kann es sich aber auch um trockenlaufende Kupplungsanordnungen (z. B. der Reibscheibenbauart) handeln. Es wird beispielsweise auf die in der DE 35 26 630 A1 offenbarte Doppelkupplungskonstruktion verwiesen.

Die Erfindung wird im Folgenden anhand von in den Figuren veranschaulichten Ausführungsbeispielen näher erläutert.

Fig. 1 zeigt schematisch einen Antriebsstrang, der nach einem erfindungsgemäßen Verfahren betreibbar ist und eine Steuereinheit aufweist, die nach einem erfindungsgemäßen Verfahren arbeitet.

Fig. 2 ist ein Diagramm, das ein Beispiel für einen erfindungsgemäßen Schaltablauf beim Hoch-Schalten unter Zug-Betriebsbedingungen veranschaulicht.

Fig. 3 ist ein Diagramm, das ein Beispiel für einen erfindungsgemäßen Schaltablauf beim Herunter-Schalten unter Zug-Betriebsbedingungen veranschaulicht.

Fig. 4 ist ein Diagramm, das ein Beispiel für einen erfindungsgemäßen Schaltablauf beim Hoch-Schalten unter Schub-Betriebsbedingungen veranschaulicht.

Fig. 5 ist ein Diagramm, das ein Beispiel für einen erfindungsgemäßen Schaltablauf beim Herunter-Schalten unter Schub-Betriebsbedingungen veranschaulicht.

Fig. 6 zeigt schematisch eine Abwandlung des Antriebsstrangs gemäß Fig. 1, nach der statt einer nasslaufenden Lamellen-Doppelkupplung eine trockenlaufende Doppelkupplung der Reibscheibenbauart vorgesehen ist.

Fig. 7 ist ein Diagramm, das ein weiteres Beispiel für einen erfindungsgemäßen Schaltablauf beim Hoch-Schalten unter Zug-Betriebsbedingungen veranschaulicht.

Fig. 8 ist ein Diagramm, das ein weiteres Beispiel für einen erfindungsgemäßen Schaltablauf beim Herunter-Schalten unter Schub-Betriebsbedingungen veranschaulicht.

Fig. 9 ist ein Diagramm, das ein weiteres Beispiel für einen erfindungsgemäßen Schaltablauf beim Herunter-Schalten unter Zug-Betriebsbedingungen veranschaulicht.

Fig. 10 ist ein Diagramm, das ein weiteres Beispiel für einen erfindungsgemäßen Schaltablauf beim Herunter-Schalten unter Zug-Betriebsbedingungen veranschaulicht.

Fig. 11 bis 14     sind Diagramme, die jeweils ein weiteres Beispiel für einen erfindungsgemäßen Schaltablauf beim Herunter-Schalten unter Schub-Betriebsbedingungen veranschaulichen, bei dem eine bremsenunterstützte aktive Synchronisierung vorgesehen ist.

Fig. 15     ist ein Diagramm, das ein weiteres Beispiel für einen erfindungsgemäßen Schaltablauf beim Herunter-Schalten unter Schub-Betriebsbedingungen veranschaulicht.

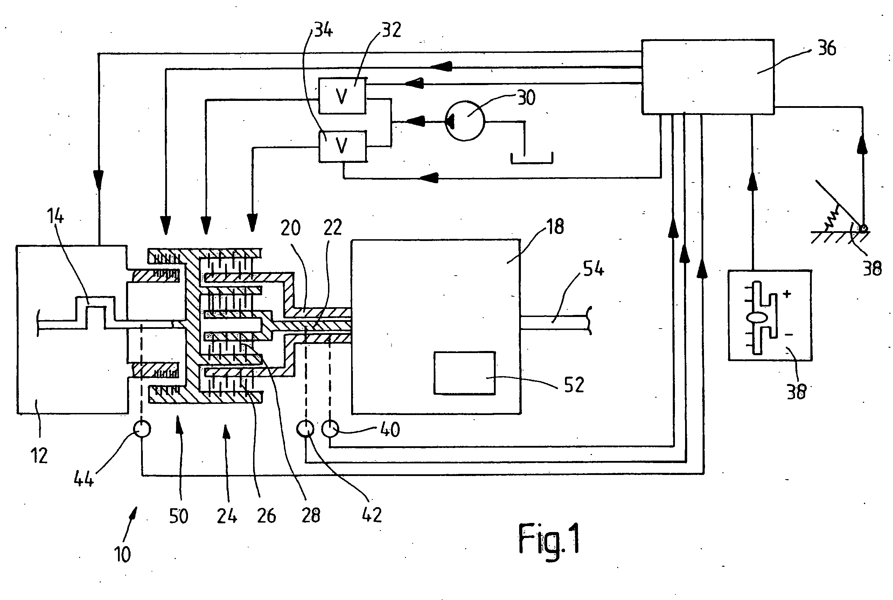

Fig. 1 zeigt ein Beispiel für einen Antriebsstrang 10 eines Kraftfahrzeugs. Der Antriebsstrang weist eine Antriebseinheit 12 in Form einer Brennkraftmaschine, speziell eines Verbrennungsmotors auf, wie durch eine symbolhaft gezeichnete Kurbelwelle 14 angedeutet ist. Ein so genanntes Lastschaltgetriebe 18 mit zwei radial geschalteten Getriebeeingangswellen 20 und 22 ist über eine Doppelkupplung 24 mit dem Motor 12 verbunden. Die Doppelkupplung 24 umfasst zwei Kupplungsanordnungen 26 und 28, von denen die eine der Getriebeeingangswelle 20 und die andere der Getriebeeingangswelle 22 zugeordnet ist. Beim Ausführungsbeispiel handelt es sich um nasslaufende Lamellen-Kupplungsanordnungen, die vermittels eines jeweiligen, in die Doppelkupplung integrierten hydraulischen Nehmerzylinders (nicht dargestellt) auf hydraulischem Wege betätigbar sind. Eine entsprechende Hydraulikpumpe 30 ist schematisch dargestellt. Ein der Doppelkupplung zugeordneter Kühlölkreislauf mit einer Kühlölpumpe usw. ist nicht dargestellt.

Die Betätigung der beiden Kupplungsanordnungen erfolgt unter Vermittlung von Steuerventilen 32 und 34, die von einer Steuereinheit 36 elektrisch ansteuerbar sind. Die Steuereinheit empfängt Eingangssignale von einem Gaspedal 38, einer Gang-Wähl- oder/und Beeinflussungseinheit 38, einem der Getriebeeingangswelle 20 zugeordneten Drehzahlsensor 40, einem der Getriebeeingangswelle 22 zugeordneten Drehzahlsensor 42 und einem der Motorabtriebswelle (Kurbelwelle 14) zugeordneten Drehzahlsensor 44. Die Steuereinheit kann ferner weitere Signale und Messwerte von anderen Sensoren und Signalgebern erhalten, etwa einem Fahrzeuggeschwindigkeitssensor, einem Lenkwinkelsensor, einem Bremsbetätigungszustandssensor usw..

Durch Vergleich der Drehzahl des Drehzahlsensors 44 einerseits und der Drehzahl des Drehzahlsensors 40 bzw. 42 andererseits kann die Steuereinheit einen Schlupfzustand der Kupplungsanordnung 26 bzw. der Kupplungsanordnung 28 bestimmen. Die Steuereinheit 36 steuert ein Leistungsstellglied des Motors 22 an, um die vom Motor abgegebene Leistung bzw. das vom Motor abgegebene Moment einzustellen. Bei dem abgegebenen Moment kann es sich auch um ein negatives Moment (Schleppmoment) handeln. Gemäß einer bevorzugten Ausführung des Antriebsstrangs weist dieser beispielsweise zwischen dem Motor 12 und der Doppelkupplung 24 ein Zusatzaggregat zur Erzeugung eines positiven oder negativen Moments auf. Bei dem Zusatzaggregat kann es sich beispielsweise um einen Kurbelwellenstartergenerator handeln, der einerseits zum Starten des Motors dient und andererseits als Generator eingesetzt werden kann. In Fig. 1 ist ein Kurbelwellenstartergenerator 50 dargestellt, der eine am Motor 12 angeordnete Statoranordnung und eine an der Eingangsseite der Doppelkupplung 24 angeordnete Rotoranordnung aufweist. Der Kurbelwellenstartergenerator 50 wird durch die Steuereinheit 36 aktiviert, um je nach Bedarf ein positives oder negatives Moment bereitzustellen.

Zum Lastschaltgetriebe 18 ist noch anzumerken, dass es sich bevorzugt um ein voll synchronisiertes Getriebe mit einer entsprechenden Synchronisiereinrichtung 52 handelt. Bei der Synchronisiereinrichtung 52 braucht es sich nicht um eine zentrale Synchronisiereinrichtung für das ganze Getriebe handeln. Die Synchronisiereinrichtung kann auch von herkömmlichen Synchronisiermitteln, etwa in Form von Synchronringen, gebildet sein. Eine Abtriebswelle des Getriebes ist mit 54 bezeichnet.

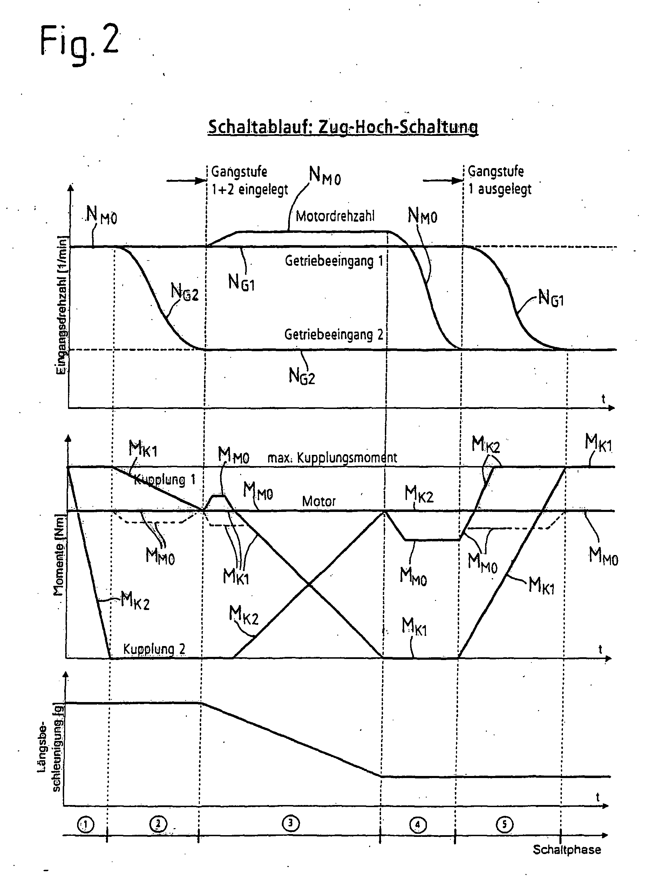

Im Folgenden werden nun unter Bezugnahme auf Fig. 2 bis 5 exemplarische Schaltabläufe erläutert, die Ausführungsvarianten eines erfindungsgemäßen Betriebsverfahrens für einen Antriebsstrang, beispielsweise den Antriebsstrang der Fig. 1, realisieren. Die Schaltabläufe können beispielsweise unter Vermittlung der Steuereinheit 36 durch entsprechende Ansteuerung der Antriebseinheit 12, der Kupplungsanordnungen 26 und 28 und - soweit zweckmäßig - des Zusatzaggregats 50 realisiert werden, gegebenenfalls in Abhängigkeit von durch die Einheit 38 vorgegebenen Parametern. Bevorzugt werden die Schaltabläufe durch die Steuereinheit 36 vollautomatisiert durchgeführt.

Bei den folgenden Erläuterungen wird auf Getriebeeingangswellen 1 und 2, Kupplungen 1 und 2 und Gänge 1 und 2 Bezug genommen. Die Getriebeeingangswelle 1 kann der Welle 20 und die Getriebeeingangswelle 2 kann der Welle 22 entsprechen, oder umgekehrt. Dementsprechend kann die Kupplung 1 der Kupplungsanordnung 26 und die Kupplung 2 der Kupplungsanordnung 28 entsprechen, oder umgekehrt. Gang 1 ist ein der Getriebeeingangswelle 1 zugeordneter Gang (der Ausgangsgang) und Gang 2 ist ein der Getriebeeingangswelle 2 zugeordneter Gang (der Zielgang).

## Schaltablauf ZUG-HOCH

Annahme: Es wird in einem Zug-Betriebszustand von einem kleineren, der Getriebeeingangswelle 1 zugeordneten Gang 1 zu einem größeren, der Getriebeeingangswelle 2 zugeordneten Gang 2 geschaltet.

Bei der Schaltungsart Zug-Hoch liefert der Motor ein positives Moment an das Getriebe. Dieses Moment wird über die Getriebeeingangswelle 1 übertragen. Die Kupplung 1 ist mit der Getriebeeingangswelle 1 verbunden, Kupplung 2 mit der Getriebeeingangswelle 2. Im Ausgangszustand sind beide Kupplungen vollständig geschlossen und befinden sich somit in Überanpressung. Beide Getriebeeingangswellen drehen dadurch mit Motordrehzahl. Auf der Getriebeeingangswelle 1 ist ein Gang eingelegt und somit ist der Kraftschluß zwischen der Getriebeeingangswelle 1 und der Getriebeausgangswelle hergestellt.

Ein bevorzugter, fünf Schaltphasen umfassender Schaltablauf wird im Folgenden anhand von Figur 2 erläutert. Die in Figur 2 mit den arabischen Ziffern 1 bis 5 bezeichneten Schaltphasen entsprechen den folgenden Phasen I bis V. Mögliche Varianten und Ausgestaltungen der Schaltphasen sind in Figur 2 gestrichelt dargestellt und werden unten gesondert als "Alternativen" zu der betreffenden Schaltphase erläutert. Zur Unterscheidung der verschiedenen Kurven und Kurvenabschnitten sind diese mit den Kennungen $N_{Mo}$ für Motordrehzahl, $N_{G1}$ für Drehzahl Getriebeeingangswelle 1, $N_{G2}$ für Drehzahl Getriebeeingangswelle 2, $M_{Mo}$ für Motormoment, $M_{K1}$ für Moment der Kupplung 1 und $M_{K2}$ für Moment der Kupplung 2 versehen. Ein sich aus der positiven Längsbeschleunigung ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase 1 bis zum Ende der Schaltphase 5 könnte beispielsweise etwa 0,5 bis 1 Sekunden dauern.

**Phase I.:**

Um den Schaltvorgang einzuleiten, wird die Kupplung 2 vollständig geöffnet.

**Phase II.:**

Das Kupplungsmoment der Kupplung 1, $M_{K1}$, wird auf das aktuelle Moment des Motors, $M_{Mo0}$, abgesenkt. Außerdem wird auf der Getriebeeingangswelle 2 ein Gang eingelegt, welcher höher ist als der auf der Getriebeeingangswelle 1 eingelegte Gang. Dies führt unter Vermittlung der Synchronisiereinrichtung des Getriebes zu einem Absinken der Drehzahl der Getriebeeingangswelle 2 auf die dem eingelegten Gang entsprechende Synchrondrehzahl.

**Phase III:**

Das Motormoment wird durch entsprechenden Eingriff in das Motormanagement kurzzeitig über das Kupplungsmoment der Kupplung 1, $M_{K1} = M_{Mo0}$, angehoben, was zu einem Ansteigen der Motordrehzahl über die Drehzahl der Getriebeeingangswelle 1 und dementsprechend zum Schlupfen der Kupplung 1 führt. Um ein weiteres Ansteigen der Motordrehzahl zu verhindern, wird das Motormoment wieder auf das ursprüngliche Motormoment $M_{Mo0}$ abgesenkt. Der Schlupfzustand bleibt aufgrund eines sich ergebenden Momentengleichgewichts erhalten.

Damit befindet sich die Kupplung 1 also im Schlupf und eine gewählte Schlupfdrehzahl (beispielsweise eine Differenzdrehzahl von etwa 10 - 20 U/min) wird über die Kupplung 1 eingeregelt. Nach Erreichen der gewählten Schlupfdrehzahl der Kupplung 1 wird die Kupplung 2 gesteuert geschlossen. Die Kupplung 1 wird dabei derart geregelt, dass die gewählte Schlupfdrehzahl erhalten bleibt. Dadurch bewirkt das gesteuerte Schließen der Kupplung 2 ein geregeltes Öffnen der Kupplung 1, da die vorher gewählte Schlupfdrehzahl nur konstant gehalten werden kann, wenn die Summe der Momente $M_{K1} + M_{K2}$, die von den beiden Kupplungen auf die Getriebeeingangswellen und damit - unter Vermittlung des Getriebes - auf die Getriebeausgangswelle übertragen wird, konstant gleich dem gewähltem Motormoment ist.

$$M_{K1} + M_{K2} = M_{Mo0}$$

Die Kupplung 2 übernimmt immer mehr Motormoment, bis die Kupplung 1 vollständig geöffnet ist. Die Kupplung 2 kann jetzt das komplette Motormoment, $M_{Mo}0$, übertragen und wird nicht weiter geschlossen.

**Phase IV.:**

Da sich der Motor und damit auch die motorseitige Hälfte der Kupplung 2 mit Drehzahl Getriebeeingangswelle 1 + Schlupfdrehzahl dreht, die getriebeseitige Hälfte der Kupplung 2 aber mit Drehzahl der Getriebeeingangswelle 2, wird durch ein aktives Absenken des Motormoments auf $M_{Mo1}$ unter das Kupplungsmoment $M_{K2} = M_{Mo0}$ (d.h. durch

einen entsprechenden Eingriff in das Motormanagement) die Motordrehzahl auf die Drehzahl der Getriebeeingangswelle 2 heruntergezogen. Das Abbremsen des Motors bringt ein zusätzliches Drehmoment, $M_{RotMot} = 2\pi \, J_{Mot} \frac{dn}{dt}$, welches aus der im Schwungrad des Motors gespeicherten Energie $E_{RotMot} = \frac{1}{2} J_{Mot} \omega^2$ stammt, auf die Getriebeeingangswelle 2 und damit auf die Getriebeausgangswelle.

Das insgesamt auf die Getriebeausgangswelle gebrachte Drehmoment entspricht - ohne Berücksichtigung eines durch die im Zielgang wirksame Getriebeübersetzung bedingten Übertragungsfaktors - dem übertragbaren Drehmoment der Kupplung 2 und setzt sich wie folgt zusammen:

$$M_{Mo1} + M_{RotMot} = M_{Mo0}$$

Die Absenkung des Motormoments entspricht dem Momentbeitrag aufgrund der Abbremsung des Motors. Damit wird während des Abbremsen des Motors kein zusätzliches Moment auf die Getriebeausgangswelle gebracht. Wie angedeutet, ist die Getriebeübersetzung bei der vorstehenden Momentengleichung noch nicht berücksichtigt. Strenggenommen ist $M_{Mo0}$ das auf die Getriebeeingangswelle 2 übertragene Moment, das nur im Fall einer Übersetzung 1:1 gleich dem auf die Getriebeausgangswelle übertragenen Moment ist. Für eine andere Übersetzung ist noch ein die Momententransformation aufgrund der wirksamen Getriebeübersetzung angebender Faktor zu berücksichtigen.

Die vollständig geöffnete Kupplung 1 erlaubt es nun, den auf der Getriebeausgangswelle 1 eingelegten Gang quasi momentenfrei herauszunehmen.

**Phase V.:**

Die Kupplung 2 wird vollständig geschlossen. Die Kupplung 1 wird geschlossen, was zum Absinken der Drehzahl $N_{G1}$ der Getriebeeingangswelle 1 auf das Niveau der Getriebeeingangswelle 2 führt. Das Motormoment wird auf den ursprünglichen Wert $M_{Mo0}$ zurückgeführt.

**Phase I (alternativ):**

Es kann sein, dass die Kupplung 2 vor Beginn des Schaltablaufs nur so weit geschlossen ist, dass das übertragene Schleppmoment ausreicht, die Getriebeeingangswelle 2 auf Motordrehzahl zu halten. An der Motorsteuerung während des gesamten Schaltablaufs ändert sich dadurch nichts.

**Phase II (alternativ):**

Das Einrücken eines höheren als auf der Getriebeeingangswelle 1 eingelegten Ganges führt nun zwangsläufig zu einem Abbremsen der Getriebeeingangswelle 2. Der damit verbundene Energiegewinn $E_{RotG2}' = J_{G2} \int_{n1}^{n2} \omega' dt$ würde bei statischem Motormoment zusätzliches Moment $M_{G2} \propto \frac{d^2}{dt} E_{RotG2}$ auf die Getriebeausgangswelle bringen, was zu einem unerwünschten Zwischenbeschleunigungsvorgang des Fahrzeugs führen würde. Um diesen Zwischenbeschleunigungsvorgang zu unterbinden, wird während des Synchronisiervorgangs das Motormoment $M_{Mo1}$ soweit abgesenkt, dass die Summe aus Motormoment $M_{Mo1}$ und Getriebeeingangswellenmoment $M_{G2}$ der Getriebeeingangswelle 2 konstant zum Motormoment $M_{Mo0}$ vor dem Synchronisiervorgang bleibt.

$$M_{gesamt} = M_{Mo0} = M_{Mo1} + M_{G2}$$

In der Regel wird es sich bei dem Momentbeitrag aufgrund des Abbremsens der Getriebeeingangswelle 2 nur um einen kleinen Effekt handeln, so dass bei dem hier beschriebenen Ausführungsbeispiel der Ausgleich dieses Momentbeitrags durch entsprechende Reduktion des Motormoments keine zwingende Maßnahme ist.

**Phase III (alternativ):**

Ist das aktuelle Motormoment $M_{Mo0}$ bereits gleich dem maximal zur Verfügung stehenden Motormoment $M_{max}$, so kann das Motormoment durch normalen Eingriff in das Motormanagement nicht über $M_{Mo0}$ angehoben werden.

Um die zur Kupplungsregelung nötige Schlupfdrehzahl zu erreichen, kann das zusätzlich aufzuwendende Moment, welches $M_{max}$ übersteigt, von einer *OVERBOOST*-Funktion des Motors geliefert werden oder/und von einem Hilfsaggregat, beispielsweise einem Kurbelwellenstartergenerator, geliefert werden.

Oder/und:

Die Summe der Momente $M_{K1}$ + $M_{K2}$, die von den beiden Kupplungen auf die Getriebeausgangswelle übertragen wird, muß solange unter dem gewähltem Motormoment $M_{Mo0}$ liegen, bis die gewünschte Schlupfdrehzahl erreicht ist:

$$M_{K1} + M_{K2} < M_{Mo0}.$$

Oder/und:

Es kann auch vorgesehen sein, dass die Differenzdrehzahl Motordrehzahl - Getriebeeingangswellendrehzahl der Getriebeeingangswelle 2 als Schlupfdrehzahl definiert ist und von Kupplung 2 eingeregelt wird. Die Kupplung 1 wird dann gesteuert geöffnet. Die Kupplung 2 wird damit geregelt geschlossen.

**Phase V (alternativ):**

Die mit dem Abbremsen der Getriebeeingangswelle 1 verbundene freiwerdende Beschleunigungsenergie $E_{RotG1} = \frac{1}{2} J_{G1} (\omega_{G1} - \omega_{G2})^2$ kann, wie in Phase II, durch das Absenken des Motormoments um $M_{G1} = 2\pi J_{G1} \frac{dn1}{dt}$ gegenüber dem ursprünglichen Niveau $M_{Mo0}$ kompensiert werden. Anschließend wird das Motormoment wieder auf das ursprüngliche Niveau $M_{Mo0}$ angehoben.

In der Regel wird es sich bei dem Momentbeitrag aufgrund des Abbremsens der Getriebeeingangswelle 1 nur um einen kleinen Effekt handeln, so dass bei dem hier beschriebenen Ausführungsbeispiel der Ausgleich dieses Momentbeitrags durch entsprechende Einstellung des Motormoments keine zwingende Maßnahme ist.

Oder/und:

Es kann vorgesehen sein, dass die Kupplung 1 nur so weit geschlossen wird, dass ihr übertragbares Moment ausreicht, die Getriebeeingangswelle 2 auf die Drehzahl des Motors zu bringen.

**Ergebnis:**

Der gesamte Beschleunigungsverlauf während des Kuppelvorgangs verläuft monoton ohne Zwischenverzögerungs- oder Zwischenbeschleunigungsvorgänge, da zu jeder Zeit im Wesentlichen das Moment $M_{Mo0}$ vermittels der Getriebeeingangswellen ins Getriebe eingeleitet wird und entsprechend den Getriebeübersetzungen im Ausgangs- und Zielgang zur Getriebeausgangswelle übertragen wird. An der Getriebeausgangswelle wirkt dementsprechend zu jeder Zeit ein im Wesentlichen konstant bleibendes (Phasen I, II, IV, V) bzw. monoton (vorzugsweise streng monoton, z.B. linear) fallendes (Phase III) Antriebsmoment.

**Schaltablauf ZUG-RÜCK**

Annahme: Es wird in einem Zug-Betriebszustand von einem größeren, der Getriebeeingangswelle 1 zugeordneten Gang 1 zu einem kleineren, der Getriebeeingangswelle 2 zugeordneten Gang 2 geschaltet.

Bei der Schaltungsart Zug-Rück liefert der Motor ein positives Moment an das Getriebe. Dieses Moment wird über die Getriebeeingangswelle 1 übertragen. Die Kupplung 1 ist mit der Getriebeeingangswelle 1 verbunden, Kupplung 2 mit der Getriebeeingangswelle 2. Im Ausgangszustand sind beide Kupplungen vollständig geschlossen und befinden sich somit in Überanpressung . Beide Getriebeeingangswellen drehen dadurch mit Motordrehzahl.

Auf der Getriebeeingangswelle 1 ist ein Gang eingelegt und somit ist der Kraftschluß zwischen der Getriebeeingangswelle 1 und der Getriebeausgangswelle hergestellt.

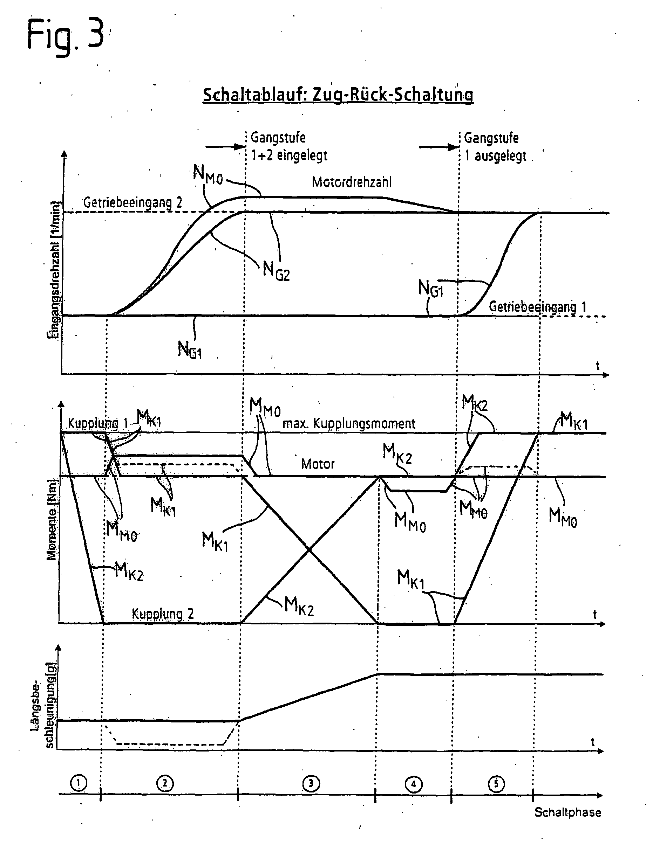

Ein bevorzugter, fünf Schaltphasen umfassender Schaltablauf wird im Folgenden anhand von Figur 3 erläutert. Die in Figur 3 mit den arabischen Ziffern 1 bis 5 bezeichneten Schaltphasen entsprechen den folgenden Phasen I bis V. Mögliche Varianten und Ausgestaltungen der Schaltphasen sind in Figur 3 gestrichelt dargestellt und werden unten gesondert als "Alternativen" zu der betreffenden Schaltphase erläutert. Zur Unterscheidung der verschiedenen Kurven und Kurvenabschnitten sind diese mit den Kennungen $N_{Mo}$ für Motordrehzahl, $N_{G1}$ für Drehzahl Getriebeeingangswelle 1, $N_{G2}$ für Drehzahl Getriebeeingangswelle 2, $M_{Mo}$ für Motormoment, $M_{K1}$ für Moment der Kupplung 1 und $M_{K2}$ für Moment der Kupplung 2 versehen. Ein sich aus der positiven Längsbeschleunigung ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase 1 bis zum Ende der Schaltphase 5 könnte beispielsweise etwa 0,5 bis 1 Sekunden dauern.

**Phase I.:**

Um den Schaltvorgang einzuleiten, wird die Kupplung 2 vollständig geöffnet.

**Phase II.:**

Das Kupplungsmoment der Kupplung 1, $M_{K1}$, wird auf das in Phase I gültige Moment des Motors, $M_{Mo0}$, abgesenkt. Außerdem wird auf der Getriebeeingangswelle 2 ein Gang eingelegt, welcher tiefer ist als der auf der Getriebeeingangswelle 1 eingelegte Gang. Dies führt unter Vermittlung der Synchronisiereinrichtung des Getriebes zu einem Anstieg der Drehzahl der Getriebeeingangswelle 2 auf die dem eingelegten Gang entsprechende Synchrondrehzahl. Das Motormoment wird dabei durch entsprechenden Eingriff in das Motormanagement soweit über das übertragbare Kupplungsmoment $M_{K1}$ der Kupplung 1 auf einen Wert $M_{Mo1}$ angehoben, dass das Differenzmoment $M_{Schlupf} = M_{Mo1} - M_{k1}$ zu einem Anstieg der Motordrehzahl über die Drehzahl der Getriebeeingangswelle 2 führt.

**Phase III.:**

Nach Erreichen der gewählten Motordrehzahl über der Drehzahl der Getriebeeingangswelle 2 wird das Motormoment wieder auf das ursprüngliche Moment $M_{Mo0}$ abgesenkt, um ein weiteres Ansteigen der Motordrehzahl zu verhindern. Die Kupplung 1 befindet sich im Schlupf und die gewählte Schlupfdrehzahl zwischen der Getriebeeingangswelle 1 und der Motordrehzahl wird vermittels der Kupplung 1 eingeregelt. Die Kupplung 2 wird gesteuert geschlossen. Dadurch wird ein geregeltes Öffnen der Kupplung 1 ausgelöst, da die vorher gewählte Schlupfdrehzahl nur konstant gehalten werden kann, wenn die Summe der Momente $M_{K1} + M_{K2}$, die von den beiden Kupplungen auf die Getriebeeingangswellen und damit - unter Vermittlung des Getriebes - auf die Getriebeausgangswelle übertragen wird, konstant gleich dem gewähltem Motormoment $M_{Mo0}$ ist.

$$M_{K1} + M_{K2} = M_{Mo0}$$

Die Kupplung 2 übernimmt immer mehr Motormoment, bis die Kupplung 1 vollständig geöffnet ist. Die Kupplung 2 kann jetzt das komplette Motormoment, $M_{Mo0}$, übertragen und wird nicht weiter geschlossen.

**Phase IV.:**

Da sich der Motor und damit auch die motorseitige Hälfte der Kupplung 2 mit Drehzahl Getriebeeingangswelle 2 + Schlupfdrehzahl (zwischen Getriebeeingangswelle 2 und Motor) dreht, die getriebeseitige Hälfte der Kupplung 2 aber mit Drehzahl der Getriebeeingangswelle 2, wird durch ein Absenken des Motormoments auf $M_{Mo2}$ unter das Kupplungsmoment $M_{K2} = M_{Mo0}$, die Motordrehzahl auf die Drehzahl der Getriebeeingangswelle 2 heruntergezogen.

Das Abbremsen des Motors bringt ein zusätzliches Drehmoment, $M_{RotMot} = 2\pi\, J_{Mot}\, \frac{dn}{dt}$, welches aus der im Schwungrad des Motors gespeicherten Energie $E_{RotMot} = \frac{1}{2} J_{Mot} \omega^2$ stammt, auf die Getriebeeingangswelle 2 und damit auf die Getriebeausgangswelle. Das insgesamt auf die Getriebeausgangswelle gebrachte Drehmoment entspricht - ohne Berücksichtigung eines durch die im Zielgang wirksame Getriebeübersetzung bedingten Übertragungsfaktors - dem übertragbaren Drehmoment der Kupplung 2 und setzt sich wie folgt zusammen:

$$M_{M01} + M_{RotMot} = M_{Mo0}$$

Damit wird während des Abbremsen des Motors kein zusätzliches Moment auf die Getriebeausgangswelle gebracht. Die Getriebeübersetzung ist bei der vorstehenden Momentengleichung noch nicht berücksichtigt, geht aber nur in Form eines Faktors ein. Strenggenommen ist $M_{Mo0}$ das auf die Getriebeeingangswelle 2 übertragene Moment, das nur im Fall einer Übersetzung 1:1 gleich dem auf die Getriebeausgangswelle übertragenen Moment ist.

Die vollständig geöffnete Kupplung 1 erlaubt es nun, den auf der Getriebeausgangswelle 1 eingelegten Gang quasi momentenfrei herauszunehmen.

**Phase V.:**

Die Kupplung 2 wird vollständig geschlossen. Die Kupplung 1 wird geschlossen, was zum Ansteigen der Drehzahl $n$1 der Getriebeeingangswelle 1 auf das Niveau der Getriebeeingangswelle 2 führt. Das Motormoment wird auf den ursprünglichen Wert $M_{Mo0}$ zurückgeführt.

**Phase I (alternativ):**

Es kann sein, dass die Kupplung 2 vor Beginn des Schaltablaufs nur so weit geschlossen ist, dass das übertragene Schleppmoment ausreicht, die Getriebeeingangswelle 2 auf Motordrehzahl zu halten. An der Motorsteuerung während des gesamten Schaltablaufs ändert sich dadurch nichts.

**Phase 11 (alternativ):**

Ist das in Phase I gültige Motormoment $M_{Mo0}$ bereits gleich dem maximal zur Verfügung stehenden Motormoment $M_{max}$, so kann das Motormoment durch normalen Eingriff in das Motormanagement nicht über $M_{Mo0}$ angehoben werden.

Um die Motordrehzahl über die Drehzahl der Getriebeeingangswelle 2 zu bringen, kann das dazu aufzuwendende Moment, welches $M_{max}$ übersteigt, von einer *OVERBOOST*-Funktion des Motors geliefert werden oder/und von einem Hilfsaggregat, beispielsweise einem Kurbelwellenstartergenerator, geliefert werden.

Oder/und:

Die zum Beschleunigen der Getriebeeingangswelle 2 benötigte Beschleunigungsenergie

$E_{RotG2} = J_{G2} \int\limits_{n1}^{n2} \omega \, dt$ würde bei statischem Motormoment das Moment, welches die Getriebeausgangswelle erfährt,

um $M_{G2} \propto \frac{d^2}{dt} E_{RotG2}$ reduzieren, was zu einem unerwünschten negativen Zwischenbeschleunigungsvorgang des Fahrzeugs führen würde. Um diesen Zwischenbeschleunigungsvorgang zu unterbinden, kann während der Synchronisierung die Kupplung 1 so verfahren werden, dass die Kupplung ein der Summe des ursprünglichen Motormoments $M_{Mo0}$ und des Getriebeeingangswellenmoments der Getriebeeingangswelle 2 $M_{G2}$ entsprechendes Moment übertragen kann:

$$M_{K1} = M_{Mo0} + M_{G2} \; .$$

In der Regel wird es sich bei dem negativen Momentbeitrag aufgrund des Beschleunigens der Getriebeeingangswelle 2 nur um einen kleinen Effekt handeln, so dass bei dem hier beschriebenen Ausführungsbeispiel der Ausgleich dieses Momentbeitrags durch entsprechende Einstellung der Kupplung 1 keine zwingende Maßnahme ist.

Oder/und:

Das übertragbare Kupplungsmoment $M_{K1}$ der Kupplung 1 wird in dieser Phase unter das Motormoment $M_{Mo0}$ abgesenkt, um die zur Kupplungsregelung nötige Schlupfdrehzahl zu erreichen. Um ein weiteres Ansteigen der Motordrehzahl zu verhindern, wird nach Erreichen der gewünschten Motordrehzahl das Kupplungsmoment $M_{K1}$ auf das Motormoment $M_{Mo0}$ angehoben.

**Phase III (alternativ):**

Es kann alternativ die Differenzdrehzahl Motordrehzahl - Getriebeeingangswellendrehzahl der Getriebeeingangswelle 2 als Schlupfdrehzahl definiert sein und von Kupplung 2 eingeregelt werden. Die Kupplung 1 wird dann gesteuert geöffnet und in Folge wird die Kupplung 2 geregelt geschlossen.

**Phase V (alternativ):**

Die für die Erhöhung der Drehzahl der Getriebeeingangswelle 1 benötigte Beschleunigungsenergie $E_{RotG1} = \frac{1}{2} J_{G1} (\omega_{G1} - \omega_{G2})^2$ kann durch das Erhöhen des Motormoments um $M_{G1} = 2\pi \, J_{G1} \frac{dn1}{dt}$ auf $M_{Mo3} = M_{Mo0} + M_{G1}$ kompensiert werden.

Anschließend wird das Motormoment wieder auf das ursprüngliche Niveau $M_{Mo0}$ abgesenkt.

In der Regel wird es sich bei dem negativen Momentbeitrag aufgrund des Beschleunigens der Getriebeeingangswelle 1 nur um einen kleinen Effekt handeln, so dass bei dem hier beschriebenen Ausführungsbeispiel der Ausgleich dieses Momentbeitrags durch entsprechende Erhöhung des Motormoments keine zwingende Maßnahme ist.

Oder/und:

Es kann vorgesehen sein, dass die Kupplung 1 nur so weit geschlossen wird, dass ihr übertragbares Moment ausreicht, die Getriebeeingangswelle 2 auf die Drehzahl des Motors zu bringen.

**Ergebnis:**

Der gesamte Beschleunigungsverlauf während des Kuppelvorgangs verläuft monoton ohne Zwischenverzögerungs- oder Zwischenbeschleunigungsvorgänge, da zu jeder Zeit das Moment $M_{Mo0}$ vermittels der Getriebeeingangswellen ins Getriebe eingeleitet und entsprechend den Getriebeübersetzungen im Ausgangs- und Zielgang zur Getriebeausgangswelle übertragen wird. An der Getriebeausgangswelle wirkt dementsprechend zu jeder Zeit ein im Wesentlichen konstant bleibendes (Phase I, II, IV, V) bzw. monoton (vorzugsweise streng monoton, z.B. linear) steigendes (Phase III) Antriebsmoment.

**Schaltablauf SCHUB-HOCH**

Annahme: Es wird in einem Schub-Betriebszustand von einem kleineren, der Getriebeeingangswelle 1 zugeordneten Gang 1 zu einem größeren, der Getriebeeingangswelle 2 zugeordneten Gang 2 geschaltet.

Bei der Schaltungsart Schub-Hoch liefert der Motor ein Schleppmoment an das Getriebe, welches im Folgenden als negatives Moment bezeichnet wird.

Dieses negative Moment wird über die Getriebeeingangswelle 1 übertragen. Die Kupplung 1 ist mit der Getriebeeingangswelle 1 verbunden, Kupplung 2 mit der Getriebeeingangswelle 2. Im Ausgangszustand sind beide Kupplungen vollständig geschlossen und befinden sich somit in Überanpressung. Beide Getriebeeingangswellen drehen dadurch mit Motordrehzahl. Auf der Getriebeeingangswelle 1 ist ein Gang eingelegt und somit ist der Kraftschluß zwischen der Getriebeeingangswelle 1 und der Getriebeausgangswelle hergestellt.

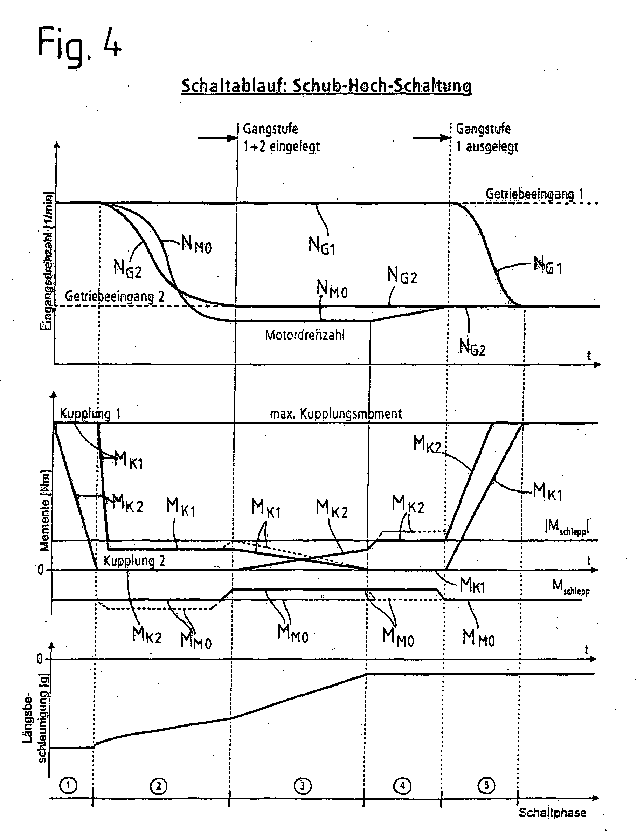

Ein bevorzugter, fünf Schaltphasen umfassender Schaltablauf wird im Folgenden anhand von Figur 4 erläutert. Die in Figur 4 mit den arabischen Ziffern 1 bis 5 bezeichneten Schaltphasen entsprechen den folgenden Phasen I bis V. Mögliche Varianten und Ausgestaltungen der Schaltphasen sind in Figur 4 gestrichelt dargestellt und werden unten gesondert als "Alternativen" zu der betreffenden Schaltphase erläutert. Zur Unterscheidung der verschiedenen Kurven und Kurvenabschnitten sind diese mit den Kennungen $N_{Mo}$ für Motordrehzahl, $N_{G1}$ für Drehzahl Getriebeeingangswelle 1, $N_{G2}$ für Drehzahl Getriebeeingangswelle 2, $M_{Mo}$ für Motormoment, $M_{K1}$ für Moment der Kupplung 1 und $M_{K2}$ für Moment der Kupplung 2 versehen. Ein sich aus der negativen Längsbeschleunigung (Verzögerung) ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase 1 bis zum Ende der Schaltphase 5 könnte beispielsweise etwa 0,5 bis 1 Sekunden dauern.

**Phase I.:**

Um den Schaltvorgang einzuleiten, wird die Kupplung 2 vollständig geöffnet.

**Phase II.:**

Das übertragbare Kupplungsmoment $M_{K1}$ wird nun unter den aktuellen Betrag des Motormoments gebracht.

$$M_{K1} < \left| M_{Schlepp} \right|$$

Dadurch fällt die Motordrehzahl unter die Drehzahl der Synchrondrehzahl der Getriebeeingangswelle 2. Das auf die Getriebeeingangswelle 1 und damit auf die Getriebeausgangswelle übertragene Schleppmoment beträgt jetzt $|M_{k1}|$. In der Fahrzeug-Längsbeschleunigung (im Schub-Betriebszustand negativ, deshalb auch als Längsverzögerung bezeichenbar) zeigt sich eine entsprechende Reduzierung der Abbremswirkung auf das Fahrzeug, wie im untersten Diagramm von Fig. 4 beispielhaft gezeigt. Auf der Getriebeeingangswelle 2 wird ein Gang eingelegt, welcher höher ist als der auf der Getriebeeingangswelle 1 eingelegte Gang. Dies führt unter Vermittlung der Synchronisiereinrichtung des Getriebes zu einem Absinken der Drehzahl der Getriebeeingangswelle 2 auf die dem eingelegten Gang entsprechende Synchrondrehzahl.

**Phase III.:**

Um ein weiteres Absinken der Motordrehzahl zu unterbinden, wird das Schleppmoment des Motors durch entsprechenden Eingriff in das Motormanagement auf $|M_{K1}|$ reduziert. Damit befindet sich die Kupplung 1 im Schlupf und eine gewählte Schlupfdrehzahl wird über die Kupplung 1 eingeregelt. Nach Erreichen der gewählten Schlupfdrehzahl der Kupplung 1 wird die Kupplung 2 gesteuert geschlossen. Dadurch wird ein weiteres geregeltes Öffnen der Kupplung 1 ausgelöst, da die vorher gewählte Schlupfdrehzahl nur konstant gehalten werden kann, wenn die Summe der Momente $M_{K1} + M_{K2}$, die von den beiden Kupplungen auf den Motor übertragen wird, konstant gleich dem in dieser Phase gültigen Betrag des Schleppmoments des Motors ist.

$$M_{K1} + M_{K2} = \left| M_{Schlepp} \right|$$

Die Kupplung 2 übernimmt immer mehr Motormoment, bis die Kupplung 1 vollständig geöffnet ist.

**Phase IV.:**

Das Motorschleppmoment bleibt auf dem Niveau aus Phase III stehen. Das Kupplungsmoment der Kupplung 2, $M_{K2}$, wird auf den Betrag des maximalen Motorschleppmoments $|M_{Schlepp}|$ erhöht, was zu einem Anstieg der Motordrehzahl auf die Drehzahl der Getriebeeingangswelle 2 führt.

Die aufzuwendende Beschleunigungsenergie $E_{RotMot} = \frac{1}{2} J_{Mot} \omega_{Schlupf}^2$ des Motors würde zu einem negativen Zwischenbeschleunigungsvorgang des Fahrzeugs führen, wenn nicht das negative Motormoment um den Betrag

$M_{RotMot} = 2\pi \, J_{Mot} \, \frac{dn}{dt}$ angehoben bleibt und das Kupplungsmoment der Kupplung 2 auf $|M_{Schlepp}|$ bleibt.

Dadurch, dass das negative Motormoment um den Betrag $M_{RotMot} = 2\pi \, J_{Mot} \, \frac{dn}{dt}$ angehoben bleibt und das Kupplungsmoment der Kupplung 2 auf $|M_{Schlepp}|$ bleibt, bleibt auch das an der Getriebeeingangswelle 2 wirkende, zur Getriebeabtriebswelle transformierte Schleppmoment konstant:

$$\left|M_{Schlepp}\right| = M_{K2} = \left|M_{Mot}\right| + \left|M_{RotMot}\right|$$

Es resultiert ein entsprechend konstant bleibendes Schleppmoment an der Getriebeausgangswelle bzw. - allgemein gesprochen - am Fahrzeugantrieb. Die vollständig geöffnete Kupplung 1 erlaubt es nun, den auf der Getriebeeingangswelle 1 eingelegten Gang quasi momentenfrei herauszunehmen.

**Phase V.:**

Das Moment des Motors wird wieder auf das maximale Schleppmoment gebracht. Die Kupplung 2 wird geschlossen. Die Kupplung 1 wird geschlossen. Dies führt zum Absinken der Drehzahl $n1$ der Getriebeeingangswelle 1 auf das Niveau der Getriebeeingangswelle 2. Damit wird zusätzliches Moment $M_{G1} \propto \frac{d^2}{dt} E_{RotG1}$ , ( $E_{RotG1} = J_{G1} \int_{n1}^{n2} \omega \, dt$ ) auf die Getriebeausgangswelle gebracht. Dieses Moment kann vermittels eines Zusatzaggregats, beispielsweise durch geeignetes Schalten eines Kurbelwellenstartergenerators als Generator, kompensiert werden.

**Phase I (alternativ):**

Es kann sein, dass vor Beginn des Schaltablaufs - Phase I - die Kupplung 2 nur so weit geschlossen ist, dass das übertragene Schleppmoment ausreicht, die Getriebeeingangswelle 2 auf Motordrehzahl zu halten. An der Motorsteuerung während des gesamten Schaltablaufs ändert sich dadurch nichts.

**Phase II (alternativ):**

Das Einrücken eines höheren als auf der Getriebeeingangswelle 1 eingelegten Ganges führt zwangsläufig zu einem Abbremsen der Getriebeeingangswelle 2. Damit ist ein Energiegewinn $E_{RotG2} = J_{G2} \int_{n1}^{n2} \omega \, dt$ verbunden, der zusätzliches Moment $M_{G2} \propto \frac{d^2}{dt} E_{RotG2}$ auf die Getriebeausgangswelle bringt. Dieses Moment kann vermittels eines Zusatzaggregats, beispielsweise durch geeignetes Schalten eines Kurbelwellenstartergenerators als Generator, kompensiert werden.

Oder/und:

Das durch das Öffnen der Kupplung 1 bedingte verringerte Schleppmoment $|M_{K1}|$, das auf die Getriebeausgangswelle übertragen wird, kann vermittels eines Zusatzaggregats, beispielsweise durch geeignetes Schalten eines Kurbelwellenstartergenerators als Generator, auf das ursprüngliche Schleppmoment erhöht werden.

Oder/und:

Es kann sein, dass die Kupplung 2 zu Beginn des Schaltablaufs geöffnet ist. Dies führt dazu, das in Phase 2 die Getriebeeingangswelle 2 beschleunigt werden muß. Die dafür benötigte Energie wird aus der Getriebeausgangswelle gezogen, was zu einer Erhöhung des Schleppmoments am Antrieb führt. Man kann vorteilhaft vorsehen, dass diese Erhöhung des Schleppmoments die Verringerung des Kupplungsmoments $M_{K1}$ unter das maximale Motorschleppmoment $|M_{Schepp}|$ kompensiert.

**Phase III (alternativ):**

Das Anheben des Motormoments kann alternativ auch vermittels eines Zusatzaggregats, beispielsweise eines Kurbelwellenstartergenerators, erfolgen.

Oder/und:

Das Motormoment wird auf dem Niveau des maximalen Schleppmoments gehalten. Das Kupplungsmoment der Kupplung 1, $M_{K1}$, wird auf den Betrag des maximalen Motorschleppmoment $|M_{Shlepp}|$ erhöht, um ein weiteres Absinken der Motordrehzahl zu verhindern. Jetzt wird über die Kupplung 1 eine Schlupfdrehzahl eingeregelt, die Kupplung 2 gesteuert geschlossen und damit die Kupplung 1 geregelt geöffnet.

Oder/und:

Alternativ kann in Phase III die Differenzdrehzahl Motordrehzahl - Getriebeeingangswellendrehzahl der Getriebeeingangswelle 2 als Schlupfdrehzahl definiert sein und von Kupplung 2 eingeregelt werden. Die Kupplung 1 wird dann gesteuert geöffnet und in Folge wird die Kupplung 2 geregelt geschlossen.

**Phase IV (alternativ):**

Das Anheben des Motormoments kann alternativ auch vermittels eines Zusatzaggregats, beispielsweise eines Kurbelwellenstartergenerators, erfolgen.

Oder/und:

Das Motorschleppmoment wird wieder auf das maximale Schleppmoment gebracht. Da sich der Motor und damit auch die motorseitige Hälfte der Kupplung 2 mit der Drehzahl Getriebeeingangswelle 2 - Schlupfdrehzahl dreht, die getriebeseitige Hälfte der Kupplung 2 aber mit der Drehzahl der Getriebeeingangswelle 2, wird durch ein weiteres gesteuertes Schließen der Kupplung 2 ihr übertragbares Moment über das Motorschleppmoment gebracht, $M_{K2} > |M_{Schlepp}|$, um die Motordrehzahl auf die Drehzahl der Getriebeeingangswelle 2 zu beschleunigen.

**Phase V (alternativ):**

Es kann vorgesehen sein, dass die Kupplung 1 nur so weit geschlossen wird, dass ihr übertragbares Moment ausreicht, die Getriebeeingangswelle 2 auf die Drehzahl des Motors zu bringen.

**Ergebnis:**

Der gesamte Verzögerungsverlauf während des Kuppelvorgangs verläuft monoton ohne Zwischenverzögerungs- oder Zwischenbeschleunigungsvorgänge, da an der Getriebeausgangswelle zu jeder Zeit im Wesentlichen ein konstant bleibendes (Phase I, IV, V) bzw. monoton (vorzugsweise streng monoton, z.B. linear) fallendes (Phase II, III) Schleppmoment wirkt.

**Schaltablauf SCHUB-RÜCK**

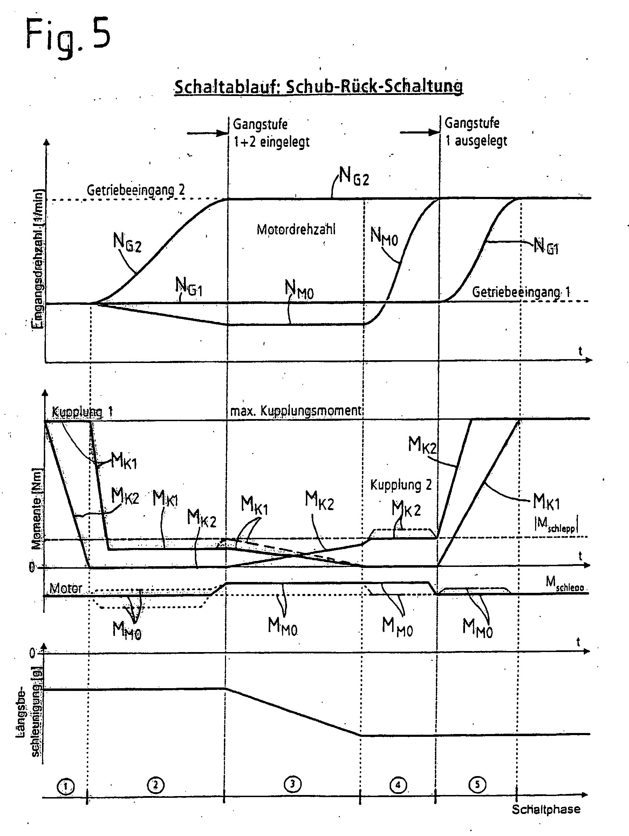

Annahme: Es wird in einem Schub-Betriebszustand von einem größeren, der Getriebeeingangswelle 1 zugeordneten Gang 1 zu einem kleineren, der Getriebeeingangswelle 2 zugeordneten Gang 2 geschaltet.
Bei der Schaltungsart Schub-Rück liefert der Motor ein Schleppmoment an das Getriebe, welches im Folgenden als negatives Moment bezeichnet wird. Dieses negative Moment wird über die Getriebeeingangswelle 1 übertragen. Die Kupplung 1 ist mit der Getriebeeingangswelle 1 verbunden, Kupplung 2 mit der Getriebeeingangswelle 2. Im Ausgangszustand sind beide Kupplungen vollständig geschlossen und befinden sich somit in Überanpressung. Beide Getriebeeingangswellen drehen dadurch mit Motordrehzahl. Auf der Getriebeeingangswelle 1 ist ein Gang eingelegt und somit ist der Kraftschluß zwischen der Getriebeeingangswelle 1 und der Getriebeausgangswelle hergestellt.
Ein bevorzugter, fünf Schaltphasen umfassender Schaltablauf wird im Folgenden anhand von Figur 5 erläutert. Die in Figur 5 mit den arabischen Ziffern 1 bis 5 bezeichneten Schaltphasen entsprechen den folgenden Phasen I bis V. Mögliche Varianten und Ausgestaltungen der Schaltphasen sind in Figur 4 gestrichelt dargestellt und werden unten gesondert als "Alternativen" zu der betreffenden Schaltphase erläutert. Zur Unterscheidung der verschiedenen Kurven und Kurvenabschnitten sind diese mit den Kennungen $N_{Mo}$ für Motordrehzahl, $N_{G1}$ für Drehzahl Getriebeeingangswelle 1, $N_{G2}$ für Drehzahl Getriebeeingangswelle 2, $M_{Mo}$ für Motormoment, $M_{K1}$ für Moment der Kupplung 1 und $M_{K2}$ für Moment der Kupplung 2 versehen. Ein sich aus der negativen Längsbeschleunigung (Verzögerung) ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase 1 bis zum Ende der Schaltphase 5 könnte beispielsweise etwa 0,5 bis 1 Sekunden dauern.

**Phase I.:**

Um den Schaltvorgang einzuleiten, wird die Kupplung 2 vollständig geöffnet.

**Phase II.:**

Das übertragbare Kupplungsmoment $M_{K1}$ wird unter den aktuellen Betrag des Motormoments gebracht.

$$M_{K1} < \left| M_{Schlepp} \right|$$

Dadurch fällt die Motordrehzahl unter die Drehzahl der Synchrondrehzahl der Getriebeeingangswelle 1. Das auf die Getriebeeingangswelle 1 und damit auf die Getriebeausgangswelle übertragene Schleppmoment beträgt jetzt $|M_{K1}|$. Eine hieraus resultierende leichte Reduzierung der Motorbremswirkung auf das Fahrzeug ist vergleichsweise klein und im untersten Diagramm von Fig. 5 nicht dargestellt bzw. ist durch eine entsprechende Maßnahme kompensiert. Auf der Getriebeeingangswelle 2 wird ein Gang eingelegt, welcher tiefer ist als der auf der Getriebeeingangswelle 1 eingelegte Gang. Dies führt unter Vermittlung der Synchronisiereinrichtung des Getriebes zu einer Beschleunigung der Drehzahl der Getriebeeingangswelle 2 auf die dem eingelegten Gang entsprechende Synchrondrehzahl. Dazu wird die Beschleu-

nigungsenergie $\quad E_{RotG2} = J_{G2} \int\limits_{n1}^{n2} \omega\, dt \quad$ benötigt, welche das Moment der Getriebeausgangswelle um

$M_{G2} \propto \frac{d^2}{dt} E_{RotG2}$ reduzieren würde.

Um für ein konstant bleibendes Moment an der Getriebeausgangswelle zu sorgen, kann vorgesehen sein, dass das zusätzliche Schleppmoment durch die Beschleunigung der Getriebeeingangswelle 2 die durch das Öffnen der Kupplung 1 bewirkte Verringerung des übertragenen Schleppmoments $M_{K1}$ unter das maximale Motorschleppmoment $|M_{Schlepp}|$ kompensiert.

**Phase III.:**

Um ein weiteres Absinken der Motordrehzahl zu unterbinden, wird das Schleppmoment des Motors durch entsprechenden Eingriff in das Motormangement auf $|M_{K1}|$ reduziert. Damit befindet sich die Kupplung 1 im Schlupf und es wird über die Kupplung 1 eine gewählte Schlupfdrehzahl eingeregelt. Nach Erreichen der gewählten Schlupfdrehzahl der Kupplung 1 wird die Kupplung 2 gesteuert geschlossen. Dadurch wird ein weiteres geregeltes Öffnen der Kupplung 1 ausgelöst, da die vorher gewählte Schlupfdrehzahl nur konstant gehalten werden kann, wenn die Summe der Momente $M_{K1} + M_{K2}$, die von den beiden Kupplungen auf den Motor übertragen wird, konstant dem Betrag des Schleppmoments des Motors ist.

$$M_{K1} + M_{K2} = \left| M_{Schlepp} \right|$$

Die Kupplung 2 übernimmt immer mehr Motormoment, bis die Kupplung 1 vollständig geöffnet ist.

**Phase IV.:**

Das Motorschleppmoment bleibt auf dem Niveau aus Phase III stehen. Da sich der Motor und damit auch die motorseitige Hälfte der Kupplung 2 mit Drehzahl Getriebeeingangswelle 1 - Schlupfdrehzahl dreht, die getriebeseitige Hälfte der Kupplung 2 aber mit Drehzahl der Getriebeeingangswelle 2, wird Kupplung 2 weiter gesteuert geschlossen, deren übertragbares Moment gleich dem Betrag des Schleppmoments des Motors ist, $M_{K2} = |M_{Schlepp}|$. Die Motordrehzahl wird hierdurch auf die Drehzahl der Getriebeeingangswelle 2 beschleunigt.

Die aufzuwendende Beschleunigungsenergie $E_{RotMot} = \frac{1}{2} J_{Mot} \omega^2_{Schlupf}$ des Motors würde zu einem negativen Zwischenbeschleunigungsvorgang des Fahrzeugs führen, wenn nicht das negative Motormoment um den Betrag

$M_{RotMot} = 2\pi \, J_{Mot} \, \frac{dn}{dt}$ angehoben bleibt und das Kupplungsmoment der Kupplung 2 auf $|M_{Schlepp}|$ bleibt.

Dadurch, dass das negative Motormoment um den Betrag $M_{RotMot} = 2\pi \, J_{Mot} \, \frac{dn}{dt}$ angehoben bleibt und das Kupplungsmoment der Kupplung 2 auf $|M_{Schlepp}|$ bleibt, bleibt auch das an der Getriebeeingangswelle 2 wirkende und zur Getriebeausgangswelle transformierte Schleppmoment konstant:

$$\left|M_{Schlepp}\right| = M_{K2} = \left|M_{Mot}\right| + \left|M_{RotMot}\right|$$

Es resultiert ein entsprechend konstant bleibendes Schleppmoment an der Getriebeausgangswelle bzw. - allgemein gesprochen - am Fahrzeugantrieb. Die vollständig geöffnete Kupplung 1 erlaubt es nun, den auf der Getriebeeingangswelle 1 eingelegten Gang quasi momentenfrei herauszunehmen.

**Phase V.:**

Das Moment des Motors wird auf das maximale Schleppmoment gebracht. Die Kupplung 2 wird geschlossen. Die Kupplung 1 wird geschlossen. Dies führt zum Absinken der Drehzahl $n1$ der Getriebeeingangswelle 1 auf das Niveau der Getriebeeingangswelle 2.,

**Phase I (alternativ):**

Es kann sein, dass vor Beginn des Schaltablaufs - Phase I - die Kupplung 2 nur so weit geschlossen ist, dass das übertragene Schleppmoment ausreicht, die Getriebeeingangswelle 2 auf Motordrehzahl zu halten. An der Motorsteuerung während des gesamten Schaltablaufs ändert sich dadurch nichts.

**Phase II (alternativ):**

Das durch das Öffnen der Kupplung 1 bedingte verringerte Schleppmoment $|M_{K1}|$, das auf die Getriebeausgangswelle übertragen wird, kann vermittels eines Zusatzaggregats, beispielsweise durch geeignetes Zuschalten eines Kurbelwellenstartergenerators als Generator, auf das ursprüngliche Schleppmoment erhöht werden.

Oder/und:

Der durch das Beschleunigen der Getriebeeingangswelle 2 verursachte negative Zwischenbeschleunigungsvorgang kann vermittels eines Zusatzaggregats, beispielsweise durch geeignetes Zuschalten eines Kurbelwellenstartergenerators, kompensiert werden.

**Phase III (alternativ):**

Das Anheben des Motormoments kann alternativ auch vermittels eines Zusatzaggregats, beispielsweise eines Kurbelwellenstartergenerators, erfolgen.

Oder/und:

Das Motormoment wird auf dem Niveau des maximalen Schleppmoments gehalten. Das Kupplungsmoment der Kupplung 1, $M_{K1}$, wird auf den Betrag des maximalen Motorschleppmoment $|M_{Schlepp}|$ erhöht, um ein weiteres Absinken der Motordrehzahl zu verhindern. Jetzt wird eine Schlupfdrehzahl eingeregelt, die Kupplung 2 gesteuert geschlossen und damit die Kupplung 1 geregelt geöffnet.

Oder/und:

Alternativ kann in Phase III die Differenzdrehzahl Motordrehzahl - Getriebeeingangswellendrehzahl der Getriebeeingangswelle 2 als Schlupfdrehzahl definiert sein und von Kupplung 2 eingeregelt werden. Die Kupplung 1 wird dann gesteuert geöffnet und die Kupplung 2 wird in Folge geregelt geschlossen.

**Phase IV (alternativ):**

Das Anheben des Motormoments kann alternativ auch vermittels eines Zusatzaggregats, beispielsweise eines Kurbelwellenstartergenerators, erfolgen.

Oder/und:

Das Motorschleppmoment wird wieder auf maximales Schleppmoment gebracht. Da sich der Motor und damit auch die motorseitige Hälfte der Kupplung 2 mit Drehzahl Getriebeeingangswelle 2 - Schlupfdrehzahl dreht, die getriebeseitige Hälfte der Kupplung 2 aber mit Drehzahl der Getriebeeingangswelle 2, wird durch ein weiteres gesteuertes Schließen der Kupplung 2 ihr übertragbares Moment über das Motorschleppmoment gebracht, $M_{K2} > |M_{Schlepp}|$, um die Motordrehzahl auf die Drehzahl der Getriebeeingangswelle 2 zu beschleunigen. Kurz vor Erreichen der Synchrondrehzahl wird das Kupplungsmoment der Kupplung 2 auf $M_{K2} = |M_{Schlepp}|$ reduziert.

**Phase V (alternativ):**

Die Kupplung 1 wird geschlossen. Dies führt zum Ansteigen der Drehzahl $n1$ der Getriebeeingangswelle 1 auf das Niveau der Getriebeeingangswelle 2. Um die Getriebeeingangswelle 1 zu beschleunigen wird die Beschleunigungsenergie $E_{RotG1} = J_{G1} \int_{n1}^{n2} \omega \, dt$ benötigt. Um einen negativen Zwischenbeschleunigungsvorgang des Fahrzeugs zu vermeiden, das negative Motormoment um den Betrag $M_{G1} \propto \frac{d^2}{dt} E_{RotG1}$ angehoben werden, so dass das Schleppmoment am Antrieb des Fahrzeugs konstant bleibt.

Oder/und:

Es kann vorgesehen sein, dass die Kupplung 1 kann nur so weit geschlossen wird, dass ihr übertragbares Moment ausreicht, die Getriebeeingangswelle 2 auf die Drehzahl des Motors zu bringen.

**Ergebnis:**

Der gesamte Verzögerungsverlauf während des Kuppelvorgangs verläuft monoton ohne Zwischenverzögerungs- oder Zwischenbeschleunigungsvorgänge, da an der Getriebeausgangswelle zu jeder Zeit im Wesentlichen ein konstant bleibendes (Phasen I, II, IV, V) bzw. monoton (vorzugsweise streng monoton, z.B. linear) ansteigendes (Phase III) Schleppmoment wirkt.

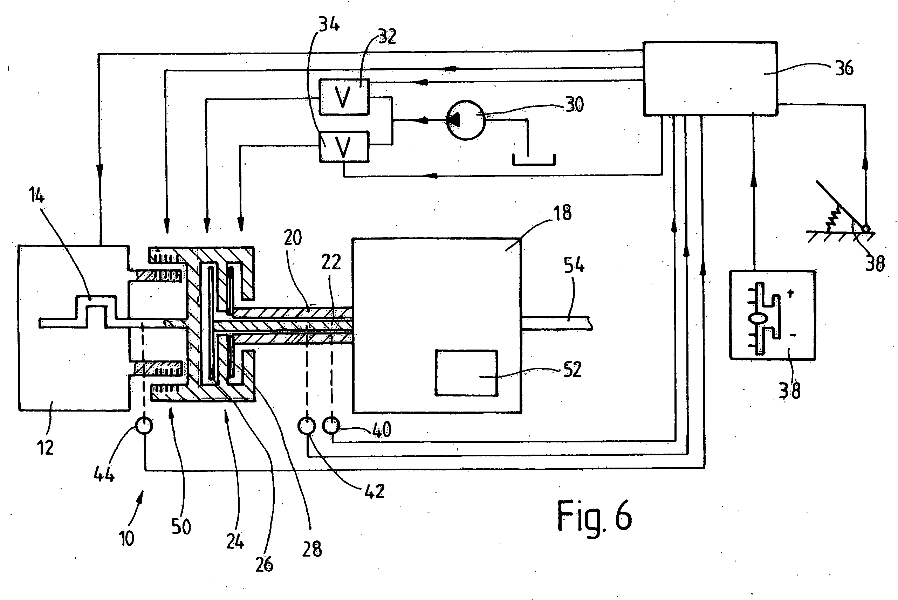

Fig. 6 zeigt ein weiteres Beispiel für einen Antriebsstrang 10 eines Kraftfahrzeugs. Es werden nur die Änderungen gegenüber dem Antriebsstrang gemäß Fig. 1 erläutert. Anstelle einer Doppelkupplung 24 mit zwei nasslaufenden Lamellen-Kupplungsanordnungen 26 und 28 ist beim Beispiel der Fig. 6 eine Doppelkupplung 24 mit zwei trockenlaufenden Kupplungsanordnungen 26 und 28 der Reibscheibenbauart vorgesehen. Die beiden Reibscheiben-Kupplungsanordnungen können beispielsweise mittels in die Doppelkupplung integrierten hydraulischen Nehmerzylindern auf hydraulischem Wege betätigbar sein, wovon in Fig. 6 ausgegangen ist. Entsprechende Realisierungsmöglichkeiten sind beispielsweise aus der DE 35 26 630 A1 entnehmbar. Es können aber auch völlig anders konstruiert trockenlaufende Doppelkupplungen eingesetzt werden, es wird beispielsweise auf die EP 0 931 951 A1 verwiesen.

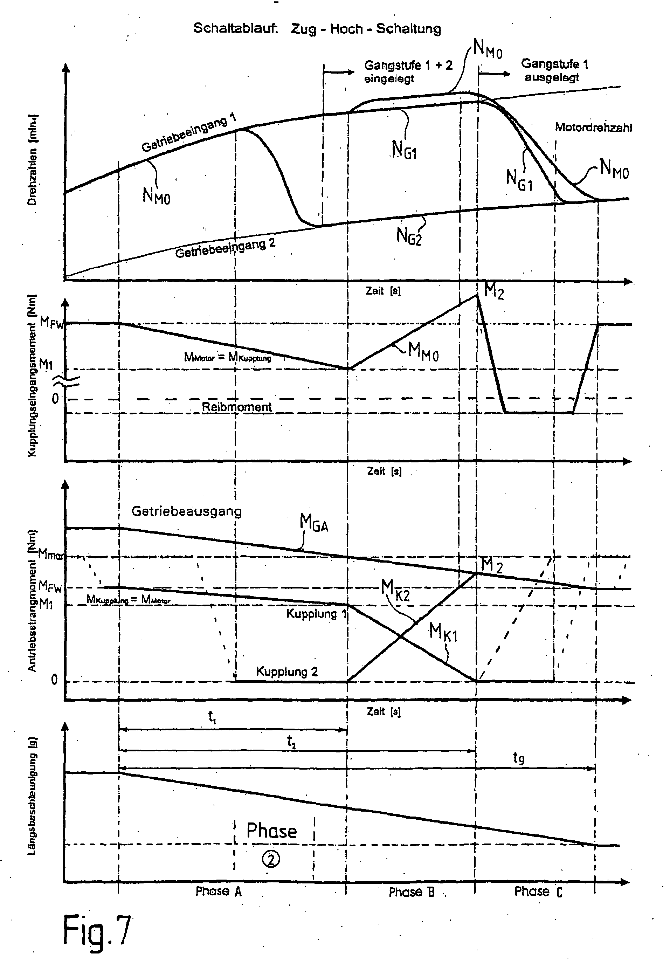

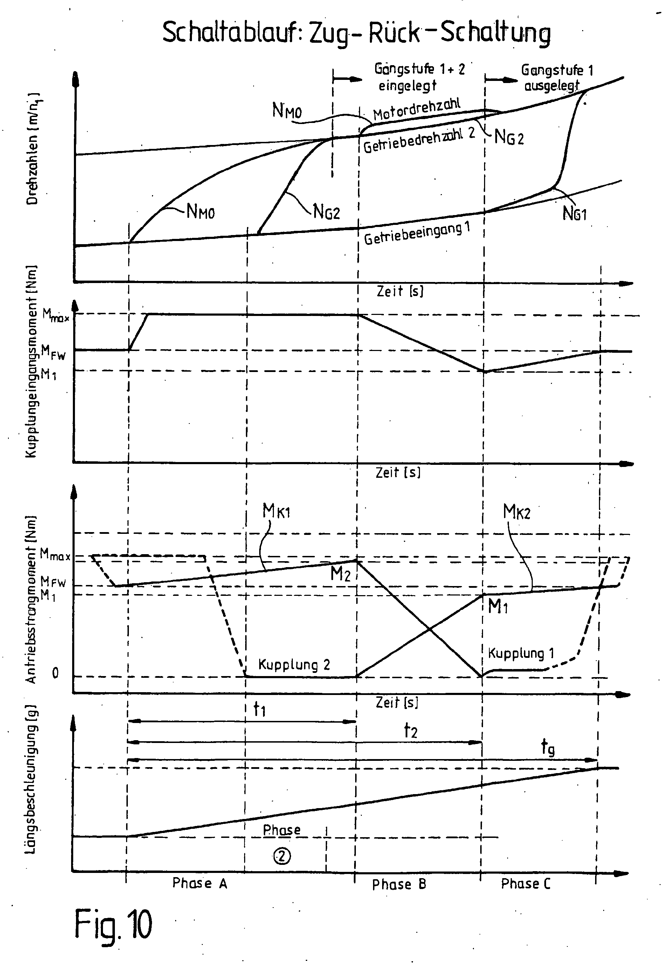

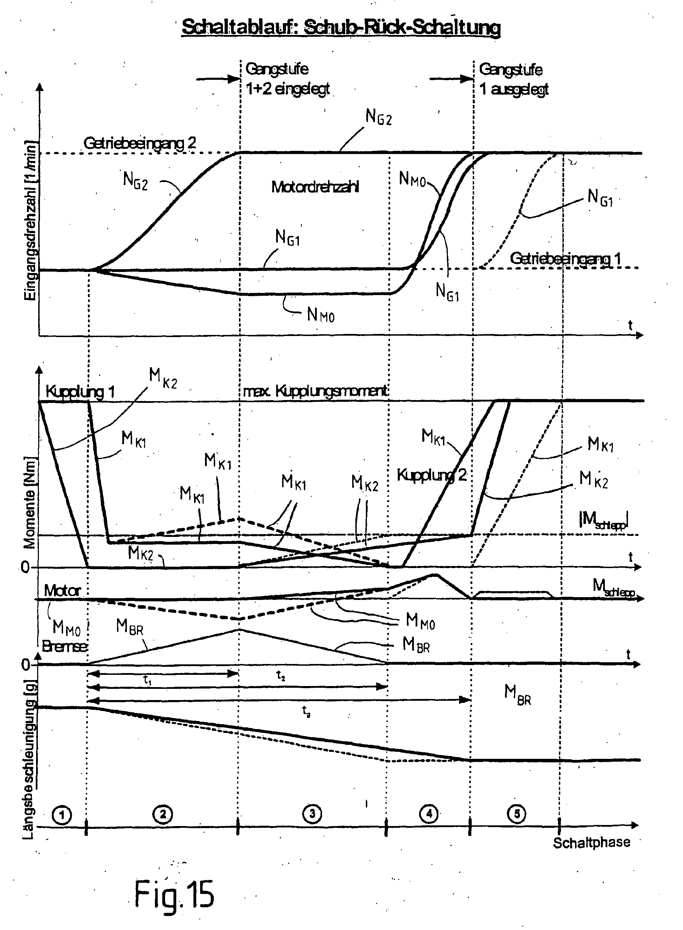

Im Folgenden werden nun unter Bezugnahme auf Fig. 7 bis 9 (vgl. auch Fig. 10 und Fig. 15) weitere exemplarische Schaltabläufe erläutert, die Ausführungsvarianten eines erfindungsgemäßen Betriebsverfahrens für einen Antriebsstrang, beispielsweise den Antriebsstrang der Fig. 1 oder der Fig. 6, realisieren. Die Schaltabläufe können beispielsweise unter Vermittlung der Steuereinheit 36 durch entsprechende Ansteuerung der Antriebseinheit 12, der Kupplungsanordnungen 26 und 28 und - soweit zweckmäßig - des Zusatzaggregats 50 realisiert werden, gegebenenfalls in Abhängigkeit von durch die Einheit 38 vorgegebenen Parametern. Bevorzugt werden die Schaltabläufe durch die Steuereinheit 36 vollautomatisiert durchgeführt.

Bei den folgenden Erläuterungen, deren Schwerpunkt auf den Unterschieden gegenüber den Schaltabläufen gemäß Fig. 2 bis 5 liegt (die Kenntnis und das Verständnis dieser Schaltabläufe wird insoweit vorausgesetzt), wird wiederum auf Getriebeeingangswellen 1 und 2, Kupplungen 1 und 2 und Gänge 1 und 2 Bezug genommen. Die Getriebeeingangswelle 1 kann der Welle 20 und die Getriebeeingangswelle 2 kann der Welle 22 entsprechen, oder umgekehrt. Dementsprechend kann die Kupplung 1 der Kupplungsanordnung 26 und die Kupplung 2 der Kupplungsanordnung 28 entsprechen, oder umgekehrt. Gang 1 ist ein der Getriebeeingangswelle 1 zugeordneter Gang (der Ausgangsgang) und Gang 2 ist ein der Getriebeeingangswelle 2 zugeordneter Gang (der Zielgang).

Fig. 7 zeigt ein Beispiel eines erfindungsgemäßen Schaltablaufs, bei dem die in der Überschneidungsschaltungsphase für die Kupplungsanordnungen auftretende Reibarbeit reduziert ist, bei dem aber gleichwohl ein "weicher" Beschleunigungsübergang gewährleistet ist. Der erfindungsgemäße Schaltablauf gemäß dem hier behandelten Ausführungsbeispiel zeichnet sich durch eine vergleichsweise lange (beispielsweise 700 ms) Übergangsphase auf, in der die Fahrzeuglängsbeschleunigung streng monoton, vorliegend linear und stetig, abfällt. Diese Übergangsphase ist beim Ausführungsbeispiel von den Teilphasen A, B und C gebildet, von denen die Teilphase B die Überschneidungsschaltungsphase ist, in der die beiden Kupplungsanordnungen gegenläufig betätigt werden, um das Antriebsmoment von der einen zur anderen Getriebeeingangswelle umzulagern. Wie bei den Ausführungsbeispielen der Fig. 2 bis 6 wird bei diesem und bei den folgenden Ausführungsbeispielen davon ausgegangen, dass der Ausgangsgang der Gang 1 ist (dem die Getriebeeingangswelle 1 und die Kupplungsanordnung 1 zugeordnet ist), und dass der Zielgang der Gang 2 ist (dem die Getriebeeingangswelle 2 und die Kupplungsanordnung 2 zugeordnet ist).

Die Überschneidungsschaltungsphase B kann beispielsweise eine Länge von etwa 100 bis 150 ms haben. Der Überschneidungsschaltungsphase B geht die als "Gradientenphase" bezeichnete Phase A voraus, die beispielsweise eine Länge von 400 bis 500 ms aufweist. Der Überschneidungsschaltungsphase B folgt die ebenfalls als "Gradientenphase" bezeichnete Phase C nach, die beispielsweise eine Länge von 100 bis 150 ms aufweist.

In die Gradientenphase A fällt eine Teilphase II (in der Fig. durch die entsprechende arabische Ziffer 2 in einem Kreis gekennzeichnet), in der der Zielgang 2 im Sinne eines Einlegens betätigt wird, so dass die Getriebeeingangswelle 2 unter der Wirkung der Synchronisiereinrichtung des Getriebes auf eine der momentanen Drehzahl der Getriebeausgangswelle entsprechende Drehzahl gebracht wird, so dass am Ende dieser Teilphase II, die insoweit der Phase II gemäß Fig. 2 entspricht, der Gang eingelegt ist.

Eine Reduzierung der an den Kupplungsanordnungen auftretenden Reibarbeit resultiert vor allem aus der Verkürzung der Überschneidungsschaltungsphase B gegenüber der den Fahrkomfort bestimmenden Übergangsphase, in der sich die Längsbeschleunigung ändert. In der Überschneidungsschaltungsphase werden die Kupplungsanordnungen nämlich stark durch Schlupf belastet.

Gemäß dem Ausführungsbeispiel wird in der Phase A durch Eingriff in das Motormanagement das vom Motor abgegebene Moment streng monoton (vorliegend linear) reduziert, und zwar bis auf den Momentwert $M_1$ am Ende der Phase A. Die Kupplungsanordnung 1 wird synchron hierzu im Sinne eines leichten Ausrückens betätigt, so dass das von der Kupplungsanordnung 1 übertragbare Moment im Wesentlichen gleich dem Motormoment ist. Dies kann beispielsweise durch eine so genannte Mikroschlupfregelung erreicht werden, bei der ein so genannter Mikroschlupf (z. B. 10 bis 50 U/Min) vermittels der Kupplungsanordnung eingeregelt wird. Damit ist am Ende der Phase A das von der Kupplungsanordnung 1 übertragbare (und tatsächlich übertragene) Moment auf den Wert $M_1$ abgefallen. Es ist grundsätzlich aber auch möglich, die Betätigung der Kupplungsanordnung von der Änderung des Motormoments zu entkoppeln. Entscheidend ist, dass in der Phase A von der Kupplungsanordnung 1 ein entsprechend der gewünschten Änderung der Längsbeschleunigung abfallendes Antriebsmoment zur Getriebeeingangswelle 1 übertragen wird, und es ist an sich egal, ob dies durch entsprechende Änderung des Motormoments oder/und durch entsprechende Änderung des Einrückzustands der Kupplungsnanordnung 1 erreicht wird. Beispielsweise könnte man das Motormoment auf die in Fig. 7 im zweitobersten Diagramm gezeigte Art und Weise reduzieren und die Kupplungsanordnung 1 über die Phase A vollständig eingerückt lassen und erst am Ende der Phase A im Sinne eines Ausrückens betätigen, so dass sich das von dieser Kupplungsanordnung übertragbare Moment dem Motormoment am Ende der Phase A annähert. Die in Fig. 7 dargestellte Betätigung der Kupplungsanordnung 1 erscheint aber besonders vorteilhaft, da es die Möglichkeit einer einfachen Mikroschlupfregelung eröffnet.

Dadurch, dass zu Beginn der Überschneidungsschaltungsphase B das Kupplungsmoment schon auf den Wert $M_1$ heruntergeführt ist, ergibt sich eine weitere Reduzierung der insgesamt in Phase B für die Kupplungsanordnung 1 anfallenden Reibarbeit durch Kupplungsschlupf, da die an der Kupplungsanordnung auftretende Reibleistung proportional zum übertragenen Moment (Reibleistung = Übertragungsmoment x Schlupfdrehzahl) ist. Zu Beginn der Überschneidungsschaltungsphase B ist also das an der Kupplungsanordnung 1 wirksame Moment schon abgesenkt, woraus eine entsprechende Reduzierung der Reibarbeit pro Zeiteinheit über die Phase B resultiert.

Im Verlauf der Überschneidungsschaltungsphase B wird dann das Motormoment $M_{MO}$ wieder erhöht, und zwar auf einen Wert $M_2$, der oberhalb dem vor dem Beginn des Schaltablaufs herrschenden Moment $M_{FW}$ (Fahrerwunschmoment) liegt. Hierdurch wird erreicht, dass am Ende der Phase B das am Getriebeausgang auftretende Antriebsmoment $M_{GA}$ noch größer ist als das dem Fahrerwunschmoment entsprechenden Antriebsmoment unter Berücksichtigung der sich aus der Änderung der Getriebeübersetzung ergebenden Momententransformation. Die Änderung der Längsbeschleunigung ist deshalb noch nicht abgeschlossen, sondern kann dann noch über die Gradientenphase C weitergeführt werden, indem die Kupplungsanordnung 2 wieder im Sinne eines leichten Ausrückens betätigt wird. Das von der Kupplungsanordnung 2 übertragbare Moment (und damit das von dieser Kupplungsanordnung tatsächlich übertragene Moment) fällt dabei vom Wert $M_2$ am Anfang der Phase C auf das Fahrerwunschmoment $M_{FW}$ am Ende der Phase C ab, wodurch eine Änderung der Längsbeschleunigung abgeschlossen ist, die hinsichtlich der Differenz zwischen der Längsbeschleunigung vor und nach dem Schaltablauf einer Änderung der Längsbeschleunigung entspricht, die sich aus der Umlagerung eines konstanten Antriebmoments von der Getriebeeingangswelle 1 zur Getriebeeingangswelle 2 aufgrund der Änderung der Getriebeübersetzung ergibt. Die Fahrzeuginsassen erfahren also Trägheitskräfte, wie sie dann auftreten würden, wenn man die Überschneidungsschaltungsphase auf die gesamte Übergangsphase A + B + C ausdehnen würde. Es wird also der Fahrkomfort wie bei einer relativ langen Überschneidungsschaltungsphase erreicht, ohne dass eine entsprechend große Reibbelastung durch Kupplungsschlupf für die Kupplungsanordnungen in Kauf genommen werden muss. Es sei angemerkt, dass für die Kupplungsanordnung 2 am Ende der Phase B eine etwas erhöhte Reibarbeit pro Zeiteinheit auftritt, da das Kupplungsmoment über das Fahrerwunschmoment auf den Wert $M_2$ angehoben wird. Dieser Effekt ist aber gegenüber der Verkürzung der Überschneidungsschaltungsphase B gegenüber der Übergangsphase nachrangig. Insgesamt kann durch die Reduzierung der Länge der Überschneidungsschaltungsphase für beide Kupplungsanordnungen eine deutliche Reduzierung der Reibarbeit erreicht werden.

Betreffend das zweitoberste Diagramm der Fig. 7 ist noch zu erläutern, dass in Phase C das Motormoment reduziert wird, um den Kupplungsschlupf an der Kupplungsanordnung 2 "aufzubrauchen", also die Motordrehzahl auf die Drehzahl der Getriebeeingangswelle 2 herunter zu ziehen. Da das in der Phase C übertragene Moment nach oben durch das übertragbare Moment der Kupplungsanordnung 2 begrenzt ist und bei der Absenkung des Motormoments unter entsprechender Abbremsung des Motors im Schwungrad des Motors gespeicherte Energie abgerufen wird, kommt es auf den genauen Verlauf der Motormomentreduzierung in der Phase C nicht an. Es empfiehlt sich aber, den Kupplungsschlupf so schnell wie möglich "aufzubrauchen", um die in der Phase C noch für die Kupplungsanordnung 2 anfallende Reibarbeit so klein wie möglich zu halten. Deshalb wird gemäß dem Ausführungsbeispiel der Motorantrieb völlig ausgeschaltet, so dass das negative Motorreibmoment (Motorschleppmoment) wirkt und dementsprechend der Kupplungsschlupf kurzfristig aufgebraucht ist.

Kurz vor Angleichung der Motordrehzahl an die Drehzahl der Getriebeeingangswelle 2 wird das Motormoment wieder derart erhöht, dass nach Aufbrauchen des Schlupfs das Motormoment gleich dem Soll-Motormoment $M_{FW}$ ist. Danach kann dann die Kupplungsanordnung 2 vollständig eingerückt werden, da nun das vom Motor abrufbare Moment begrenzend wirkt. Sieht man von einem Beitrag der Abbremsung der Getriebeeingangswelle 1 beim Einkuppeln der Kupplungsanordnung 1 ab, ist es im Prinzip egal, wann die Kupplungsanordnung 1 wieder eingekuppelt wird (sofern dies überhaupt gewünscht ist).

Betreffend die Darstellung in Fig. 7 wird noch darauf hingewiesen, dass gestrichelt dargestellte Abschnitte der Kurven reinen Beispielcharakter haben, und dass die Kurven in diesen zeitlichen Bereichen im Prinzip völlig beliebig verlaufen könnten. Betreffend das drittoberste Diagramm ist noch darauf hinzuweisen, dass nicht das tatsächliche Getriebeausgangsmoment $M_{GA}$ eingezeichnet ist, sondern das entsprechend der Übersetzung des der Kupplungsanordnung 2 zugeordneten Getriebezugs auf die Getriebeeingangsseite transformierte Getriebeausgangsmoment. Wäre das tatsächliche Getriebeausgangsmoment eingezeichnet, könnte das von der Kupplungsanordnung 2 am Ende der Phase B übertragene Moment nicht gleich dem Getriebeausgangsmoment sein, es sei denn, dass im Gang 2 die Getriebeübersetzung 1:1 gilt. Im Falle einer Übersetzung ungleich 1:1 ist betreffend das Getriebeausgangsmoment für alle drei Phasen A, B und C die gleiche darstellerische Transformation anzunehmen, also auch in den Phasen A und B, in denen die Kupplungsanordnung 1 und der Getriebegang 1 wirksam sind.

Um die für die Kupplungsanordnungen anfallende Reibarbeit so weit wie möglich zu reduzieren, empfiehlt es sich, diejenigen Phasen bzw. zeitlichen Abschnitte des Schaltablaufs so weit wie möglich zeitlich auszudehnen, in denen kein Kupplungsschlupf oder höchstens minimaler Schlupf, etwa Mikroschlupf, auftritt. Beispielsweise könnte man die Phase A besonders lange wählen. Auf die Phase C könnte man dann auch verzichten.

Möchte man auf die Phase C verzichten, so könnte man in der Phase B das Kupplungsmoment für die Kupplungsanordnung 2 auch auf den Sollwert $M_{FW}$ anheben. In diesem Fall wird man das Motormoment in der Phase B entsprechend weniger stark erhöhen, beispielsweise auf den Wert $M_{FW}$ am Ende der Phase B.

Ein erfindungsgemäßer Schaltablauf, etwa wie in Fig. 7 gezeigt, kann beispielsweise wie folgt implementiert werden. Phase A beginnt mit dem Auslösen des Schaltwunsches (gegebenenfalls automatisiert über Schaltkennlinien bzw. über einen manuell betätigbaren Schalter). Nach Schaltwunschauslösung wird ein Wunschbeschleunigungsgradient berechnet, mit dem vom Ausgangsbeschleunigungsniveau das Zielbeschleunigungsniveau erreicht werden soll.

Über diesen Gradienten können dann die Anfangs- und Endzeiten der einzelnen Teilphasen (Phasen A, B und C) ermittelt werden. Diese Zeiten bestimmen dann den notwendigen Momentenabbau (im Beispielsfall Motormomentenabbau) in der Phase A beginnend vom Fahrerwunschmoment $M_{FW}$ auf den Wert $M_1$. Diese Reduzierung wird beim Ausführungsbeispiel durch einen entsprechenden Eingriff in das Motormanagement erreicht.

Der Betrag der Momentenreduzierung ist abhängig vom Getriebeübersetzungssprung zwischen Ausgangs- und Zielgang, und der Anteil dieser Momentenreduzierung, der auf die Phase A entfällt, ist abhängig von der zeitlichen Länge $t_1$ der Phase A. Legt man eine lineare Momentenreduzierung zugrunde, so berechnet sich der Momentenwert $M_1$ am Ende der Phase A zu.

$$M_1 = M_{FW} \times (1 - (1 - i_Z/i_A) \times t_1/t_g)$$

wobei $i_A$, $i_Z$ und $t_g$ die Getriebeübersetzung im Ausgangsgang ($i_A$), im Zielgang ($i_Z$) und die Gesamtdauer $i_g$ der Übergangsphase A + B + C bezeichnen (x = Multiplikationsoperator). Diese Formel lässt sich auf Grundlage der Geradengleichung und der Annahme, dass die Fahrzeugbeschleunigung dem Produkt aus Getriebeeingangsmoment und Getriebeübersetzung entspricht, einfach herleiten.

Nachdem in der Phase A die Kupplungsanordnung des Ausgangsgangs in Eingriff ist und die Kupplung des Zielgangs offen ist bzw. geöffnet wird, zeichnet sich die Phase B durch die Momentenübergabe von der Kupplungsanordnung 1 auf die Kupplungsanordnung 2 aus. Gemäß dem Ausführungsbeispiel wird in dieser Phase eine Motordrehzahl eingestellt, die sich oberhalb der Drehzahlen beider Getriebeeingangswellen befindet, so dass die eine Kupplungsanordnung gesteuert und die andere auf Grundlage des Kupplungsschlupfs geregelt betätigt werden kann. Beispielsweise wird die Kupplungsanordnung 1 gesteuert geöffnet und die Kupplungsanordnung 2 geregelt geschlossen.

Beim Ausführungsbeispiel liegt der Zielwert $M_2$ des Kupplungsmoments der Kupplungsanordnung 2 oberhalb des Fahrerwunschmoments $M_{FW}$. Unter der Annahme eines linearen Verlaufes berechnet sich der Wert $M_2$ zu

$$M_2 = M_{FW} \times (1 - (1 - i_Z/i_A) \times t_2/t_g) \times i_A/i_Z$$

$t_2$ gibt die zeitliche Dauer der Phase A und der Phase B gemeinsam an, bestimmt also das zeitliche Ende der Phase B.

Phase C ist im Ausführungsbeispiel durch die Angleichung der Motordrehzahl etwa vom Niveau der Getriebeeingangswellendrehzahl 1 auf das Niveau der Getriebeeingangswellendrehzahl 2 bestimmt. Wie angesprochen, kann hierzu das Motormoment bis maximal auf das Motorreibmoment induziert werden. Das Kupplungsmoment wird vom Moment M2 bis auf das Moment, das dem Fahrerwunschmoment entspricht, reduziert. Nach Angleichen der Drehzahlen des Motors und der Getriebeeingangswelle 2 kann dann die Kupplungsanordnung 2 vollständig geschlossen werden. Die Kupplungsanordnung 1 kann sofort nach Auslegen des Gangs 1 oder zu einem späteren Zeitpunkt wieder geschlossen werden, um die Drehzahl der Getriebeeingangswelle 1 an die Drehzahl der Getriebeeingangswelle 2 anzugleichen. Im obersten Diagramm von Fig. 7 ist davon ausgegangen, dass die Kupplungsanordnung 1 sofort nach Auslegen des Gangs 1 wieder geschlossen wird. Im drittobersten Diagramm sind zwei verschiedene Möglichkeiten für das Schließen der Kupplungsanordnung 1 gestrichelt dargestellt. Man kann die Kupplungsanordnung 1 aber auch offen halten, je nach dem realisierten Schaltungskonzept.

Betreffend die Drehzahlkurven in Fig. 7 wird noch darauf hingewiesen, dass in Abweichung von den Darstellungen gemäß Fig. 2 bis 5 ein Anstieg der Drehzahlen entsprechend der momentanen Fahrzeugbeschleunigung berücksichtigt ist.

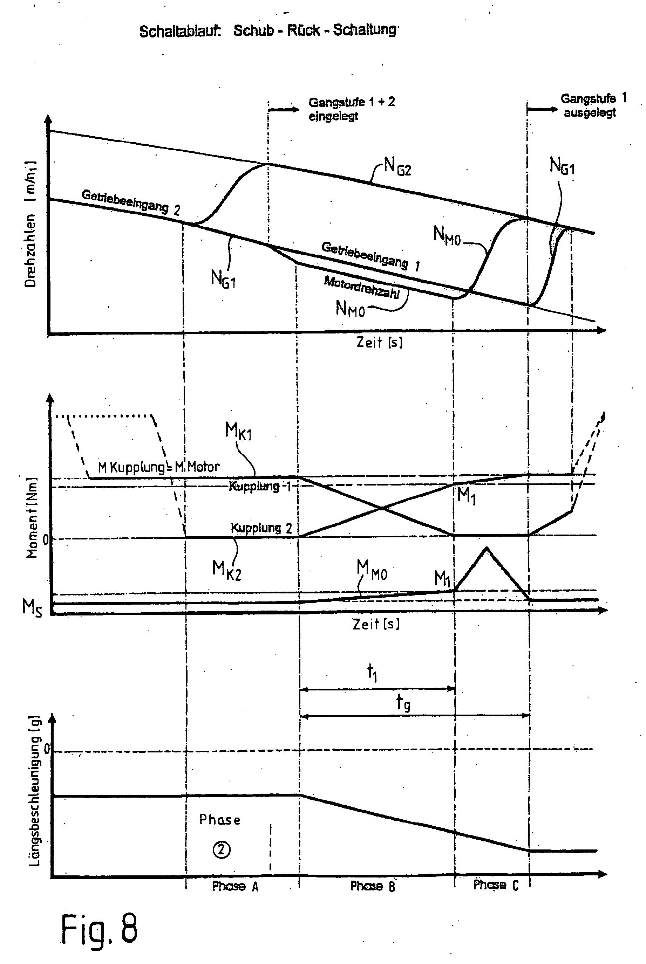

Fig. 8 zeigt ein Ausführungsbeispiel für einen erfindungsgemäßen Schaltablauf für den Fall einer Rück-Schaltung unter Schubbedingungen. Es wird wiederum angenommen, dass der Ausgangsgang (der höhere Gang) als "Gang 1" angesprochen wird und dass der Zielgang (der niedrigere Gang) als "Gang 2" angesprochen wird. Beim Ausführungsbeispiel ist die "Übergangsphase" von den Phasen B und C gebildet, von denen die Phase B die Überschneidungsschaltungsphase ist. Ausgehend von einem Zustand, in dem vom Motor ein Schleppmoment $M_S$ aufgebracht wird, beispielsweise das Reibmoment gemäß Fig. 7, wird durch entsprechenden Eingriff in das Motormanagement (durch entsprechendes "Gasgeben") in der Phase B das Schleppmoment des Motors auf einen Schleppmomentwert $M_1$ reduziert, und zwar im Beispielsfall linear. Die Kupplungsanordnung 2 wird in der Phase B soweit eingerückt, dass ihr übertragbares Moment etwa dem Schleppmoment $M_1$ entspricht. Damit wirkt zum Ende der Phase B an dem Getriebeabtrieb ein Schleppmoment, das größer ist als es sich auf Grundlage eines getriebeeingangsseitigen Schleppmoments $M_S$ an der Getriebeeingangswelle 2 aufgrund der im Gang 2 wirksamen Getriebeübersetzung ergeben würde. Die Fahrzeugverzögerung (negative Längsbeschleunigung) hat dementsprechend am Ende der Phase B noch nicht ihren Endwert erreicht, sondern wird erst in der Phase C durch entsprechende Betätigung der Kupplungsanordnung 2 linear auf den Endwert geführt (betragsmäßig vergrößert). Es resultiert eine entsprechende Vergrößerung der Übergangsphase gegenüber der Überschneidungsschaltungsphase, beispielsweise auf einen Wert $t_g$ = 500 bis 700 ms (beispielsweise gegenüber einem Wert $t_1$ von 300 bis 500 ms für die Überschneidungsschaltungsphase B.

In der Phase C wird durch entsprechenden Eingriff in das Motormanagement das Motorschleppmoment zuerst relativ stark weiter reduziert, um die Motordrehzahl an die Drehzahl der Getriebeeingangswelle 2 anzugleichen und damit den Schlupf der Kupplungsanordnung 2 aufzubrauchen. Danach wird das Motorschleppmoment wieder auf den Ausgangswert $M_S$ zurückgeführt. Die Kupplungsanordnung 2 wird dabei allmählich derart geschlossen, dass ihr übertragbares Moment der gewünschten Längsbeschleunigung in der Phase C entspricht.

Man könnte auch beispielsweise eine der Phase B vorausgehende Phase A (in die die Teilphase II fällt, in der der Zielgang 2 unter entsprechender Synchronisation der Drehzahlen eingelegt wird) in die Übergangsphase einbeziehen, beispielsweise indem mittels eines Zusatzaggregats (beispielsweise des Kurbelwellenstartergenerators 50 gemäß Fig. 1 bzw. 6 oder der Bremsanlage des Fahrzeugs), ein entsprechendes negatives Moment, also ein entsprechendes zusätzliches Schleppmoment, erzeugt wird.

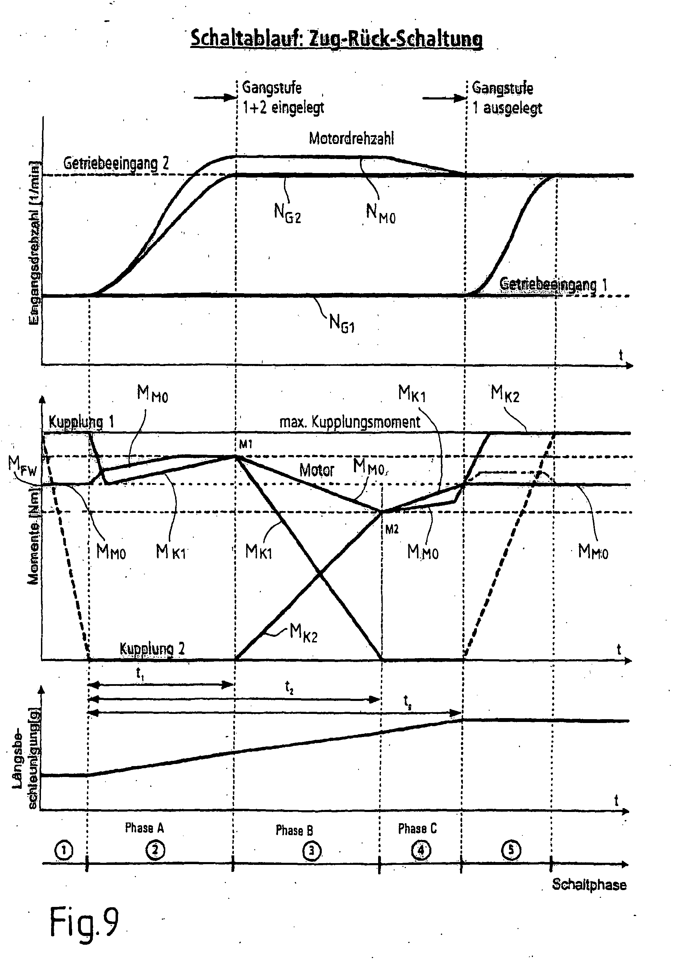

Fig. 9 zeigt ein Beispiel für einen erfindungsgemäßen Schaltablauf im Falle einer Zug-Rück-Schaltung, also für ein Herunterschalten unter Zug-Betriebsbedingungen. Es wird wiederum davon ausgegangen, dass der Ausgangsgang (der höhere Gang) als "Gang 1" und der Zielgang (der niedrigere Gang) als "Gang 2" bezeichnet werden. Die Darstellung der Diagramme der Fig. 9 entspricht der Darstellung der Diagramme der Fig. 3. Die Änderung der Drehzahlen aufgrund der wirksamen Fahrzeugbeschleunigung ist also nicht berücksichtigt, und es sind die Phasen I bis V der Fig. 3 im Schaltablauf kenntlich gemacht, wobei wie in Fig. 3 jeweils die der römischen Schaltphasennummer entsprechende arabische Ziffer in einem jeweiligen Kreis in Fig. 9 eingetragen ist.

Als Überschneidungsschaltungsphase bzw. Phase B im Sinne der vorangehenden Beispiele gemäß Fig. 7 und 8 ist die Phase III zu identifizieren. Die Übergangsphase umfasst neben der Überschneidungsschaltungsphase III ferner die vorausgehende Phase II (= Phase A) und die ‚nachfolgende Phase IV (= Phase C).

Um schon einem Beschleunigungsgradienten in der Phase A zu erreichen, wird in der Phase A, nach Herstellung von Kupplungsschlupf durch Absenkung des Kupplungsmoments der Kupplungsanordnung 1 auf den Ausgangswert des Motormoments $M_{FW}$ und Anheben des Motormoments $M_{MO}$ über diesen Wert, das Kupplungsmoment $M_{K1}$ entsprechend dem Wunschgradienten auf den Wert $M_1$ linear angehoben, unter gleichzeitigem weiteren Anstieg des Motormoments $M_{M0}$, so dass das Motormoment stets oberhalb dem Kupplungsmoment liegt. Beispielsweise wird die Differenz dieser Momente derart eingestellt, dass die Motordrehzahl auf ein vorbestimmtes Drehzahlniveau oberhalb der neuen, aus dem Einlegen des Gangs 2 resultierenden Synchrondrehzahl hochläuft.

Es sei angemerkt, dass dieser Ablauf nur dann möglich ist, wenn zuvor nicht mit maximalem Motormoment gefahren wurde bzw. wenn, im Falle eines Fahrens mit maximalem Motormoment, ein Zusatzmoment von einem Zusatzaggregat (etwa dem Kurbelwellenstartergenerator) geliefert werden kann. Es muss also vor Durchführung des Schaltablaufs überprüft werden, ob dieser Schaltablauf überhaupt möglich ist. Ist dies nicht der Fall oder ist beispielsweise ein "Sportmodus" gewählt, nachdem eine schnellere und weniger komfortable Längsbeschleunigungsänderung gewünscht ist, kann beispielsweise auf den Schaltablauf der Fig. 3 zurückgegriffen werden, wobei zur Reduzierung der Reibbelastung der Kupplungsanordnung in der Überschneidungsschaltungsphase diese dann entsprechend zeitlich verkürzt werden kann. Es sind auch weitere Variationen oder Kombinationen aus dem Schaltablauf gemäß Fig. 9 und dem Schaltablauf gemäß Fig. 3 denkbar. Beispielsweise kann bei anliegendem maximalem Motormoment die Längsbeschleunigungsänderung auf die Phasen 3 und 4 verteilt werden, wodurch zwar keine oder nur eine geringere Reduzierung der Reibarbeit erreicht wird, aber ein höherer Komfort auch im angesprochenen "Sportmodus" erreicht wird.

In der Phase III, also in der Überschneidungsschaltungsphase B, wird das Motormoment auf den Wert M2 abgesenkt, der unterhalb dem Soll-Wert $M_{FW}$ am Ende der Übergangsphase liegt, so‚dass der Endwert der Längsbeschleunigung noch nicht erreicht ist. Die Kupplungsanordnung 2 wird in der Phase III derart gesteuert oder geregelt, dass ihr übertragbares Moment am Ende der Phase III ebenfalls den Wert M2 annimmt. Wird die Kupplungsanordnung 1 gesteuert geöffnet, und die Kupplungsanordnung 2 geregelt geschlossen, so steigt das übertragbare Moment der Kupplungsanordnung 2 zum Ende der Phase III automatisch auf den Wert M2 an.

In Phase IV (Phase C) wird dann das Kupplungsmoment der Kupplungsanordnung 2 auf einen Wert entsprechend dem ursprünglichen Motormoment (also entsprechend dem Soll-Motormoment $M_{FW}$) hochgefahren. Das Motormoment liegt in Phase IV unterhalb dem Kupplungsmoment, und wird erst am Ende der Phase IV auf das ursprüngliche Moment $M_{FW}$ gesteuert, damit die Motordrehzahl sich an die Drehzahl der Getriebeeingangswelle 2 anpasst. Danach verbleibt das Motormoment in Phase V auf dem Wert $M_{FW}$, und die Kupplungsanordnung 2 kann vollständig eingekuppelt werden.

Ein weiteres Beispiel für eine erfindungsgemäße Zug-Rück-Schaltung ist in Fig. 10 dargestellt. Die Art der Darstellung entspricht den Beispielen der Fig. 7 und 8, die Änderung der Drehzahlen aufgrund der herrschenden Fahrzeugbeschleunigung ist also berücksichtigt.

Gemäß dem Beispiel der Fig. 10 wird zu Beginn der Gradientenphase A das Motormoment vom Fahrerwunschmoment $M_{FW}$ schnell auf das maximale Motormoment $M_{max}$ hochgefahren, um die Motordrehzahl möglichst schnell auf die Zieldrehzahl zu bringen. Hierzu wird ein entsprechender Schlupf an der Kupplungsanordnung 1 in Kauf genommen. Die Kupplungsanordnung 1 wird allmählich von einem Einrückzustand, in dem das übertragbare Moment $M_{FW}$ beträgt, auf ein übertragbares Moment entsprechend dem Momentwert $M_2$ am Ende der Phase A hochgefahren, mit entsprechender Änderung der Längsbeschleunigung. In einer als "Phase II" im Sinne der vorher behandelten Ausführungsbeispiele identifizierbaren Teilphase der Phase A wird der Zielgang 2 eingelegt, so dass die Drehzahl der Getriebeeingangswelle 2 hochfährt und am Ende diese Teilphase II der Gang 2 eingelegt ist. Die Überschneidungsschaltungsphase B entspricht im Wesentlichen der Überschneidungsschaltungsphase B des Beispiels der Fig. 9. Es wird also das Motormoment auf einen Wert unterhalb des Fahrerwunschmoments $M_{FW}$ heruntergefahren, zeitgleich mit der gegenläufigen Betätigung der beiden Kupplungsanordnungen. Am Ende der Phase B haben das Antriebsmoment an der Getriebeabtriebswelle und dementsprechend die Fahrzeuglängsbeschleunigung noch nicht ihre Endwerte erreicht, so dass in der Gradientenphase B durch Hochfahren des Motormoments auf den Wert $M_{FW}$ unter entsprechender Betätigung der Kupplungsanordnung 2 das Moment an der Getriebeabtriebswelle und damit die Längsbeschleunigung auf die Werte hochgeführt werden, die der Übersetzung im Zielgang 2 auf Grundlage des am Getriebeeingang anliegenden Fahrerwunschmoments $M_{FW}$ entsprechen.

Betreffend das Vorsehen einer gegenüber der reinen Überschneidungsschaltungsphase verlängerten Übergangsphase braucht für eine Schub-Hoch-Schaltung kein eigenes Beispiel gegeben werden, es reicht, diesbezüglich auf das Beispiel gemäß Fig. 4 zu verweisen. Durch entsprechende Betätigung der Kupplungsanordnung 1 im Ausrücksinne in der Phase II derart, dass deren Momentenübertragungsfähigkeit unter das Schleppmoment des Moments abfällt und sich im Verlauf der Phase II gegebenenfalls in einer gewünschten Weise weiter reduziert, kann das an der Getriebeeingangswelle I anliegende Schleppmoment und dementsprechend das zum Getriebeausgang transformierte Schleppmoment reduziert werden, so dass schon in der Phase II der Abbremseffekt auf das Fahrzeug abnimmt und dementsprechend die Fahrzeugverzögerung (negative Beschleunigung) reduziert wird, gewünschtenfalls nicht nur annähernd, sondern sogar exakt linear. Eine andere Möglichkeit ist, durch entsprechenden Eingriff in das Motormanagement das Schleppmoment des Motors selbst entsprechend zu verringern. Ist ein Zusatzaggregat, wie etwa ein Kurbelwellenstartergenerator, vorhanden, könnte man im Zuge der Überschneidungsschaltung in Phase III das am Getriebeeingang wirksame Schleppmoment auch gegenüber dem Ausgangswert vergrößern und dann in der Phase IV wieder auf den Ausgangswert zurückführen. Zu diesem Zweck könnte man auch die insoweit als "Zusatzaggregat" auffassbaren Fahrzeugbremsen einsetzen. Die die Überschneidungsphase III umfassende Übergangsphase kann also ohne weiteres beispielsweise auf die Phase II und die Phase IV gemeinsam ausgedehnt werden.

Durch die an mehreren Beispielen vorstehend beschriebene Verlängerung des Zeitintervalls, in dem das Fahrzeug eine Änderung der Längsbeschleunigung bzw. Längsverzögerung erfährt, die, falls gewünscht, hinsichtlich der Differenz zwischen Anfangswert vor dem Schaltablauf und Endwert nach dem Schaltablauf genau oder näherungsweise der sich aus der Änderung der Getriebeübersetzung ergebenden Änderung des Getriebeabtriebsmoments entspricht, können zwei an sich konträre Ziele gleichzeitig erreicht werden, nämlich einerseits das Vorsehen einer kurzen oder möglichst kurzen Überschneidungsschaltungsphase zur Reduktion der an den Kupplungsanordnungen auftretenen Reibarbeit bzw. des Wärmeeintrags an den Kupplungsanordnungen und andererseits ein hoher Fahrkomfort mit nur sich allmählich ändernder Längsbeschleunigung bzw. Verzögerung und dementsprechend sich nur allmählich ändernden Trägheitskräften, die auf die Fahrzeuginsassen wirken. Der diesbezügliche Erfindungsvorschlag kann sowohl bei nasslaufenden Lamellenkupplungsanordnungen als auch bei trockenlaufenden Kupplungsanordnungen, beispielsweise der Reibscheibenbauart, Anwendung finden, wobei der Erfindungsvorschlag für die letztgenannte Anwendung, also für trockenlaufende Kupplungsanordnungen, eine besonders große Bedeutung hat, da bei trockenlaufenden Kupplungsanordnungen die Belastung durch Reibung ein wesentlich wichtigerer Gesichtspunkt ist, da die Belastbarkeit durch Reibung in der Regel geringer als bei nasslaufenden Lamellen-Kupplungsanordnungen ist.

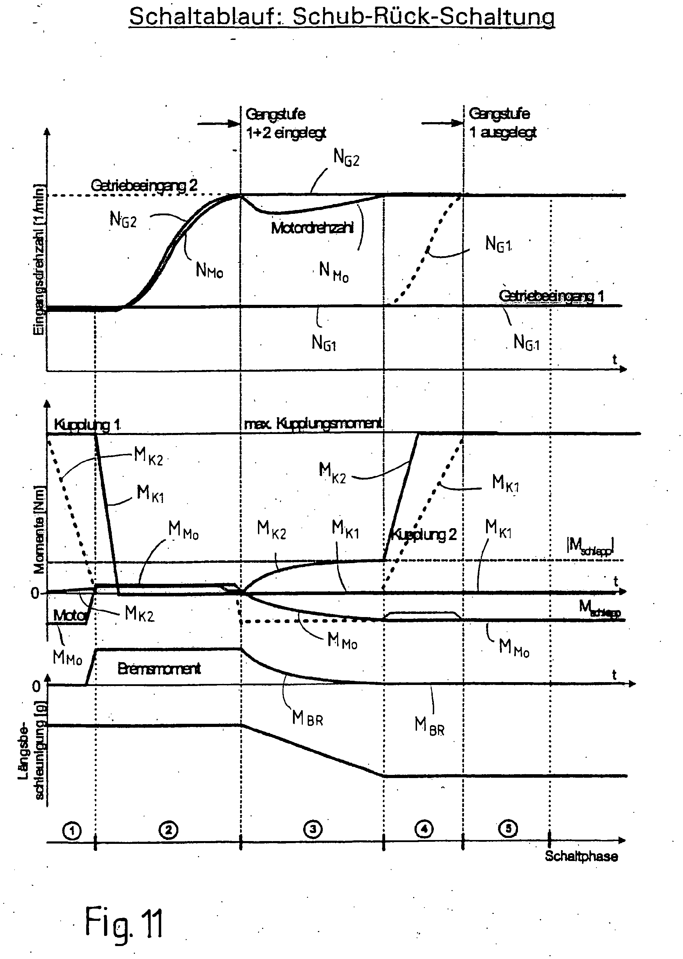

Im Folgenden werden nun unter Bezugnahme auf die Fig. 11 bis 14 weitere exemplarische Schaltabläufe erläutert, die Ausführungsvarianten eines erfindungsgemäßen Betriebsverfahrens für einen Antriebsstrang, beispielsweise den Antriebsstrang der Fig. 1 oder der Fig. 6, realisieren. Die Schaltabläufe können beispielsweise unter Vermittlung der Steuereinheit 36 durch entsprechende Ansteuerung der Antriebseinheit 12, der Kupplungsanordnungen 26 und 28 und - soweit zweckmäßig - des Zusatzaggregats 50 sowie insbesondere auch der Fahrzeugbremsen realisiert werden, ggf. in Abhängigkeit von durch die Einheit 38 vorgegebenen Parametern. Bevorzugt werden die Schaltabläufe durch die Steuereinheit 36 vollautomatisiert durchgeführt.

Bei den folgenden Erläuterungen, deren Schwerpunkt auf den Unterschieden gegenüber den Schaltabläufen der vorausgehenden Figuren liegt (die Kenntnis und das Verständnis dieser Schaltabläufe wird insoweit vorausgesetzt), wird wiederum auf Getriebeeingangswellen 1 und 2, Kupplungen 1 und 2 und Gänge 1 und 2 Bezug genommen. Die Getriebeeingangswelle 1 kann der Welle 20 und die Getriebeeingangswelle 2 kann der Welle 22 entsprechen oder umgekehrt. Dementsprechend kann die Kupplung 1 der Kupplungsanordnung 26 und die Kupplung 2 der Kupplungsanordnung 28 entsprechen, oder umgekehrt. Gang 1 ist ein der Getriebeeingangswelle 1 zugeordneter Gang (der Ausgangsgang) und Gang 2 ist ein der Getriebeeingangswelle 2 zugeordneter Gang (der Zielgang).

Die Schaltabläufe der Fig. 11 bis 14 betreffen Schub-Rück-Schaltungen. Es wird in diesem Zusammenhang noch einmal auf die Schaltabläufe gemäß Fig. 5 und 8 Bezug genommen, die ebenfalls jeweils eine Schub-Rück-Schaltung betreffen. Gemäß Fig. 5 und Fig. 8 wird in Phase II bzw. in Phase B die Motordrehzahl unter die Drehzahl der aktuellen (dem Ausgangsgang zugeordneten) Getriebeeingangswelle gebracht. Eine motorunterstützte Synchronisation des Zielgangs ist damit nicht möglich, so dass die Synchronisation des Zielgangs alleine von den betroffenerl Synchroneinheiten des Getriebes bewerkstelligt werden muss mit entsprechender Belastung der betroffenen Synchroneinheiten bzw. allgemein der Synchroneinrichtung bzw. Synchroneinrichtungen des Getriebes.

Möchte man die Synchronisiereinrichtung bzw. Synchronisiereinrichtungen entlasten, so könnte man daran denken, größere Schaltzeiten in Kraft zu nehmen. Die Schaltzeiten sind nämlich abhängig von der Leistung, welche die Synchronisiereinheit aufbringen müssen bzw. können. Je langsamer die jeweilige Getriebeeingangswelle hochbeschleunigt wird, desto weniger wird die betroffene Synchronisiereinrichtung gefordert. Eine deutliche Verlängerung der Schaltzeit wird in der Regel aber nicht in Betracht kommen. Bei Tieftemperaturen sind die angesprochenen Schaltabläufe für die Schub-Rück-Schaltung unter Umständen dahingehend problematisch, als dass im Extremfall eine Rückschaltung im Schub nicht möglich sein könnte. Auch bei Betriebstemperaturen kann eine schnelle Rückschaltung problematisch sein, und zwar speziell eine Rückschaltung vom zweiten in den ersten Gang, da hier in der Regel die Getriebespreizung am größten ist.

Demgegenüber bietet der in Fig. 11 exemplarisch dargestellte Schaltablauf den Vorteil, dass eine zugkraftunterbrechungsfreie Schub-Rückschaltung unter Entlastung der Synchronisiereinrichtungen ermöglicht wird. Ein wesentlicher Gesichtspunkt ist, dass ein Brems- oder Schleppmoment der Antriebseinheit durch ein durch eine Bremsenanordnung, insbesondere die normalen Fahrzeugbremsen, bereitgestellten Ersatz-Bremsmoment substituiert wird, um einen unerwünschten positiven Beschleunigungsvorgang zu unterbinden, während eine aktive Synchronisierung mittels des Motors (allgemein der Antriebseinheit) durchgeführt wird.

In Phase I ist die Kupplung 1 geschlossen und überträgt das maximale Schlepp- oder Bremsmoment der Antriebseinheit (des Motors). Die Kupplung 2 kann zu Beginn des Schaltablaufs offen oder geschlossen sein. Im Falle einer offenen Kupplung wird die Kupplung 2 leicht in Einrückrichtung betätigt, um Antriebsmoment vom Motor auf die Getriebeeingangswelle 1 übertragen zu können. Im Falle einer zuvor geschlossenen Kupplung wird die Kupplung 1 entsprechend weit geöffnet.

In Phase II wird die dem Ausgangsgang zugeordnete Kupplung 1 im Wesentlichen vollständig geöffnet und dementsprechend das Kupplungsmoment dieser Kupplung ungefähr auf Null reduziert. Ohne zusätzliche Maßnahmen würde das Fahrzeug, welches sich in einem Schub-Zustand befindet, beschleunigt werden oder es würde zumindest die bisher herrschende Fahrzeugverzögerung (negative Längsbeschleunigung) deutlich abfallen. Um diesen unerwünschten positiven Beschleunigungsvorgang bzw. Abfall der Fahrzeugverzögerung zu unterbinden, wird mit Hilfe der Fahrzeugbremse ein Bremsmoment $M_{BR}$ auf die Laufräder des Kraftfahrzeugs, oder zumindest auf die Antriebsräder des Kraftfahrzeugs gebracht, das dem vorherigen Schlepp- oder Bremsmoment des Motors entspricht. Es wird nun das Motormoment auf einen positiven Wert oberhalb des Kupplungsmoments der Kupplung 2 hochgefahren, damit der Motor zur Synchrondrehzahl des Zielgangs (Gang 2) hochdreht. Hierbei wird über die Kupplung 2 die ,Getriebeeingangswelle 2 mitgenommen, da die Kupplung 2 Moment auf ihre Getriebeeingangswelle überträgt. Erreicht die Getriebeeingangswelle 2 ihre neue Synchrondrehzahl, wird die Kupplung 2 wieder geöffnet, um den neuen Gang (Zielgang, Gang 2) im Wesentlichen ohne Beanspruchung der Synchronisiereinrichtung des Getriebes einlegen zu können. Es ist dabei durchaus möglich, die Synchronisiereinrichtung des neuen Gangs schon beim Hochdrehen des Motors in Einrückrichtung zu betätigen.

Nach Erreichen der Synchrondrehzahl wird das Motormoment in Phase III allmählich wieder auf das ursprüngliche Schlepp- oder Bremsmoment abgesenkt, was mit einer Absenkung der Motordrehzahl einhergeht. Damit die Motordrehzahl nicht zu schnell absinkt, ist es zweckmäßig, das Motorschleppmoment in etwa so schnell abzusenken, wie die Kupplung 2 geschlossen wird und damit Moment überträgt und damit die fallende Motordrehzahl abfangen kann. Es wird in diesem Zusammenhang vor allem daran gedacht, dass die Kupplung 2 gesteuert geschlossen wird, bis die Motordrehzahl der neuen Synchrondrehzahl wieder entspricht. Die Kupplung 2 überträgt dann das gesamte Motorschleppmoment. Vorzugsweise ist die Steuerung (man könnte auch eine Regelung vorsehen) mit abnehmender Schlupfdrehzahl immer feinfühliger, um einen asymptotischen Übergang der Motordrehzahl auf die Getriebeeingangswellendrehzahl zu gewährleisten. Das von den Fahrzeugbremsen aufgebrachte Bremsmoment sollte dabei möglichst genau in der Weise gesteuert oder geregelt abgesenkt werden, wie das Motorschleppmoment durch das Einrücken der Kupplung 2 auf der Getriebeabtriebswelle aufgebaut wird. Es liegt damit am Abtrieb idealerweise immer ein Schub-Moment an, das in der Phase III einer kontinuierlichen (ggf. linearen) Verlagerung des vor Beginn des Schaltablaufs von der Antriebseinheit bereitgestellten Schubmoments von der Getriebeeingangswelle 1 auf die Getriebeeingangswelle 2 entspricht. In Phase III wird gewissermaßen eine "Überschneidungsschaltung" zwischen den Fahrzeugbremsen einerseits und der dem Zielgang zugeordneten Kupplung 2 bzw. der Antriebseinheit andererseits durchgeführt, so dass beispielsweise die in Fig. 11 unten dargestellte Längsbeschleunigung erreicht wird.

In Phase IV wird dann die Kupplung 2 komplett geschlossen. Der Zielgang kann ausgelegt und die Kupplung 1 geschlossen werden, was zum Ansteigen der Drehzahl $N_{G1}$ der Getriebeeingangswelle 1 auf das Niveau der Getriebeeingangswelle 2 führt. Alternativ kann die Kupplung 1 auch offen bleiben.

Da das Kupplungsmoment der dem Zielgang zugeordneten Kupplung 2 in Phase II größer Null ist, ist eine aktive Synchronisierung der Getriebeeingangswelle 2 möglich, so dass die betreffende Synchronisiereinrichtung entlastet wird. Bliebe die Kupplung 2 in Phase II vollständig geöffnet, so müsste die Synchronisiereinrichtung die volle Synchronisierung der Getriebeeingangswelle 2 bewerkstelligen.

Die Entlastungswirkung für die Synchronisiereinrichtung bzw. Synchronisiereinrichtungen des Getriebes ist nicht von der Substitution des Schleppmoments durch ein Bremsmoment abhängig. Man kann die Schub-Rück-Schaltung dementsprechend auch ohne Bremsenunterstützung durchführen, um die Synchronisiereinrichtung bzw. Synchronisiereinrichtungen aktiv zu entlasten. Ohne Bremsenunterstützung muss aber eine positive Zwischenbeschleunigung bzw. zumindest eine zeitweilige Reduzierung der Fahrzeugverzögerung in Kauf genommen werden, was aus Komfortgründen eventuell nicht gewünscht ist.

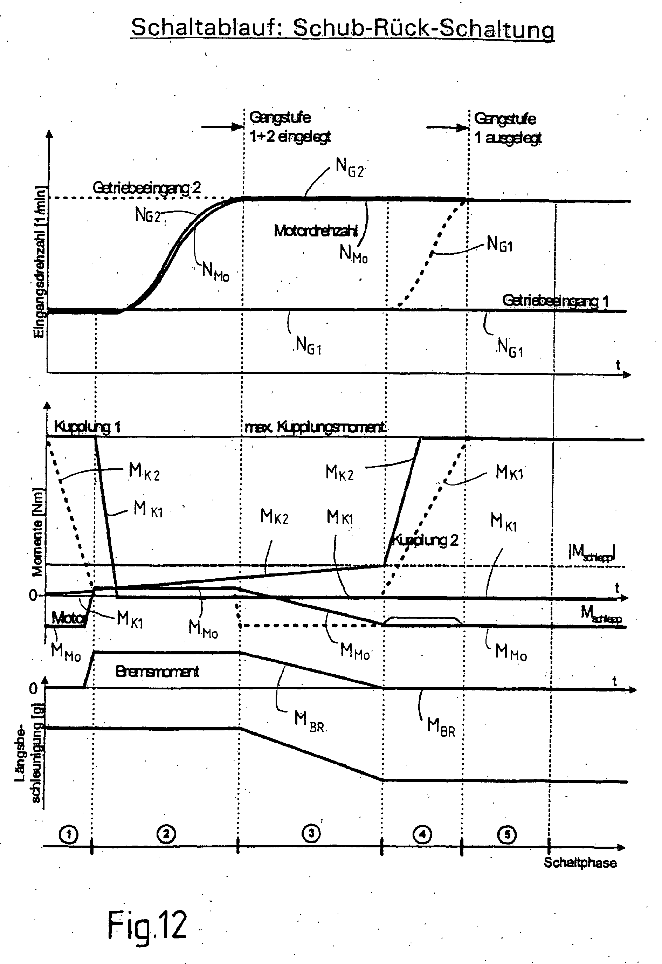

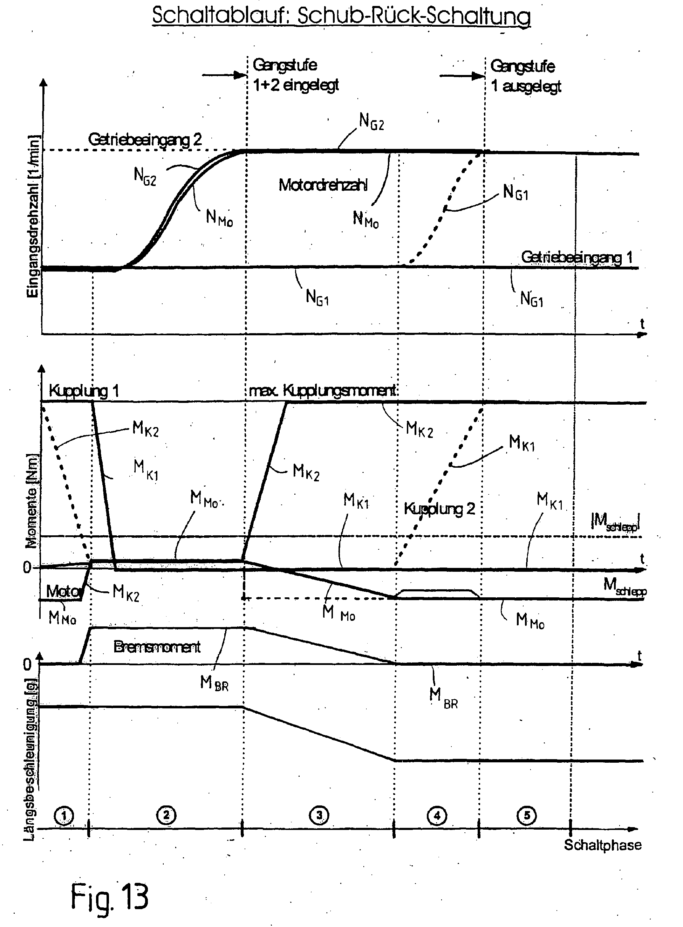

Fig. 12 zeigt eine Ausführungsvariante des Schaltablaufs der Fig. 13. Da zu Beginn der Phase III gemäß Fig. 11 Drehzahlgleichheit zwischen der Antriebseinheit und der dem Zielgang zugeordneten Getriebeeingangswelle 1 herrscht, kann die Kupplung 2 in dieser Phase im Prinzip beliebig weit eingerückt werden, ohne dass es zu einem Ruck im Antriebsstrang kommt. Beispielsweise kann man die Kupplung 2 mindestens soweit einrücken, dass das von der Kupplung 2 übertragbare Moment im Motorbrems- oder Schleppmoment entspricht, das zu Beginn des Schaltablaufs geherrscht hat (beispielsweise das maximal mögliche Motorschleppmoment).

Vor diesem Hintergrund wird in Fig. 12 die Kupplung 2 in Phase I bei Null beginnend bis Ende der Phase III gesteuert, etwa vermittels einer entsprechenden Druckrampe, geschlossen, so dass am Ende der Phase III das übertragbare Kupplungsmoment dem genannten Motorschleppmoment entspricht. In Phase III werden das Motormoment und das Bremsmoment aufeinander abgestimmt in der Art einer "Überschneidungsschaltung" reduziert, um beispielsweise die unten in Fig. 12 gezeigte Änderung der Längsbeschleunigung zu erzielen. Am Abtrieb bzw. an den Fahrzeugrädern wirkt insgesamt ein sich in Phase III kontinuierlich änderndes Bremsmoment, das die Summe des von den Fahrzeugbremsen aufgebrachten Bremsmoments $M_{BR}$ und des über das Getriebe, genauer den Zielgang 2 und die Kupplung 2 übertragenen momentanen Motormoments $M_{MO}$ ist. Maßgeblich ist nicht das ins Getriebe eingeleitete Moment $M_{MO}$, sondern das am Getriebeabtrieb unter Berücksichtigung der Getriebeübersetzung resultierende Moment aufgrund dieses Moments $M_{MO}$.

Fig. 13 zeigt eine weitere Ausführungsvariante des Schaltablaufs. Bei diesem Schaltablauf wird die dem Zielgang zugeordnete Kupplung 2 schon in Phase III vollständig geschlossen. Ansonsten entspricht der Schaltablauf dem Schaltablauf der Fig. 12.

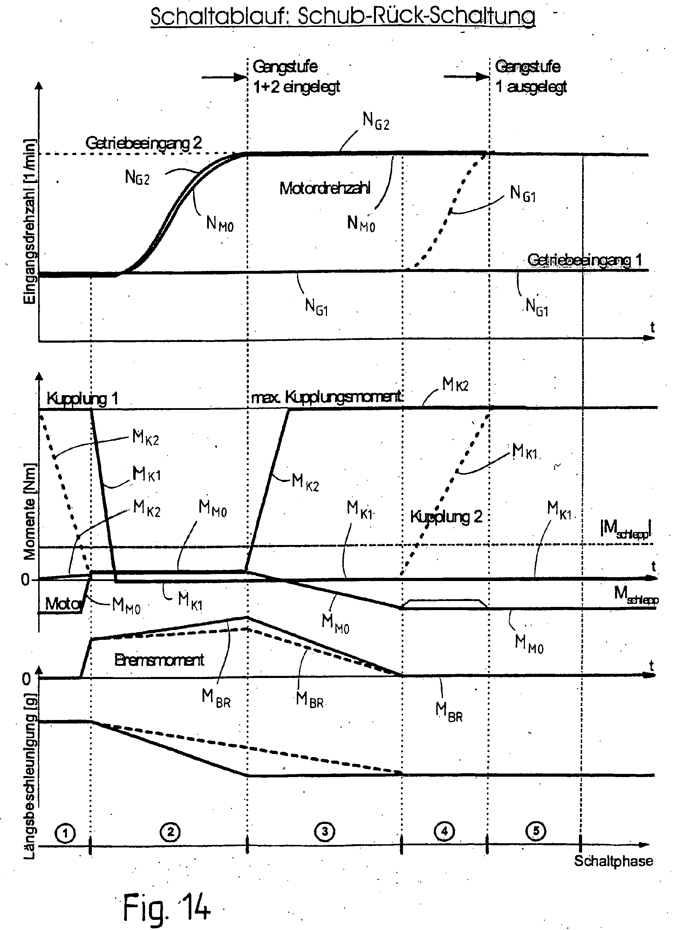

Der Schaltablauf gemäß Fig. 14 zeigt zwei Varianten zum Schaltablauf der Fig. 13. Gemäß einer ersten Variante (durchgezogene Bremsmoment-Kurve und durchgezogene Längsbeschleunigungs-Kurve) wird das Bremsmoment in Phase II linear vergrößert, mit einer entsprechenden Zunahme des Betrags der negativen Längsbeschleunigung. In Phase III wird dann das Bremsmoment im gleichen Maße (d. h. gleiche Änderungsrate) wie das Motormoment geändert (das Motormoment von einem leicht positiven Moment zu einem negativen Schlepp- oder, Bremsmoment), so dass in Phase III die Fahrzeuglängsbeschleunigung im Wesentlichen konstant bleibt.

Demgegenüber wird bei der zweiten Variante (gestrichelte Bremsmomentkurve und gestrichelte Längsbeschleunigungskurve) das Motormoment in Phase II weniger stark angehoben, und in Phase III ist die Änderungsrate des Bremsmoments $M_{BR}$ kleiner als die Änderungsrate des Motormoments $M_{MO}$, so dass über die Phasen II und III eine streng monotone, vorliegend lineare Vergrößerung der Bremswirkung auf das Fahrzeug, also ein linearer Anstieg des Betrags der negativen Längsbeschleunigung erreicht wird.

Die beiden Varianten der Fig. 14 geben zwei Varianten des Schaltablaufs zur Schub-Rück-Schaltung an, bei dem gewissermaßen eine spontane Verzögerung nach einem Rückschaltbefehl im Schubbetrieb erzielt wird, nämlich schon vom Beginn der Phase II an. Dies ist eventuell im Hinblick auf die Psychologie eines typischen Fahrers vorteilhaft, da dieser eine spontane Reaktion des Kraftfahrzeugs auf von ihm in einem manuellen Schaltmodus erteilte Schaltbefehle erwartet.

Es ist noch auf Folgendes hinzuweisen: Aus Komfortgründen wäre es sicherlich ideal, wenn beim Schalten stets eine Zugkraft- oder Schubkraftunterbrechung vermieden wird. Im Rahmen der Erfindung wird aber vorgesehen, dass in gewissen Situationen eine Schubkraftunterbrechung bzw. Zugkraftunterbrechung in Kauf genommen wird, um die Reibarbeit an den Kupplungen oder/und an den Synchronisiereinrichtungen zu reduzieren bzw. so weit als möglich zu vermeiden. Es wird in diesem Zusammenhang insbesondere an gewisse Situationen im Schubbetrieb gedacht. Ist die (im Schubbetrieb negative) Längsbeschleunigung des Fahrzeugs gering, so wird vom Fahrer bzw. den Fahrzeuginsassen eine durch eine Schubkraftunterbrechung hervorgerufene, vergleichsweise geringe Änderung der Längsbeschleunigung akzeptiert und nicht als Komforteinbuße empfunden werden. Dies gilt sowohl für eine Schub-Rück-Schaltung als auch für eine Schub-Hoch-Schaltung. Bei einer Schub-Hoch-Schaltung kommt hinzu, dass die Längsbeschleunigung des Fahrzeugs nach der Schaltung größer sein wird aufgrund einer geringeren Bremswirkung des Motors. Ein zwischenzeitliches geringes freies Beschleunigen oder Rollen des Fahrzeugs aufgrund einer Schubkraftunterbrechung dürfte ohne weiteres hingenommen werden.

Das zuvor Gesagte gilt in entsprechender Weise für Zug-Betriebszustände. Ist die (positive) Längsbeschleunigung des Fahrzeugs gering, so werden vom Fahrer bzw. den Fahrzeuginsassen durch eine Zugkraftunterbrechung hervorgerufene, vergleichsweise geringfügige Änderungen der Längsbeschleunigung akzeptiert und nicht als Komforteinbuße empfunden werden.

Sowohl für Zug-Betriebsbedingungen als auch Schub-Betriebsbedingungen wird hierzu speziell vorgeschlagen, dass auf Grundlage des Betrags der momentanen Längsbeschleunigung des Fahrzeugs entschieden wird, ob mit Zug-bzw. Schubkraftunterbrechung oder ohne Zug- bzw. Schubkraftunterbrechung geschaltet werden soll. Die entsprechende Schaltung kann automatisiert durch eine entsprechende Funktionalität einer Steuereinrichtung durchgeführt werden.

Soweit eine Schubkraftunterbrechung an sich auftritt, so kann entsprechend den den Fig. 11 bis 13 zugrundeliegenden Vorschlägen das Schubmoment der Antriebseinheit durch ein Bremsmoment einer Bremseinrichtung, insbesondere der Fahrzeugbremsen, substituiert werden. Im nach dem Auskuppeln der dem Ausgangsgang zugeordneten Kupplungsanordnung herbeigeführten lastfreien Zustand des Antriebsstrangs kann mit Vorteil eine aktive Synchronisierung durchgeführt werden, indem die Motordrehzahl aktiv auf die Synchrondrehzahl des Zielgangs eingestellt wird. Durch den Verzicht auf die "Überschneidungsschaltung" zwischen den beiden Kupplungsanordnungen wird die Reibarbeit für beide Kupplungsanordnungen bzw. deren Reibbeläge minimiert.

Die Reduzierung von Reibarbeit an den Kupplungsanordnungen ist vor allem auch für trockenlaufende Kupplungsanordnungen einer Mehrfach-Kupplungseinrichtung, insbesondere Doppelkupplung, von Interesse, um die Reibbeläge zu schonen und die Lebensdauer der Reibbeläge zu verlängern. Nach einem herkömmlichen Ansatz wird der Vorteil des Doppelkupplungsgetriebes, nämlich die zugkraft- bzw. schubkraftunterbrechungsfreie Schaltung desselben, unabhängig von der Fahrsituation stets genutzt, indem die bekannte "Überschneidungsschaltung" durchgeführt wird, bei der gleichzeitig die eine Kupplungsanordnung geschlossen und die andere Kupplungsanordnung geöffnet wird, wobei auf beiden Getriebeeingangswellen jeweils ein Gang eingelegt ist, nämlich auf der einen Getriebeeingangswelle der Ausgangsgang und auf der anderen Getriebeeingangswelle der Zielgang. Die während der Drehmomentübertragung von der einen auf die andere Kupplungsanordnung entstehende Reibenergie führt zu Belagverschleiß und Wärmeeintrag in die Kupplungsanordnungen, ggf. die Druckplatten. Es wurde erkannt, dass es nicht erforderlich ist, diesen prinzipiellen Schaltablauf unabhängig von der Fahrsituation durchzuführen. Verzichtet man auf die Zugkraft-Unterbrechungsfreiheit bzw. Schubkraft-Unterbrechungsfreiheit für gewisse Schaltsituationen, so resultiert eine entsprechende Entlastung der Reibbeläge.

Mit dem eine Schub-Rück-Schaltung angebenden Schaltablauf der Fig. 15 soll noch ein weiteres Beispiel zum den Ausführungsbeispielen der Fig. 7 bis 10 zugrunde liegenden Thema, nämlich der Reduzierung der Reibarbeit durch Reduzierung der Länge einer Überschneidungsschaltungsphase (sofern eine solche bei Schub-Rück-Schaltungen überhaupt noch vorgesehen ist), mit einer gegenüber der Überschneidungsschaltungsphase längeren Übergangsphase, gegeben werden. Für das Ausführungsbeispiel der Fig. 15 gelten die Prämissen und die Nomenklatur, wie oben in Bezug auf die Fig. 7 bis 9 angegeben).

Gemäß Fig. 15 wird in Phase II die aus einer Rückschaltung unter Schubbedingungen im Wege einer Überschneidungsschaltung sich ergebenden Änderung (Vergrößerung) des motorbedingten, auf die angetriebenen Fahrzeugräder wirkenden Bremsmoments und damit der betragsmäßigen Vergrößerung der negativen Fahrzeuglängsbeschleunigung durch entsprechende Betätigung der Fahrzeugbremsen gewissermaßen schon vorweggenommen. Gemäß dem gestrichelt dargestellten Motormoment könnte zusätzlich auch ein negativer Momentbeitrag von einem Kurbelwellenstartergenerator oder dergleichen eingestellt werden. Allgemein kann man ein entsprechendes negatives Moment durch entsprechende Betätigung/Ansteuerung der Momentenerzeugungsanordnung, insbesondere durch entsprechende Betätigung der Fahrzeugbremsen oder/und durch entsprechende Ansteuerung des Kurbelwellenstartergenerators, erzielen.

Gemäß dem Schaltablauf der Fig. 15 wird in Phase II das Bremsenmoment $M_{BR}$ linear erhöht, mit entsprechender Änderung der Fahrzeuglängsbeschleunigung. In Phase III wird dann die Überschneidungsschaltung durchgeführt, mit Umlagerung des Motorschleppmoments von der Getriebeeingangswelle 1 zur Getriebeeingangswelle 2. Es wird hierzu auf die durchgezogenen Kupplungsmomentkurven Bezug genommen. Wird zusätzlich der Kurbelwellenstartergenerator auf die beschriebene Weise eingesetzt, wird durch diesen gewissermaßen ein sich in Phase II betragsmäßig linear vergrößerndes "Antriebsschleppmoment" erzielt, und es muss die Momentübertragungsfähigkeit der Kupplung 1 zumindest soweit vergrößert, die Kupplungsanordnung 1 also zumindest soweit zunehmend eingerückt werden, dass das Gesamtschleppmoment aus Schleppmoment des Motors und Schleppmoment des Kurbelwellenstartergenerators gerade zur Getriebeeingangswelle 1 übertragen werden kann.

In Phase III wird dann das Bremsmoment und - soweit eingesetzt - das Schleppmoment des Kurbelwellenstartergenerators wieder reduziert, um den im Diagramm dargestellten Verlauf der Fahrzeuglängsbeschleunigung zu erhalten. Hierzu ist noch zu ergänzen, dass zwei Varianten dargestellt sind. Gemäß der durchgezogenen Längsbeschleunigungskurve, zu der die durchgezogene Momentkurve für die Kupplungsanordnung 2 gehört, wird eine sich über die Phasen II, III und IV erstreckende Übergangsphase erzielt. Gemäß der gestrichelt dargestellten Längsbeschleunigungskurve, zu der die gestrichelt dargestellte Momentkurve für die Kupplungsanordnung 2 gehört, erstreckt sich die Übergangsphase nur auf die Phasen II und III.

Das Ausführungsbeispiel der Fig. 15 soll vor allem exemplarisch zeigen, wie eine bremsenerzeugte Gradientenphase, die der eigentlichen Überschneidungsphase vorausgeht (oder dieser nachfolgt) eingesetzt werden kann, um eine gegenüber der Überschneidungsschaltungsphase deutlich verlängerte Übergangsphase zu erzielen.

**Patentansprüche**

1. Verfahren zum Betrieb eines zu einem Kraftfahrzeug gehörenden Antriebsstrangs, der aufweist:

   - eine Momentenerzeugungsanordnung (12, 50), die wenigstens eine Antriebseinheit (12), gegebenenfalls in Form einer Brennkraftmaschine (12), sowie gewünschtenfalls ein Hilfsaggregat (50) zur Erzeugung eines Hilfsmoments umfasst;
   - ein eine Synchronisiereinrichtung (52) aufweisendes Getriebe (18) mit wenigstens zwei Getriebeeingangswellen (20, 22) und wenigstens einer Getriebeausgangswelle (54), wobei eine erste Getriebeeingangswelle (20) wenigstens einem ersten Gang und eine zweite Getriebeeingangswelle (22) wenigstens einem zweiten Gang zugeordnet ist;
   - eine zwischen der Antriebseinheit (12) und dem Getriebe (18) angeordnete Mehrfach-Kupplungseinrichtung (24), gegebenenfalls Doppel-Kupplungseinrichtung (24), zur Momentenübertragung zwischen der Antriebseinheit (12) und dem Getriebe (18), die eine der ersten Getriebeeingangswelle (20) zugeordnete erste Kupplungsanordnung (26) und eine der zweiten Getriebeeingangswelle (22) zugeordnete zweite Kupplungsanordnung (28) aufweist;
   wobei die beiden Kupplungsanordnungen dahingehend unabhängig voneinander betätigbar sind, dass die eine Kupplungsanordnung im Sinne eines Einkuppelns oder Auskuppelns betätigbar ist und gleichzeitig die andere Kupplungsanordnung im Sinne eines Einkuppelns oder Auskuppelns betätigbar ist, und wobei zwischen ersten und zweiten Zug-Betriebszuständen derart unterschieden wird, dass zumindest in einem ersten Zug-Betriebszustand von den ersten und zweiten Zug-Betriebszuständen des Antriebsstrangs bzw. des Kraftfahrzeugs beim Schalten zwischen einem der einen Kupplungsanordnung (26, 28) zugeordneten ersten Gang und einem der zweiten Kupplungsanordnung (28, 26) zugeordneten zweiten Gang die Kupplungsanordnungen (26, 28) derart betätigt und die Momenterzeugungsanordnung (12, 50) derart angesteuert werden, dass wenigstens eines der folgenden Kriterien in Bezug auf einen das Schalten umfassenden Schaltablauf erfüllt ist:

      a) während des Schaltablaufs tritt an der Getriebeausgangswelle (54) oder abtriebsseitig derselben in einer Übergangsphase ein sich monoton änderndes, zumindest teilweise vom Getriebe (18) zur Getriebeausgangswelle (54) vermitteltes, auf das Fahrzeug im Sinne einer Beschleunigung oder Verzögerung wirkendes Moment auf, wobei vorzugsweise eine Differenz zwischen einem Momentwert am Anfang der Übergangsphase und einem Momentwert am Ende der Übergangsphase im Wesentlichen einer Übersetzungsänderung des Getriebes beim Schalten entspricht,
      b) während des Schaltablaufs bleibt das an der Getriebeausgangswelle (54) oder abtriebsseitig derselben auftretende, zumindest teilweise vom Getriebe (18) zur Getriebeausgangswelle (54) vermittelte Moment vor und nach der Übergangsphase im Wesentlichen konstant,
      c) während des Schaltablaufs wird über die Getriebeeingangswellen ein im Wesentlichen konstant bleibendes, zeitweilig einer Summe aus einem über die erste Getriebeeingangswelle eingeleiteten ersten Momentenbeitrag und einem über die zweite Getriebeeingangswelle eingeleiteten zweiten Momentenbeitrag entsprechendes Getriebeeingangsmoment in das Getriebe eingeleitet,
      d) während des Schaltablaufs wird eine im Wesentlichen monoton ansteigende oder im Wesentlichen monoton abfallende Fahrzeugbeschleunigung erreicht,

   und dass in einem zweiten Betriebszustand von den ersten und zweiten Zug-Betriebszuständen unter Verzicht auf die Erfüllung wenigstens eines der Kriterien a) bis d) in Bezug auf den Schaltablauf der Schaltablauf beim Schalten zwischen dem ersten Gang und dem zweiten Gang im Sinne eines Hochschaltens oder und im Sinne eines Herunterschaltens derart durchgeführt wird, dass eine Zugkraftunterbrechung auftritt.

2. Verfahren zum Betrieb eines zu einem Kraftfahrzeug gehörenden Antriebsstrangs, der aufweist:

   - eine Momentenerzeugungsanordnung (12, 50), die wenigstens eine Antriebseinheit (12), gegebenenfalls in Form einer Brennkraftmaschine (12), sowie gewünschtenfalls ein Hilfsaggregat (50) zur Erzeugung eines Hilfsmoments umfasst;

- ein eine Synchronisiereinrichtung (52) aufweisendes Getriebe (18) mit wenigstens zwei Getriebeeingangswellen (20, 22) und wenigstens einer Getriebeausgangswelle (54), wobei eine erste Getriebeeingangswelle (20) wenigstens einem ersten Gang und eine zweite Getriebeeingangswelle (22) wenigstens einem zweiten Gang zugeordnet ist;

- eine zwischen der Antriebseinheit (12) und dem Getriebe (18) angeordnete Mehrfach-Kupplungseinrichtung (24), gegebenenfalls Doppel-Kupplungseinrichtung (24), zur Momentenübertragung zwischen der Antriebseinheit (12) und dem Getriebe (18), die eine der ersten Getriebeeingangswelle (20) zugeordnete erste Kupplungsanordnung (26) und eine der zweiten Getriebeeingangswelle (22) zugeordnete zweite Kupplungsanordnung (28) aufweist;

wobei die beiden Kupplungsanordnungen dahingehend unabhängig voneinander betätigbar sind, dass die eine Kupplungsanordnung im Sinne eines Einkuppelns oder Auskuppelns betätigbar ist und gleichzeitig die andere Kupplungsanordnung im Sinne eines Einkuppelns oder Auskuppelns betätigbar ist, und wobei zwischen ersten und zweiten Schub-Betriebszuständen derart unterschieden wird, dass zumindest in einem ersten Schub-Betriebszustand von den ersten und zweiten Schub-Betriebszuständen des Antriebsstrangs bzw. des Kraftfahrzeugs beim Schalten zwischen einem der einen Kupplungsanordnung (26, 28) zugeordneten ersten Gang und einem der zweiten Kupplungsanordnung (28, 26) zugeordneten zweiten Gang die Kupplungsanordnungen (26, 28) derart betätigt und die Momenterenzeugungsanordnung (12, 50) derart angesteuert werden, dass wenigstens eines der folgenden Kriterien in Bezug auf einen das Schalten umfassenden Schaltablauf erfüllt ist:

a) während des Schaltablaufs tritt an der Getriebeausgangswelle (54) oder abtriebsseitig derselben in einer Übergangsphase ein sich monoton änderndes, zumindest teilweise vom Getriebe (18) zur Getriebeausgangswelle (54) vermitteltes, auf das Fahrzeug im Sinne einer Beschleunigung oder Verzögerung wirkendes Moment auf, wobei vorzugsweise eine Differenz zwischen einem Momentwert am Anfang der Übergangsphase und einem Momentwert am Ende der Übergangsphase im Wesentlichen einer Übersetzungsänderung des Getriebes beim Schalten entspricht,

b) während des Schaltablaufs bleibt das an der Getriebeausgangswelle (54) oder abtriebsseitig derselben auftretende, zumindest teilweise vom Getriebe (18) zur Getriebeausgangswelle (54) vermittelte Moment vor und nach der Übergangsphase im Wesentlichen konstant,

c) während des Schaltablaufs wird über die Getriebeeingangswellen ein im Wesentlichen konstant bleibendes, zeitweilig einer Summe aus einem über die erste Getriebeeingangswelle eingeleiteten ersten Momentenbeitrag und einem über die zweite Getriebeeingangswelle eingeleiteten zweiten Momentenbeitrag entsprechendes Getriebeeingangsmoment in das Getriebe eingeleitet,

d) während des Schaltablaufs wird eine im Wesentlichen monoton ansteigende oder im Wesentlichen monoton abfallende Fahrzeugbeschleunigung erreicht,

und dass in einem zweiten Betriebszustand von den ersten und zweiten Schub-Betriebszuständen unter Verzicht auf die Erfüllung wenigstens eines der kriterien a) bis d) in Bezug auf den Schaltablauf der Schaltablauf beim Schalten zwischen dem ersten Gang und dem zweiten Gang im Sinne eines Hochschaltens oder und im Sinne eines Herunterschaltens derart durchgeführt wird, dass eine Schubkraftunterbrechung auftritt.

3. Verfahren nach Anspruch 1 oder 2, **dadurch gekennzeichnet, dass** während des Schaltablaufs das Kriterium a) erfüllt ist.

4. Verfahren nach Anspruch 1 oder 2, **dadurch gekennzeichnet, dass** während des Schaltablaufs die Kriterien a) und b) gemeinsam erfüllt sind.

5. Verfahren nach einem der Ansprüche 1 bis 4, **dadurch gekennzeichnet, dass** während des Schaltablaufs das Kriterium c) erfüllt ist.

6. Verfahren nach einem der Ansprüche 1 bis 5, **dadurch gekennzeichnet, dass** während des Schaltablaufs das Kriterium d) erfüllt ist.

7. Verfahren nach einem der Ansprüche 1 bis 6, **dadurch gekennzeichnet, dass** das wenigstens eine Kriterium beim Hochschalten von einem niedrigeren Gang zu einem höheren Gang erfüllt ist.

8. Verfahren nach einem der Ansprüche 1 bis 7, **dadurch gekennzeichnet, dass** das wenigstens eine Kriterium beim Herunterschalten von einem höheren Gang zu einem niedrigeren Gang erfüllt ist.

9. Verfahren nach einem der Ansprüche 1 bis 8, **dadurch gekennzeichnet, dass** das wenigstens eine Kriterium sowohl im Zug-Betriebszustand als auch im Schub-Betriebszustand erfüllt ist.

10. Verfahren nach einem der Ansprüche 7 bis 9, **dadurch gekennzeichnet, dass** der Schaltablauf vor dem Einlegen des Zielgangs eine Betätigung der dem Zielgang zugordneten Kupplungsanordnung im Sinne eines weitgehenden oder vollständigen Auskuppelns umfasst (Phase I).

11. Verfahren nach einem der Ansprüche 7 bis 10, **dadurch gekennzeichnet, dass** der Schaltablauf vor oder/und während dem Einlegen des Zielgangs eine Betätigung der dem Ausgangsgang zugeordneten Kupplungsanordnung im Sinne einer Reduktion des von der Kupplungsanordnung übertragbaren Moments umfasst (Phase II).

12. Verfahren nach Anspruch 11, **dadurch gekennzeichnet, dass** in dem Zug-Betriebszustand das von der Kupplungsanordnung übertragbare Moment auf einen Wert eingestellt wird, der etwa dem momentan oder vorausgehend von der Momentenerzeugungsanordnung bereitgestellten Moment entspricht (Phase II).

13. Verfahren nach Anspruch 11 oder 12, **dadurch gekennzeichnet, dass** in dem Schub-Betriebszustand das von der Kupplungsanordnung übertragbare Moment auf einen Wert eingestellt wird, der betragsmäßig unter dem momentan oder vorausgehend von der Momentenerzeugungsanordnung bereitgestellten Moment liegt (Phase II).

14. Verfahren nach einem der Ansprüche 7 bis 13, **dadurch gekennzeichnet, dass** der Schaltablauf vor oder/und während oder/und nach dem Einlegen des Zielgangs eine Ansteuerung der Momentenerzeugungsanordnung im Sinne einer Erhöhung oder Verringerung eines von der Momentenerzeugungsanordnung bereitgestellten Moments umfasst **(Phasen II, III).**

15. Verfahren nach einem der Ansprüche 7 bis 14, **dadurch gekennzeichnet, dass** ein Momentenbeitrag aufgrund einer im Zuge des Einlegens des Zielgangs auftretenden Beschleunigung oder Abbremsung einer Drehmassenanordnung kompensiert wird durch Einstellung eines entsprechenden Kompensationsmomentenbeitrags der Momentenerzeugungsanordnung oder/und durch entsprechende Betätigung der dem Ausgangsgang zugeordneten Kupplungsanordnung **(Phase II).**

16. Verfahren nach einem der Ansprüche 7 bis 15, **dadurch gekennzeichnet, dass** die dem Ausgangsgang zugeordnete Kupplungsanordnung in einen Schlupfzustand gebracht wird und danach die dem schon eingelegten Zielgang zugeordnete Kupplungsanordnung im Sinne eines Einkuppelns und die dem Ausgangsgang zugeordnete Kupplungsanordnung im Sinne eines Auskuppelns betätigt wird (Phasen II, III).

17. Verfahren nach Anspruch 16, **dadurch gekennzeichnet, dass** die Betätigung der Kupplungsanordnungen aufeinander abgestimmt erfolgt, derart, dass ein von den Kupplungsanordnungen insgesamt übertragenes Moment im Wesentlichen konstant bleibt (Phase III).

18. Verfahren nach Anspruch 16 oder 17, **dadurch gekennzeichnet, dass** die Betätigung der Kupplungsanordnungen aufeinander abgestimmt erfolgt, derart, dass eine gewählte Schlupfdrehzahl konstant gehalten wird (Phase III).

19. Verfahren nach Anspruch 17 oder 18, **dadurch gekennzeichnet, dass** die dem Zielgang zugeordnete Kupplungsanordnung gesteuert im Sinne des Einkuppelns betätigt wird und die dem Ausgangsgang zugeordnete Kupplungsanordnung geregelt im Sinne des Auskuppelns betätigt wird (Phase III).

20. Verfahren nach Anspruch 17 oder 18, **dadurch gekennzeichnet, dass** die dem Ausgangsgang zugeordnete Kupplungsanordnung gesteuert im Sinne des Auskuppelns betätigt wird und die dem Zielgang zugeordnete Kupplungsanordnung geregelt im Sinne des Einkuppelns betätigt wird (Phase III).

21. Verfahren nach einem der Ansprüche 7 bis 20, **dadurch gekennzeichnet, dass** in dem Zug-Betriebszustand im Zuge oder nach einer Einstellung des von der dem Zielgang zugeordneten Kupplungsanordnung übertragbaren Moments auf einen Wert, der etwa dem momentan oder vorausgehend von der Momentenerzeugungsanordnung bereitgestellten Moment entspricht, die Momentenerzeugungsanordnung im Sinne einer Absenkung des von dieser bereitgestellten Moments angesteuert wird, um eine Drehzahl der Momentenerzeugungsanordnung an eine Drehzahl der dem Zielgang zugeordneten Getriebeeingangswelle zumindest anzunähern (Phase IV).

22. Verfahren nach einem der Ansprüche 7 bis 21, **dadurch gekennzeichnet, dass** in dem Schub-Betriebszustand im Zuge oder nach einer Einstellung des von der dem Zielgang zugeordneten Kupplungsanordnung übertragbaren Moments auf einen Wert, der etwa dem momentan oder vorausgehend von der Momentenerzeugungsanordnung bereitgestellten Moment entspricht, die Momentenerzeugungsanordnung derart angesteuert oder/und die dem Zielgang zugeordnete Kupplungsanordnung derart betätigt wird, dass das von dieser Kupplungsanordnung übertragbare Moment betragmäßig größer ist als ein von der Momentenerzeugungsanordnung gleichzeitig bereitgestelltes Moment, um eine Drehzahl der Momentenerzeugungsanordnung an eine Drehzahl der dem Zielgang zugeordneten Getriebeeingangswelle zumindest anzunähem (Phase IV).

23. Verfahren nach Anspruch 21 oder 22, **dadurch gekennzeichnet, dass** ein Momentenbeitrag aufgrund einer im Zuge der Annäherung der Drehzahlen auftretenden Beschleunigung oder Abbremsung einer Drehmassenanordnung kompensiert wird, gegebenenfalls durch Einstellung eines entsprechenden Kompensationsmomentenbeitrags der Momentenerzeugungsanordnung (Phase IV).

24. Verfahren nach einem der Ansprüche 21 bis 23, **dadurch gekennzeichnet, dass** im Zuge oder nach der Annäherung der Drehzahl der Momentenerzeugungsanordnung an die Drehzahl der dem Zielgang zugeordneten Getriebeeingangswelle die dem Zielgang zugeordnete Kupplungsanordnung im Wesentlichen vollständig eingekuppelt wird (Phase V).

25. Verfahren nach einem der Ansprüche 21 bis 24, **dadurch gekennzeichnet, dass** im Zuge oder nach der Annäherung der Drehzahl der Momentenerzeugungsanordnung an die Drehzahl der dem Zielgang zugeordneten Getriebeeingangswelle die dem Ausgangsgang zugeordnete Kupplungsanordnung zumindest soweit eingekuppelt wird, dass eine Drehzahl der dem Ausgangsgang zugeordneten Getriebeeingangswelle an die Drehzahl der dem Zielgang zugeordneten Getriebeeingangswelle zumindest angenähert wird (Phase V).

26. Verfahren nach Anspruch 25, **dadurch gekennzeichnet, dass** ein Momentenbeitrag aufgrund einer im Zuge der Annäherung der Drehzahlen auftretenden Beschleunigung oder Abbremsung einer Drehmassenanordnung kompensiert wird durch Einstellung eines entsprechenden Kompensationsmomentenbeitrags der Momentenerzeugungsanordnung (Phase V).

27. Verfahren nach einem der Ansprüche 21 bis 26, **dadurch gekennzeichnet, dass** im Zuge oder nach der Annäherung der Drehzahl der Momentenerzeugungsanordnung an die Drehzahl der dem Zielgang zugeordneten Getriebeeingangswelle die Momentenerzeugungsanordnung derart angesteuert wird, dass diese ein Moment bereitstellt, dass dem von der Momentenerzeugungsanordnung vor dem Schaltablauf bereitgestellten zumindest näherungsweise entspricht (Phase V).

28. Verfahren nach einem der Ansprüche 1 bis 27, **dadurch gekennzeichnet, dass** das von der Momentenerzeugungsanordnung bereitgestellte Moment in wenigstens einer Schaltablaufphase (Phasen II, III, IV, V) einen von der Antriebseinheit bereitgestellten Momentenbeitrag und einen von dem Hilfsaggregat bereitgestellten Momentenbeitrag umfasst.

29. Verfahren nach Anspruch 28, **dadurch gekennzeichnet, dass** beide Beiträge positiv sind oder dass beide Beiträge negativ sind oder dass ein Beitrag positiv und der andere Beitrag negativ ist.

30. Verfahren nach einem der Ansprüche 1 bis 29, **dadurch gekennzeichnet, dass** als Hilfsaggregat ein Kurbelwellenstartergenerator (50) oder/und eine Bremsenanordnung verwendet wird.

31. Verfahren nach einem der Ansprüche 1 bis 30, **dadurch gekennzeichnet, dass** die Übergangsphase im Wesentlichen von einer Überschneidungsschaltungsphase (Phase III in Fig. 2, 3 und 5) gebildet ist, in der die Kupplungsanordnungen gegenläufig betätigt werden, um ein zwischen der Antriebseinheit und dem Getriebe zu übertragendes Moment von der dem Ausgangsgang zugeordneten Getriebeeingangswelle zu der dem Zielgang zugeordneten Getriebeeingangswelle zu verlagern.

32. Verfahren nach einem der Ansprüche 1 bis 30, **dadurch gekennzeichnet, dass** die Übergangsphase im Wesentlichen gebildet ist von einer Überschneidungsschaltungsphase (Phase III in Fig. 4; Phase B), in der die Kupplungsanordnungen gegenläufig betätigt werden, um ein zwischen der Antriebseinheit und dem Getriebe zu übertragendes Moment von der dem Ausgangsgang zugeordneten Getriebeeingangswelle zu der dem Zielgang zugeordneten Getriebeeingangswelle zu verlagern, sowie von einer der Überschneidungsschaltungsphase vorausgehenden Gradientenphase (Phase 11 in Fig. 4; Phase A) oder/und einer der Überschneidungsschaltungsphase nachfolgenden Gradientenphase (Phase C), in der eine monotone Änderung des auf das Fahrzeug wirkenden Moments, gegebenenfalls des an der Getriebeausgangswelle auftretenden Moments, bewirkt wird durch entsprechende Ansteuerung der Momentenerzeugungsanordnung oder/und durch entsprechende Betätigung der dem Ausgangsgang bzw. dem Zielgang zugeordneten Kupplungsanordnung.

33. Verfahren nach Anspruch 31 oder 32, **dadurch gekennzeichnet, dass** in der Überschneidungsschaltungsphase (Phase B) die Kupplungsanordnungen derart angesteuert werden, dass eine streng monotone, vorzugsweise eine zumindest näherungsweise lineare Änderung des an der Getriebeausgangswelle auftretenden Moments erreicht wird.

34. Verfahren nach Anspruch 32 und 33, **dadurch gekennzeichnet, dass** in der der Überschneidungsschaltungsphase (Phase B) vorausgehenden Gradientenphase (Phase A) oder/und in der der Überschneidungsschaltungsphase nachfolgenden Gradientenphase (Phase C) die Momentenerzeugungsanordnung derart angesteuert oder/und die dem Ausgangsgang bzw. dem Zielgang zugeordnete Kupplungsanordnung derart betätigt wird, dass eine streng monotone, vorzugsweise eine zumindest näherungsweise lineare Änderung des auf das Fahrzeug wirkenden, gegebenenfalls an der Getriebeausgangswelle auftretenden Moments erreicht wird.

35. Verfahren nach Anspruch 34, **dadurch gekennzeichnet**, **dadurch gekennzeichnet, dass** die Ansteuerung bzw. Betätigung derart ist, dass über die ganze Übergangsphase (Phase A+B+C; Phase II+III in Fig. 4; Phase B+C) eine streng monotone, vorzugsweise eine zumindest näherungsweise lineare Änderung des auf das Fahrzeug wirkenden, gegebenenfalls an der Getriebeausgangswelle auftretenden Moments erreicht wird.

36. Verfahren nach einem der Ansprüche 32 bis 35, **dadurch gekennzeichnet, dass** die monotone, gegebenenfalls streng monotone oder lineare Änderung des auf das Fahrzeug wirkenden, gegebenenfalls an der Getriebeausgangswelle auftretenden Moments in der der Überschneidungsschaltungsphase (Phase B) vorausgehenden Gradientenphase (Phase A) oder/und in der der Überschneidungsschaltungsphase nachfolgenden Gradientenphase (Phase C) eingestellt wird auf Grundlage einer sich aus der Änderung der Getriebeübersetzung beim Schalten ergebenen Änderung eines an der Getriebeausgangswelle auftretenden Moments.

37. Verfahren nach Anspruch 36, **dadurch gekennzeichnet, dass** die monotone, gegebenenfalls streng monotone oder lineare Änderung des auf das Fahrzeug wirkenden, gegebenenfalls an der Getriebeausgangswelle auftretenden Moments in der betreffenden Gradientenphase (Phase A bzw. C) eingestellt wird unter Zugrundelegung eines Momenten-Sollgradienten oder Beschleunigungs-Sollgradienten oder/und einer vorgegebenen Zeitdauer für die Überschneidungsschaltungsphase oder/und einer vorgegebenen Zeitdauer für die betreffende Gradientenphase oder/und einer vorgegebenen Zeitdauer für die Übergangsphase oder/und einer dem Ausgangsgang zugeordneten Getriebeübersetzung oder/und einer dem Zielgangsgang zugeordneten Getriebeübersetzung oder/und eines momentanen Antriebsmoments oder Schleppmoments der Antriebseinheit oder/und eines gewünschten Antriebsmoments oder Schleppmoments der Antriebseinheit.

38. Verfahren nach einem der Ansprüche 32 bis 37, **dadurch gekennzeichnet, dass** beim Hochschalten von einem niedrigeren Gang zu einem höheren Gang im Zug-Betriebszustand ein von der Antriebseinheit bereitgestelltes Antriebsmoment oder/und das von der dem Ausgangsgang zugeordneten Kupplungsanordnung übertragene oder übertragbare Moment in der der Überschneidungsschaltungsphase (Phase B) vorausgehenden Gradientenphase (Phase A) monoton, vorzugsweise streng monoton, höchstvorzugsweise linear, von einem Ausgangswert auf einen Zwischenwert abgesenkt wird.

39. Verfahren nach Anspruch 38, **dadurch gekennzeichnet, dass** in der Überschneidungsschaltungsphase (Phase B) das von der Antriebseinheit bereitgestellte Antriebsmoment von dem Zwischenwert monoton, vorzugsweise streng monoton, höchstvorzugsweise linear, angehoben wird.

40. Verfahren nach Anspruch 39, **dadurch gekennzeichnet, dass** das von der Antriebseinheit bereitgestellte Antriebsmoment in der Überschneidungsschaltungsphase (Phase B) auf einen weiteren Zwischenwert oberhalb des Ausgangswerts angehoben wird und vorzugsweise im Verlauf der der Überschneidungsschaltungsphase nachfolgenden Gradientenphase (Phase C) von dem weiteren Zwischenwert auf einen gewünschtenfalls dem Ausgangswert zumindest näherungsweise entsprechenden Endwert gebracht wird.

41. Verfahren nach Anspruch 40, **dadurch gekennzeichnet, dass** das von der Antriebseinheit bereitgestellte Antriebsmoment in der der Überschneidungsschaltungsphase nachfolgenden Gradientenphase (Phase C) von dem weiteren Zwischenwert zuerst auf einen Wert unter dem Ausgangswert gebracht wird und dann auf den Endwert angehoben wird oder/und dass ein von der dem Zielgang zugeordneten Kupplungsanordnung übertragenes oder übertragbares Moment in der der Überschneidungsschaltungsphase nachfolgenden Gradientenphase (Phase C) von dem/einem Zwischenwert am Ende der Überschneidungsschaltungsphase zuerst monoton, vorzugsweise streng monoton, höchstvorzugsweise linear, abgesenkt wird, und dann gegebenenfalls wieder angehoben wird, insbesondere nachdem das von der Antriebseinheit bereitgestellte Moment den Endwert erreicht hat.

**42.** Verfahren nach einem der Ansprüche 32 bis 41, **dadurch gekennzeichnet, dass** beim Herunterschalten von einem höheren Gang zu einem niedrigeren Gang im Zug-Betriebszustand ein von der Antriebseinheit bereitgestelltes Antriebsmoment oder/und das von der dem Ausgangsgang zugeordneten Kupplungsanordnung übertragene oder übertragbare Moment in der der Überschneidungsschaltungsphase (Phase B) vorausgehenden Gradientenphase (Phase A) monoton, vorzugsweise streng monoton, höchstvorzugsweise linear, von einem Ausgangswert auf einen Zwischenwert angehoben wird.

**43.** Verfahren nach Anspruch 42, **dadurch gekennzeichnet, dass** in der Überschneidungsschaltungsphase (Phase B) das von der Antriebseinheit bereitgestellte Antriebsmoment von dem Zwischenwert monoton, vorzugsweise streng monoton, höchstvorzugsweise linear, abgesenkt wird.

**44.** Verfahren nach Anspruch 43, **dadurch gekennzeichnet, dass** das von der Antriebseinheit bereitgestellte Antriebsmoment in der Überschneidungsschaltungsphase (Phase B) auf einen weiteren Zwischenwert unterhalb des Ausgangswerts abgesenkt wird und vorzugsweise im Verlauf der der Überschneidungsschaltungsphase nachfolgenden Gradientenphase (Phase C) von dem weiteren Zwischenwert auf einen gewünschtenfalls dem Ausgangswert zumindest näherungsweise entsprechenden Endwert gebracht wird.

**45.** Verfahren nach Anspruch 44, **dadurch gekennzeichnet, dass** ein von der dem Zielgang zugeordneten Kupplungsanordnung übertragenes oder übertragbares Moment in der der Überschneidungsschaltungsphase (Phase B) nachfolgenden Gradientenphase (Phase C) von dem/einem Zwischenwert am Ende der Überschneidungsschaltungsphase monoton, vorzugsweise streng monoton, höchstvorzugsweise linear auf einen weiteren, gegebenenfalls dem Endwert entsprechenden Zwischenwert angehoben wird, und dann gegebenenfalls weiter angehoben wird, insbesondere nachdem das von der Antriebseinheit bereitgestellte Moment den Endwert erreicht hat.

**46.** Verfahren nach einem der Ansprüche 32 bis 45, **dadurch gekennzeichnet, dass** beim Herunterschalten von einem höheren Gang zu einem niedrigeren Gang im Schub-Betriebszustand ein von der Antriebseinheit aufgebrachtes Schleppmoment in der Überschneidungsschaltungsphase (Phase B) von einem Ausgangswert monoton, vorzugsweise streng monoton, höchstvorzugsweise linear, auf einen Zwischenwert reduziert wird.

**47.** Verfahren nach Anspruch 46, **dadurch gekennzeichnet, dass** das von der Antriebseinheit aufgebrachte Schleppmoment im Verlauf der der Überschneidungsschaltungsphase (Phase B) nachfolgenden Gradientenphase (Phase C) von dem Zwischenwert zuerst weiter reduziert und dann auf einen gewünschtenfalls dem Ausgangswert zumindest näherungsweise entsprechenden Endwert gebracht wird.

**48.** Verfahren nach Anspruch 47, **dadurch gekennzeichnet, dass** ein von der dem Zielgang zugeordneten Kupplungsanordnung übertragenes oder übertragbares Moment in der der Überschneidungsschaltungsphase (Phase B) nachfolgenden Gradientenphase (Phase C) von einem Zwischenwert am Ende der Überschneidungsschaltungsphase monoton, vorzugsweise streng monoton, höchstvorzugsweise linear auf einen weiteren, gegebenenfalls betragsmäßig dem Endwert entsprechenden Zwischenwert angehoben wird, und dann gegebenenfalls weiter angehoben wird, insbesondere nachdem das von der Antriebseinheit aufgebrachte Schleppmoment den Endwert erreicht hat.

**49.** Verfahren nach einem der Ansprüche 32 bis 48, **dadurch gekennzeichnet, dass** beim Hochschalten von einem niedrigeren Gang zu einem höheren Gang im Schub-Betriebszustand ein von der Antriebseinheit aufgebrachtes Schleppmoment in der der Überschneidungsschaltungsphase vorausgehenden Gradientenphase monoton, vorzugsweise streng monoton, höchstvorzugsweise linear, von einem Ausgangswert auf einen Zwischenwert reduziert wird oder/und dass das von der dem Ausgangsgang zugeordneten Kupplungsanordnung übertragene oder übertragbare Moment in der der Überschneidungsschaltungsphase (Phase III in Fig. 4) vorausgehenden Gradientenphase (Phase II in Fig. 4) monoton, vorzugsweise streng monoton, höchstvorzugsweise linear, von einem Ausgangswert auf einen Zwischenwert abgesenkt wird.

**50.** Verfahren nach Anspruch 49, **dadurch gekennzeichnet, dass** das von der dem Ausgangsgang zugeordneten Kupplungsanordnung übertragbare Moment in der Gradientenphase (Phase II in Fig. 4) betragsmäßig unter das von der Antriebseinheit aufgebrachte Schleppmoment abgesenkt wird.

51. Verfahren nach einem der Ansprüche 1 bis 50, **dadurch gekennzeichnet, dass** die Übergangsphase zumindest teilweise gebildet ist von einer Bremsphase, in der eine monotone Änderung des auf das Fahrzeug wirkenden Moments bewirkt wird durch entsprechende Betätigung einer/der Bremsenanordnung des Fahrzeugs, ggf. der auf die Laufräder des Fahrzeugs wirkenden Fahrzeugbremsen, vorzugsweise zumindest in einer Teilphase der Bremsphase in Abstimmung auf eine Betätigung wenigstens einer der Kupplungsanordnungen.

52. Verfahren nach Anspruch 51 sowie nach Anspruch 32, **dadurch gekennzeichnet, dass** die der Überschneidungsschaltungsphase vorausgehende Gradientenphase oder/und die der Überschneidungsschaltungsphase nachfolgende Gradientenphase zumindest teilweise von einer Bremsphase gebildet ist oder/und dass die Überschneidungsschaltungsphase eine Bremsphase umfasst oder sich mit einer Bremsphase überlappt.

53. Verfahren nach einem der Ansprüche 1 bis 52, **dadurch gekennzeichnet, dass** ein in einem Schub-Betriebszustand auftretendes Bremsmoment der Antriebseinheit in wenigstens einer Phase (Phasen II und III in Fig. 11 bis 13) des Schaltablaufs durch ein von einer/der Bremsenanordnung des Fahrzeugs, vorzugsweise durch ein von den auf die Laufräder des Fahrzeugs wirkenden Fahrzeugbremsen, aufgebrachtes Ersatz-Bremsmoment zumindest teilweise substituiert wird.

54. Verfahren nach Anspruch 53, **dadurch gekennzeichent, dass** eine Substitution derart vorgesehen ist, dass aufeinander abgestimmt i) die zuvor das Bremsmoment der Antriebseinheit in das Getriebe einleitende, dem Ausgangsgang zugeordnete Kupplungsanordnung im Sinne eines Ausrückens und ii) die Bremsenanordnung im Sinne einer Erzeugung des Ersatz-Bremsmoments betätigt wird.

55. Verfahren nach Anspruch 54, **dadurch gekennzeichnet, dass** zumindest anfänglich dass Ersatz-Bremsmoment dem zuvor von der der dem Ausgangsgang zugeordneten Kupplungsanordnung übertragenen Bremsmoment im Wesentlichen entspricht, wobei diese Kupplungsanordnung in Folge der Betätigung im Sinne des Ausrückens vorzugsweise kein wesentliches Moment mehr überträgt, oder dass zumindest anfänglich ein Summen-Bremsmoment aus dem Ersatz-Bremsmoment und einem von der dem Ausgangsgang zugeordneten Kupplungsanordnung noch übertragenen Rest-Moment im Wesentlichen dem zuvor von der der dem Ausgangsgang zugeordneten Kupplungsanordnung übertragenen Bremsmoment entspricht.

56. Verfahren nach einem der Ansprüche 53 bis 55, **dadurch gekennzeichnet, dass** das Ersatz-Bremsmoment kontinuierlich reduziert wird, abgestimmt auf eine Betätigung der dem Zielgang zugeordneten Kupplungsanordnung im Sinne eines Einrückens oder/und auf eine Änderung eines von der Antriebseinheit bereitgestellten momentanen Moments im Sinne einer Reduzierung eines positiven momentanen Antriebsmoments der Antriebseinheit bzw. im Sinne einer Vergrößerung eines momentanen Bremsmoments der Antriebseinheit.

57. Verfahren nach Anspruch 56, **dadurch gekennzeichnet, dass** die Reduzierung des Ersatz-Bremsmoments derart erfolgt, dass sich das insgesamt auf das Fahrzeug wirkende Bremsmoment aufgrund des von der Antriebseinheit bereitgestellten momentanen Moments und der momentanen Bremswirkung der Bremsenanordnung monoton, vorzugsweise streng monoton ändert.

58. Verfahren nach Anspruch 57, **dadurch gekennzeichnet, dass** das Ersatz-Bremsmoment entsprechend einer kontinuierlichen Änderung des über die Kupplungseinrichtung in das Getriebe eingeleiteten Moments aufgrund des von der Antriebseinheit bereitgestellten Moments reduziert wird und vorzugsweise dann im Wesentlichen verschwindet, wenn die dem Zielgang zugeordnete Kupplungsanordnung im Wesentlichen vollständig das oder ein vorgegebenes Bremsmoment der Antriebseinheit überträgt.

59. Verfahren nach einem der Ansprüche 53 bis 58, **dadurch gekennzeichnet, dass** im Schub-Betriebszustand in Vorbereitung eines Herunterschaltens von einem höheren Gang zu einem niedrigeren Gang in einer Vorbereitungsphase des Schaltablaufs die dem Ausgangsgang zugeordnete Kupplungsanordnung im Wesentlichen vollständig ausgerückt, die Antriebseinheit zur Bereitstellung eines positiven Antriebsmoments angesteuert und die dem Zielgang zugeordnete Kupplungsanordnung in einen ein Beschleunigungsmoment übertragenden, einer teilweisen Einrückung der Kupplungsanordnung entsprechenden Teileinrückzustand gebracht wird, derart, dass die dem Zielgang zugeordnete Getriebeeingangswelle unter Vermittlung dieser Kupplungsanordnung auf Grundlage des positiven Antriebsmoments gemeinsam mit der Antriebseinheit selbst in Richtung einer dem Zielgang zugeordneten Synchrondrehzahl hochbeschleunigt wird.

60. Verfahren nach Anspruch 59, **dadurch gekennzeichnet, dass** der Zielgang dann eingelegt wird, wenn die Drehzahl der dem Zielgang zugeordneten Getriebeeingangswelle die Synchrondrehzahl im Wesentlichen erreicht oder sich entsprechend einem vorgegebenen Schwellen-Differenzdrehzahlintervall der Synchrondrehzahl angenähert hat.

61. Verfahren nach Anspruch 60, **dadurch gekennzeichnet, dass** spätestens nach dem Einlegen des Zielgangs die Antriebseinheit im Sinne einer Reduzierung des positiven Antriebsmoments und der Bereitstellung eines Bremsmoments angesteuert wird, wobei vorzugsweise das von der Antriebseinheit bereitgestellte Moment koninuierlich geändert wird, bis das bereitgestellte Bremsmoment einen vorgegebenen Wert, ggf. den zu Beginn des Schaltablaufs herrschenden Wert, erreicht hat.

62. Antriebsstrang, gegebenenfalls in einem Kraftfahrzeug, wobei der Antriebsstrang umfasst:

- eine Momentenerzeugungsanordnung (12, 50), die wenigstens eine Antriebseinheit (12), gegebenenfalls in Form einer Brennkraftmaschine (12), sowie gewünschtenfalls ein Hilfsaggregat (50) zur Erzeugung eines Hilfsmoments umfasst;
- ein eine Synchronisiereinrichtung (52) aufweisendes Getriebe (18) mit wenigstens zwei Getriebeeingangswellen (20, 22) und wenigstens einer Getriebeausgangswelle (54), wobei eine erste Getriebeeingangswelle (20) wenigstens einem ersten Gang und eine zweite Getriebeeingangswelle (22) wenigstens einem zweiten Gang zugeordnet ist;
- eine zwischen der Antriebseinheit (12) und dem Getriebe (18) angeordnete Mehrfach-Kupplungseinrichtung (24), gegebenenfalls Doppel-Kupplungseinrichtung (24), zur Momentenübertragung zwischen der Antriebseinheit (12) und dem Getriebe (18), die eine der ersten Getriebeeingangswelle (20) zugeordnete erste Kupplungsanordnung (26) und eine der zweiten Getriebeeingangswelle (22) zugeordnete zweite Kupplungsanordnung (28) aufweist, wobei die beiden Kupplungsanordnungen unabhängig voneinander betätigbar sind; mit einer dem Antriebsstrang zugeordneten Steuereinheit (36), wobei die Steuereinheit Mittel zur Ansteuerung der Momentenerzeugungsanordnung und zur Betätigung der Kupplungseinrichtung gemäß dem Verfahren nach einem der vorhergehenden Ansprüche aufweist.

63. Antriebsstrang nach Anspruch 62, **dadurch gekennzeichnet, dass** das Hitfsaggregat ein Kurbelwellenstartergenerator (50) ist oder/und eine Bremsenanordnung als Hilfsaggregat dient.

64. Antriebsstrang nach Anspruch 62 oder 63, **dadurch gekennzeichnet, dass** die Kupplungsanordnungen als nasslaufende Lamellenkupplungsanordungen (26, 28) ausgebildet sind.

65. Antriebsstrang nach Anspruch 62 oder 63, **dadurch gekennzeichnet, dass** die Kupplungsanordnungen als trok-kenlaufende Kupplungsanordnungen vorzugsweise der Reibscheibenbauart ausgeführt sind.

## Claims

1. Method for operating a drive train which belongs to a motor vehicle and which has:

- a torque generation arrangement (12, 50) which comprises at least one drive unit (12), if appropriate in the form of an internal combustion engine (12), and, if desired, an auxiliary assembly (50) for the generation of an auxiliary torque;
- a transmission (18) having a synchronizing device (52), with at least two transmission input shafts (20, 22) and with at least one transmission output shaft (54), a first transmission input shaft (20) being assigned to at least one first gear and a second transmission input shaft (22) being assigned to at least one second gear;
- a multiple clutch device (24), if appropriate a double clutch device (24), arranged between the drive unit (12) and the transmission (18), for torque transfer between the drive unit (12) and the transmission (18), which multiple clutch device has a first clutch arrangement (26) assigned to the first transmission input shaft (20) and a second clutch arrangement (28) assigned to the second transmission input shaft (22);
the two clutch arrangements being actuable independently of one another to the effect that one clutch arrangement can be actuated for coupling or uncoupling and, at the same time, the other clutch arrangement can be actuated for coupling or uncoupling, and a distinction being made between first and second traction operating states in such a way that, at least in a first traction operating state of the first and second traction operating states of the drive train or of the motor vehicle, during the shift between a first gear assigned to the one clutch arrangement (26, 28) and a second gear assigned to the second clutch arrangement (28, 26), the clutch arrangements (26, 28) are actuated such and the torque generation arrangement (12, 50) is activated such that at least one of the following criteria with regard to a shift sequence comprising the shift is fulfilled:

a) during the shift sequence, in a transition phase, a monotonically changing torque passed at least partially from the transmission (18) to the transmission output shaft (54) and acting on the vehicle with the effect of acceleration or deceleration occurs at the transmission output shaft (54) or on the driven side of the latter, preferably a difference between a torque value at the start of the transition phase and a torque value at the end of the transition phase corresponding essentially to a ratio change in the transmission during the shift,

b) during the shift sequence, the torque occurring at the transmission output shaft (54) or on the driven side of the latter and passed at least partially from the transmission (18) to the transmission output shaft (54) remains essentially constant before and after the transition phase,

c) during the shift sequence, a transmission input torque which remains essentially constant and corresponds temporarily to a sum of a first torque contribution introduced by the first transmission input shaft and a second torque contribution introduced via the second transmission input shaft is introduced into the transmission via the transmission input shafts,

d) during the shift sequence, an essentially monotonically rising or essentially monotonically falling vehicle acceleration is achieved,

and in such a way that, in a second operating state of the first and second traction operating states, dispensing with the fulfilment of at least one of the criteria a) to d) in respect of the shift sequence, during the shift between the first gear and the second gear with the effect of an upshift and/or with the effect of a downshift, the shift sequence is carried out in such a way that an interruption in tractive force occurs.

2. Method for operating a drive train which belongs to a motor vehicle and which has:

- a torque generation arrangement (12, 50) which comprises at least one drive unit (12), if appropriate in the form of an internal combustion engine (12), and, if desired, an auxiliary assembly (50) for the generation of an auxiliary torque;

- a transmission (18) having a synchronizing device (52), with at least two transmission input shafts (20, 22) and with at least one transmission output shaft (54), a first transmission input shaft (20) being assigned to at least one first gear and a second transmission input shaft (22) being assigned to at least one second gear;

- a multiple clutch device (24), if appropriate a double clutch device (24), arranged between the drive unit (12) and the transmission (18), for torque transfer between the drive unit (12) and the transmission unit (18), which multiple clutch device has a first clutch arrangement (26) assigned to the first transmission input shaft (20) and a second clutch arrangement (28) assigned to the second transmission input shaft (22);

the two clutch arrangements being actuable independently of one another to the effect that one clutch arrangement can be actuated with the effect of coupling or uncoupling and, at the same time, the other clutch arrangement can be actuated with the effect of coupling or uncoupling, and a distinction being made between first and second overrun operating states in such a way that, at least in a first overrun operating state of the first and second overrun operating states of the drive train or of the motor vehicle, during the shift between a first gear assigned to one clutch arrangement (26, 28) and a second gear assigned to the second clutch arrangement (28, 26), the clutch arrangements (26, 28) are actuated such and the torque generation arrangement (12, 50) is activated such that at least one of the following criteria in respect of a shift sequence comprising the shift is fulfilled:

a) during the shift sequence, in a transition phase, a monotonically changing torque passed at least partially from the transmission (18) to the transmission output shaft (54) and acting on the vehicle with the effect of acceleration or deceleration occurs at the transmission output shaft (54) or on the driven side of the latter, preferably a difference between a torque value at the start of the transition phase and a torque value at the end of the transition phase corresponding essentially to a ratio change of the transmission during the shift,

b) during the shift sequence, the torque occurring at the transmission output shaft (54) or on the driven side of the latter and passed at least partially from the transmission (18) to the transmission output shaft (54) remains essentially constant before and after the transition phase,

c) during the shift sequence, a transmission input torque which remains essentially constant and corresponds temporarily to a sum of a first torque contribution introduced by the first transmission input shaft and a second torque contribution introduced by the second transmission input shaft is introduced into the transmission via the transmission input shafts,

d) during the shift sequence, an essentially monotonically rising or essentially monotically falling vehicle acceleration is achieved,

and in such a way that, in a second operating state of the first and second overrun operating states, dispensing with the fulfilment of at least one of the criteria a) to d) with respect to the shift sequence, during the shift between the first gear and the second gear with the effect of an upshift and/or with the effect of a downshift, the shift sequence is carried out in such a way that an interruption in overrun force occurs.

3. Method according to Claim 1 or 2, **characterized in that**, during the shift sequence, criterion a) is fulfilled.

4. Method according to Claim 1 or 2, **characterized in that**, during the shift sequence, criteria a) and b) are jointly fulfilled.

5. Method according to one of Claims 1 to 4, **characterized in that**, during the shift sequence, criterion c) is fulfilled.

6. Method according to one of Claims 1 to 5, **characterized in that** during the shift sequence, criterion d) is fulfilled.

7. Method according to one of Claims 1 to 6, **characterized in that** the at least one criterion is fulfilled during the upshift from a lower gear to a higher gear.

8. Method according to one of Claims 1 to 7, **characterized in that** the at least one criterion is fulfilled during the downshift from a higher gear to a lower gear.

9. Method according to one of Claims 1 to 8, **characterized in that** the at least one criterion is fulfilled both in the traction operating state and in the overrun operating state.

10. Method according to one of Claims 7 to 9, **characterized in that** the shift sequence comprises, before the selection of the target gear, an actuation of the clutch arrangement assigned to the target gear, with the effect of substantial or complete uncoupling (phase I).

11. Method according to one of Claims 7 to 10, **characterized in that** the shift sequence comprises, before and/or during the selection of the target gear, an actuation of the clutch arrangement assigned to the initial gear, with the effect of a reduction of the torque transferable by the clutch arrangement (phase II).

12. Method according to Claim 11, **characterized in that**, in the traction operating state, the torque transferable by the clutch arrangement is set at a value which corresponds approximately to the torque provided instantaneously or previously by the torque generation arrangement (phase II).

13. Method according to Claim 11 or 12, **characterized in that**, in the overrun operating state, the torque transferable by the clutch arrangement is set at a value which, in terms of amount, lies below the torque provided instantaneously or previously by the torque generation arrangement (phase II).

14. Method according to one of Claims 7 to 13, **characterized in that** the shift sequence comprises, before and/or during and/or after the selection of the target gear, an activation of the torque generation arrangement with the effect of increasing or reducing a torque provided by the torque generation arrangement (phases II, III).

15. Method according to one of Claims 7 to 14, **characterized in that** a torque contribution on account of an acceleration or braking of a rotary-mass arrangement which occurs during the selection of the target gear is compensated by the setting of a corresponding compensation torque contribution of the torque generation arrangement and/or by the corresponding actuation of the clutch arrangement assigned to the initial gear (phase II).

16. Method according to one of Claims 7 to 15, **characterized in that** the clutch arrangement assigned to the initial gear is put into a slip state, and, thereafter, the clutch arrangement assigned to the target gear already selected is actuated with the effect of coupling and the clutch arrangement assigned to the initial gear is actuated with the effect of uncoupling (phases II, III).

17. Method according to Claim 16, **characterized in that** the actuation of the clutch arrangements takes place in coordination with one another, in such a way that an overall torque transferred by the clutch arrangements remains essentially constant (phase III).

**18.** Method according to Claim 16 or 17, **characterized in that** the actuation of the clutch arrangements takes place in coordination with one another, in such a way that a selected slip rotational speed is kept constant (phase III).

**19.** Method according to Claim 17 or 18, **characterized in that** the clutch arrangement assigned to the target gear is actuated under open loop control with the effect of coupling, and the clutch arrangement assigned to the initial gear is actuated under closed loop control with effect of uncoupling (phase III).

**20.** Method according to Claim 17 or 18, **characterized in that** the clutch arrangement assigned to the initial gear is actuated under open loop control with the effect of uncoupling, and the clutch arrangement assigned to the target gear is actuated under closed loop control with the effect of coupling (phase III).

**21.** Method according to one of claims 7 to 20, **characterized in that**, in the traction operating state, during or after a setting of the torque transferable by the clutch arrangement assigned to the target gear to a value which corresponds approximately to the torque provided instantaneously or previously by the torque generation arrangement, the torque generation arrangement is activated with the effect of lowering the torque provided by the latter, in order to at least approximate a rotational speed of the torque generation arrangement to a rotational speed of the transmission input shaft assigned to the target gear (phase IV).

**22.** Method according to one of Claims 7 to 21, **characterized in that**, in the overrun operating state, during or after a setting of the torque transferable by the clutch arrangement assigned to the target gear to a value which corresponds approximately to the torque provided instantaneously or previously by the torque generation arrangement, the torque generation arrangement is activated such and/or the clutch arrangement assigned to the target gear is actuated such that the torque transferable by this clutch arrangement is higher in terms of amount than a torque provided simultaneously by the torque generation arrangement, in order at least to approximate a rotational speed of the torque generation arrangement to a rotational speed of the transmission input shaft assigned to the target gear (phase IV).

**23.** Method according to Claim 21 or 22, **characterized in that** a torque contribution on account of an acceleration or braking of a rotary-mass arrangement which occurs during the approximation of the rotational speeds is compensated, if appropriate by setting a corresponding compensation torque contribution of the torque generation arrangement (phase IV).

**24.** Method according to one of Claims 21 to 23, **characterized in that**, during or after the approximation of the rotational speed of the torque generation arrangement to the rotational speed of the transmission input shaft assigned to the target gear, the clutch arrangement assigned to the target gear is coupled essentially completely (phase V).

**25.** Method according to one of Claims 21 to 24, **characterized in that**, during or after the approximation of the rotational speed of the torque generation arrangement to the rotational speed of the transmission input shaft assigned to the target gear, the clutch arrangement assigned to the initial gear is coupled at least to an extent such that a rotational speed of the transmission input shaft assigned to the initial gear is at least approximated to the rotational speed of the transmission input shaft assigned to the target gear (phase V).

**26.** Method according to Claim 25, **characterized in that** a torque contribution on account of an acceleration or braking of a rotary-mass arrangement which occurs during the approximation of the rotational speeds is compensated by setting a corresponding compensation torque contribution of the torque generation arrangement (phase V).

**27.** Method according to one of Claims 21 to 26, **characterized in that**, during or after the approximation of the rotational speed of the torque generation arrangement to the rotational speed of the transmission input shaft assigned to the target gear, the torque generation arrangement is activated in such a way that the latter provides a torque which corresponds at least approximately to that provided by the torque generation arrangement before the shift sequence (phase V).

**28.** Method according to one of Claims 1 to 27, **characterized in that**, in at least one shift-sequence phase (phases II, III, IV, V), the torque provided by the torque generation arrangement comprises a torque contribution provided by the drive unit and a torque contribution provided by the auxiliary assembly.

**29.** Method according to Claim 28, **characterized in that** both contributions are positive, or **in that** both contributions are negative, or **in that** one contribution is positive and the other contribution is negative.

30. Method according to one of Claims 1 to 29, **characterized in that** a crankshaft starter generator (50) and/or a brake arrangement is/are used as an auxiliary assembly.

31. Method according to one of Claims 1 to 30, **characterized in that** the transition phase is formed essentially by an overlap shift phase (phase III in Figs. 2, 3 and 5), in which the clutch arrangements are actuated contradirectionally, in order to displace a torque to be transferred between the drive unit and the transmission from the transmission input shaft assigned to the initial gear to the transmission input shaft assigned to the target gear.

32. Method according to one of Claims 1 to 30, **characterized in that** the transition phase is formed essentially by an overlap shift phase (phase III in Fig. 4; phase B), in which the clutch arrangements are actuated contradirectionally, in order to displace a torque to be transferred between the drive unit and the transmission from the transmission input shaft assigned to the initial gear to the transmission input shaft assigned to the target gear, and by a gradient phase (phase II in Fig. 4; phase A) preceding the overlap shift phase and/or by a gradient phase (phase C) which follows the overlap shift phase and in which a monotonic change of the torque acting on the vehicle, if appropriate of the torque occurring at the transmission output shaft, is brought about by a corresponding activation of the torque generation arrangement and/or by a corresponding actuation of the clutch arrangement assigned to the initial gear or to the target gear.

33. Method according to Claim 31 or 32, **characterized in that**, in the overlap shift phase (phase B), the clutch arrangements are activated in such a way that a strictly monotonic, preferably an at least approximately linear change in the torque occurring at the transmission output shaft is achieved.

34. Method according to Claims 32 and 33, **characterized in that**, in the gradient phase (phase A) preceding the overlap shift phase (phase B) and/or in the gradient phase (phase C) following the overlap shift phase, the torque generation arrangement is activated such and/or the clutch arrangement assigned to the initial gear or to the target gear is actuated such that a strictly monotonic, preferably an at least approximately linear change in the torque acting on the vehicle and occurring, if appropriate, at the transmission output shaft is achieved.

35. Method according to Claim 34, **characterized in that** the activation or actuation is such that, over the entire transition phase (phase A+B+C; phase II+III in Fig. 4, phase B+C), a strictly monotonic, preferably an at least approximately linear change in the torque acting on the vehicle and occurring, if appropriate, at the transmission output shaft is achieved.

36. Method according to one of Claims 32 to 35, **characterized in that**, in the gradient phase (phase A) preceding the overlap shift phase (phase B) and/or in the gradient phase (phase C) following the overlap shift phase, the monotonic, if appropriate strictly monotonic or linear change in the torque acting on the vehicle and occurring, if appropriate, at the transmission output shaft is set on the basis of a change in a torque occurring at the transmission output shaft, the said change resulting from the change in the transmission ratio during the shift.

37. Method according to Claim 36, **characterized in that** the monotonic, if appropriate strictly monotonic or linear change in the torque acting on the vehicle and occurring, if appropriate, at the transmission output shaft is set in the respective gradient phase (phase A or C) on the basis of a torque desired gradient or acceleration desired gradient and/or of a predetermined duration for the overlap shift phase and/or of a predetermined duration for the respective gradient phase and/or of a predetermined duration for the transition phase and/or of a transmission ratio assigned to the initial gear and/or of a transmission ratio assigned to the target gear and/or of an instantaneous drive torque or drag torque of the drive unit and/or of a desired drive torque or drag torque of the drive unit.

38. Method according to one of Claims 32 to 37, **characterized in that**, during the upshift from a lower gear to a higher gear in the traction operating state, a drive torque provided by the drive unit and/or the torque transferred or transferable by the clutch arrangement assigned to the initial gear is lowered, in the gradient phase (phase A) preceding the overlap shift phase (phase B), monotonically, preferably strictly monotonically, most preferably linearly, from an initial value to an intermediate value.

39. Method according to Claim 38, **characterized in that**, in the overlap shift phase (phase B), the drive torque provided by the drive unit is raised monotonically, preferably strictly monotonically, most preferably linearly, from the intermediate value.

40. Method according to Claim 39, **characterized in that** the drive torque provided by the drive unit, in the overlap shift phase (phase B), is raised to a further intermediate value above the initial value and is brought, preferably in the course of a gradient phase (phase C) following the overlap shift phase, from the further intermediate value to a final value which, if desired, corresponds at least approximately to the initial value.

41. Method according to Claim 40, **characterized in that**, in the gradient phase (phase C) following the overlap shift phase, the drive torque provided by the drive unit is first brought from the further intermediate value to a value below the initial value and is then raised to the final value, and/or, in the gradient phase (phase C) following the overlap shift phase, a torque transferred or transferable by the clutch arrangement assigned to the target gear is first lowered monotonically, preferably strictly monotonically, most preferably linearly, from the/one intermediate value at the end of the overlap shift phase and, if appropriate, is then raised again, in particular after the torque provided by the drive unit has reached the final value.

42. Method according to one of Claims 32 to 41, **characterized in that**, during the downshift from a higher gear to a lower gear in the traction operating state, a drive torque provided by the drive unit and/or the torque transferred or transferable by the clutch arrangement assigned to the initial gear is raised, in the gradient phase (phase A) preceding the overlap shift phase (phase B), monotonically, preferably strictly monotonically, most preferably linearly, from an initial value to an intermediate value.

43. Method according to Claim 42, **characterized in that**, in the overlap shift phase (phase B), the drive torque provided by the drive unit is lowered monotonically, preferably strictly monotonically, most preferably linearly, from the intermediate value.

44. Method according to Claim 43, **characterized in that** the drive torque provided by the drive unit, in the overlap shift phase (phase B) is lowered to a further intermediate value below the initial value and, preferably in the course of the gradient phase (phase C) following the overlap shift phase, is brought from the further intermediate value to a final value which, if desired, corresponds at least approximately to the initial value.

45. Method according to Claim 44, **characterized in that**, in the gradient phase (phase C) following the overlap shift phase (phase B), a torque transferred or transferable by the clutch arrangement assigned to the target gear is raised from the/one intermediate value at the end of the overlap shift phase monotonically, preferably strictly monotonically, most preferably linearly, to a further intermediate value corresponding, if appropriate, to the final value, and, if appropriate, is then raised further, in particular after the torque provided by the drive unit has reached the final value.

46. Method according to one of Claims 32 to 45, **characterized in that**, during the downshift from a higher gear to a lower gear in the overrun operating state, in the overlap shift phase (phase B) a drag torque applied by the drive unit is reduced from an initial value monotonically, preferably strictly monotonically, most preferably linearly, to an intermediate value.

47. Method according to Claim 46, **characterized in that**, in the course of the gradient phase (phase C) following the overlap shift phase (phase B), the drag torque applied by the drive unit is first reduced further from the intermediate value and is then brought to a final value which, if desired, corresponds at least approximately to the initial value.

48. Method according to Claim 47, **characterized in that**, in the gradient phase (phase C) following the overlap shift phase (phase B), a torque transferred or transferable by the clutch arrangement assigned to the target gear is raised from an intermediate value at the end of the overlap shift phase monotonically, preferably strictly monotonically, most preferably linearly, to a further intermediate value corresponding, if appropriate, to the final value in terms of amount and, if appropriate, is then raised further, in particular after the drag torque applied by the drive unit has reached the final value.

49. Method according to one of Claims 32 to 48, **characterized in that**, during the upshift from a lower gear to a higher gear in the overrun operating state, in the gradient phase preceding the overlap shift phase a drag torque applied by the drive unit is reduced monotonically, preferably strictly monotonically, most preferably linearly, from an initial value to an intermediate value, and/or **in that** in the gradient phase (phase II in Fig. 4) preceding the overlap shift phase (phase III in Fig. 4), the torque transferred or transferable by the clutch arrangement assigned to the initial gear is lowered monotonically, preferably strictly monotonically, most preferably linearly, from an initial value to an intermediate value.

50. Method according to Claim 49, **characterized in that**, in the gradient phase (phase II in Fig. 4), the torque transferable by the clutch arrangement assigned to the initial gear is lowered in terms of amount below the drag torque applied by the drive unit.

51. Method according to one of Claim 1 to 50, **characterized in that** the transition phase is formed at least partially by a braking phase, in which a monotonic change in the torque acting on the vehicle is brought about by the corresponding actuation of one/the brake arrangement of the vehicle, if appropriate of the vehicle brakes acting on the running wheels of the vehicle, preferably at least in a subphase of the braking phase, in coordination with an actuation of at least one of the clutch arrangements.

52. Method according to Claim 51 and according to Claim 32, **characterized in that** the gradient phase preceding the overlap shift phase and/or the gradient phase following the overlap shift phase are/is formed at least partially by a braking phase, and/or **in that** the overlap shift phase comprises a braking phase or overlaps with a braking phase.

53. Method according to one of Claims 1 to 52, **characterized in that**, in at least one phase (phases II and III in Figs. 11 to 13) of the shift sequence, a braking torque of the drive unit which occurs in an overrun operating state is substituted at least partially by a substitute braking torque applied by one/the brake arrangement of the vehicle, preferably by one of the vehicle brakes acting on the running wheels of the vehicle.

54. Method according to Claim 53, **characterized in that** a substitution is provided such that, in coordination with one another, i) the clutch arrangement previously introducing the braking torque of the drive unit into the transmission and assigned to the initial gear is actuated with the effect of a disengagement and ii) the brake arrangement is actuated with the effect of generating the substitute braking torque.

55. Method according to Claim 54, **characterized in that**, at least initially, the substitute braking torque corresponds essentially to the braking torque transferred previously by the clutch arrangement assigned to the initial gear, this clutch arrangement preferably no longer transferring any substantial torque as a result of actuation with the effect of disengagement, or **in that**, at least initially, a sum braking torque from the substitute braking torque and from a residual torque still transferred by the clutch arrangement assigned to the initial gear corresponds essentially to the braking torque previously transferred by the clutch arrangement assigned to the initial gear.

56. Method according to one of Claims 53 to 55, **characterized in that** the substitute braking torque is reduced continuously, in coordination with an actuation of the clutch arrangement assigned to the target gear with the effect of an engagement and/or with a change in an instantaneous torque provided by the drive unit with the effect of a reduction in a positive instantaneous drive torque of the drive unit or with the effect of increasing an instantaneous braking torque of the drive unit.

57. Method according to Claim 56, **characterized in that** the reduction in the substitute braking torque takes place in such a way that the overall braking torque acting on the vehicle changes monotonically, preferably strictly monotonically, on account of the instantaneous torque provided by the drive unit and of the instantaneous braking action of the brake arrangement.

58. Method according to Claim 57, **characterized in that** the substitute braking torque is reduced, according to a continuous change in the torque introduced into the transmission via the clutch device, on account of the torque provided by the drive unit, and then preferably essentially disappears when the clutch arrangement assigned to the target gear transfers the or a predetermined braking torque of the drive unit essentially completely.

59. Method according to one of Claims 53 to 58, **characterized in that**, in the overrun operating state, in preparation for a downshift from a higher gear to a lower gear, in a preparatory phase of the shift sequence the clutch arrangement assigned to the initial gear is disengaged essentially completely, the drive unit is activated in order to provide a positive drive torque, and the clutch arrangement assigned to the target gear is brought into a partial engagement state transferring an acceleration torque and corresponding to a partial engagement of the clutch arrangement, in such a way that, by means of this clutch arrangement, the transmission input shaft assigned to the target gear is, on the basis of the positive drive torque, accelerated up jointly with the drive unit itself in the direction of a synchronous rotational speed assigned to the target gear.

60. Method according to Claim 59, **characterized in that** the target gear is selected when the rotational speed of the transmission input shaft assigned to the target gear has essentially reached the synchronous rotational speed or has approached the synchronous rotational speed according to a predetermined differential rotational speed threshold interval.

**61.** Method according to Claim 60, **characterized in that**, at the latest after the selection of the target gear, the drive unit is activated with the effect of a reduction in the positive drive torque and the provision of a braking torque, preferably the torque provided by the drive unit being changed continuously until the braking torque provided has reached a predetermined value, if appropriate the value prevailing at the commencement of the shift sequence.

**62.** Drive train, if appropriate in a motor vehicle, the drive train comprising:

- a torque generation arrangement (12, 50) which comprises at least one drive unit (12), if appropriate in the form of an internal combustion engine (12), and, if desired, an auxiliary assembly (50) for the generation of an auxiliary torque;
- a transmission (18) having a synchronizing device (52), with at least two transmission input shafts (20, 22) and with at least one transmission output shaft (54), a first transmission input shaft (20) being assigned to at least one first gear and a second transmission input shaft (22) being assigned to at least one second gear;
- a multiple clutch device (24), if appropriate double clutch device (24), arranged between the drive unit (12) and the transmission (18), for torque transfer between the drive unit (12) and the transmission (18), which multiple clutch device has a first clutch arrangement (26) assigned to the first transmission input shaft (20) and a second clutch arrangement (28) assigned to the second transmission input shaft (22), the two clutch arrangements being actuable independently of one another; with a control unit (56) assigned to the drive train, the control unit having means for activating the torque generation arrangement and for actuating the clutch device by the method according to one of the preceding claims.

**63.** Drive train according to Claim 62, **characterized in that** the auxiliary assembly is a crankshaft starter generator (50) and/or serves as an auxiliary assembly for a brake arrangement.

**64.** Drive train according to Claim 62 or 63, **characterized in that** the clutch arrangements are designed as wet-running multiple-disc clutch arrangements (26, 28).

**65.** Drive train according to Claim 62 or 63, **characterized in that** the clutch arrangements are designed as dry-running clutch arrangements, preferably of the friction-disc type of construction.

**Revendications**

**1.** Procédé permettant de faire fonctionner une ligne de transmission faisant partie d'un véhicule automobile et comprenant :

- un dispositif de génération de couple (12, 50) qui englobe au moins une unité de transmission (12), le cas échéant sous forme d'un moteur à combustion interne (12), ainsi que, si on le souhaite, un agrégat auxiliaire (50) pour générer un couple auxiliaire ;
- une boîte de vitesses (18) équipée d'un dispositif de synchronisation (52) comportant au moins deux arbres d'entrée de boîte de vitesses (20, 22) et au moins un arbre de sortie de boîte de vitesses (54), un premier arbre d'entrée de boîte de vitesses (20) étant associé à au moins une première vitesse et un deuxième arbre d'entrée de boîte de vitesses (20) étant associé à au moins une deuxième vitesse ;
- un dispositif d'embrayage multiple (24) disposé entre l'unité de transmission (12) et la boîte de vitesses (18), le cas échéant un double dispositif d'embrayage (24), pour transmettre le couple entre l'unité de transmission (12) et la boîte de vitesses (18) et qui présente un premier dispositif d'embrayage (26) associé au premier arbre d'entrée de boîte de vitesses (20) et un deuxième dispositif d'embrayage (28) associé au deuxième arbre d'entrée de boîte de vitesses (22) ;
les deux dispositifs d'embrayage étant actionnables indépendamment l'un de l'autre en ce sens que le dispositif d'embrayage est actionnable aux fins d'un embrayage ou d'un débrayage et qu'en même temps, l'autre dispositif d'embrayage est actionnable aux fins d'un embrayage ou d'un débrayage, et une distinction étant faite entre de premiers et seconds états de fonctionnement à la traction de manière à ce qu'au moins dans un premier état de fonctionnement à la traction parmi les premier et deuxième états de fonctionnement à la traction de la ligne de transmission ou du véhicule automobile, lors du changement de vitesse entre une première vitesse associée au premier dispositif d'embrayage (26, 28) et une deuxième vitesse associée au deuxième dispositif d'embrayage (28, 26), les dispositifs d'embrayage (26, 28) soient actionnés et le dispositif de génération de couple (12, 50) soit commandé de manière à ce qu'au moins un des critères suivants concernant un déroulement de passage de vitesse englobant le changement de vitesse soit rempli :

a) pendant le déroulement du changement de vitesse, il se forme sur l'arbre de sortie de boîte de vitesses (54) ou du côté mené de celui-ci, pendant une phase de transition, un couple changeant de façon monotone transmis du moins partiellement de la boîte de vitesses (18) à l'arbre de sortie de la boîte de vitesses (54) et agissant sur le véhicule aux fins d'une accélération ou d'une décélération, de préférence, une différence entre une valeur de couple au début de la phase de transition et une valeur de couple à la fin de la phase de transition équivalant sensiblement à une modification du rapport de vitesse lors du changement de vitesse,

b) pendant le déroulement du changement de vitesse, le couple se formant sur l'arbre de sortie de boîte de vitesses (54) ou du côté mené de celui-ci et transmis du moins partiellement de la boîte de vitesses (18) à l'arbre de sortie de boîte de vitesses (54) reste en réserve et sensiblement constant après la phase de transmission,

c) pendant le déroulement du changement de vitesse, un couple d'entrée de boîte de vitesses restant sensiblement constant et équivalant temporairement à une somme d'une première composante de couple introduite par le premier arbre d'entrée de boîte de vitesses et d'une deuxième composante de couple introduite par le deuxième arbre d'entrée de boîte de vitesses est introduit par les arbres d'entrée de boîte de vitesses dans la boîte de vitesses,

d) pendant le déroulement du changement de vitesse, on obtient une accélération du véhicule à hausse sensiblement monotone ou à baisse sensiblement monotone ;

et, dans un deuxième état de fonctionnement parmi les premier et deuxième états de fonctionnement, en renonçant à remplir au moins un des critères a) à d) concernant le changement de vitesse, le déroulement du changement de vitesse est réalisé, lors du changement de vitesse entre la première vitesse et la deuxième vitesse aux fins de monter la vitesse ou aux fins de descendre la vitesse, de manière à ce qu'il y ait une interruption de la force de traction.

2. Procédé permettant de faire fonctionner une ligne de transmission faisant partie d'un véhicule automobile et comprenant :

- un dispositif de génération de couple (12, 50) qui englobe au moins une unité de transmission (12), le cas échéant sous forme d'un moteur à combustion interne (12), ainsi que, si on le souhaite, un agrégat auxiliaire (50) pour générer un couple auxiliaire ;
- une boîte de vitesses (18) équipée d'un dispositif de synchronisation (52) comportant au moins deux arbres d'entrée de boîte de vitesses (20, 22) et au moins un arbre de sortie de boîte de vitesses (54), dans laquelle un premier arbre d'entrée de boîte de vitesses (20) est associé à au moins une première vitesse et un deuxième arbre d'entrée de boîte de vitesses (22) est associé à au moins une deuxième vitesse ;
- un dispositif d'embrayage multiple (24) disposé entre l'unité de transmission (12) et la boîte de vitesses (18), le cas échéant un double dispositif d'embrayage (24), pour transmettre le couple entre l'unité de transmission (12) et la boîte de vitesses (18) et qui présente un premier dispositif d'embrayage (26) associé au premier arbre d'entrée de boîte de vitesses (20) et un deuxième dispositif d'embrayage (28) associé au deuxième arbre d'entrée de boîte de vitesses (22) ;
les deux dispositifs d'embrayage étant actionnables indépendamment l'un de l'autre du fait que le dispositif d'embrayage est actionnable aux fins d'un embrayage ou d'un débrayage et qu'en même temps, l'autre dispositif d'embrayage est actionnable aux fins d'un embrayage ou d'un débrayage et une distinction étant faite entre de premiers et seconds états de fonctionnement à la poussée de manière à ce qu'au moins dans un premier état de fonctionnement parmi les premier et deuxième états de fonctionnement à la poussée de la ligne de transmission ou du véhicule automobile, lors du changement de vitesse entre une première vitesse associée à un premier dispositif d'embrayage (26, 28) et une deuxième vitesse associée au deuxième dispositif d'embrayage (28, 26), les dispositifs d'embrayage (26, 28) soient actionnés et le dispositif de génération de couple (12, 50) soit commandé de manière à ce qu'au moins un des critères suivants concernant un déroulement de changement de vitesse englobant le changement de vitesse soit rempli :

a) pendant le déroulement du changement de vitesse, il se forme sur l'arbre de sortie de boîte de vitesses (54) ou du côté mené de celui-ci, pendant une phase de transition, un couple changeant de façon monotone transmis du moins partiellement de la boîte de vitesses (18) à l'arbre de sortie de la boîte de vitesses (54) et agissant sur le véhicule aux fins d'une accélération ou d'une décélération, de préférence, une différence entre une valeur de couple au début de la phase de transition et une valeur de couple à la fin de la phase de transition équivalant sensiblement à une modification du rapport de vitesse lors du changement de vitesse,

b) pendant le déroulement du changement de vitesse, le couple se formant sur l'arbre de sortie de boîte de vitesses (54) ou du côté mené de celui-ci et transmis du moins partiellement de la boîte de vitesses (18) à l'arbre de sortie de boite de vitesses (54) reste en réserve et sensiblement constant après la phase de transition,

c) pendant le déroulement du changement de vitesse, un couple d'entrée de boîte de vitesses restant sensiblement constant et équivalant temporairement à une somme d'une première composante de couple introduite par le premier arbre d'entrée de boîte de vitesses et d'une deuxième composante de couple introduite par le deuxième arbre d'entrée de boîte de vitesses est introduit par les arbres d'entrée de boîte de vitesses dans la boîte de vitesses,

d) pendant le déroulement du changement de vitesse, on obtient une accélération du véhicule à hausse sensiblement monotone ou à baisse sensiblement monotone ;

et, dans un deuxième état de fonctionnement parmi les premiers et deuxièmes états de fonctionnement à la poussée, en renonçant à remplir au moins un des critères a) à d) concernant le changement de vitesse, le déroulement du changement de vitesse est réalisé lors du changement de vitesse entre la première vitesse et la deuxième vitesse aux fins de monter la vitesse ou aux fins de descendre la vitesse, de manière à ce qu'il y ait une interruption de la force de poussée.

3. Procédé selon la revendication 1 ou 2, **caractérisé en ce que**, pendant le déroulement du changement de vitesse, le critère a) est rempli.

4. Procédé selon la revendication 1 ou 2, **caractérisé en ce que**, pendant le déroulement du changement de vitesse, les critères a) et b) sont remplis conjointementt.

5. Procédé selon l'une quelconque des revendications 1 à 4, **caractérisé en ce que**, pendant le déroulement du changement de vitesse, le critère c) est rempli.

6. Procédé selon l'une quelconque des revendications 1 à 5, **caractérisé en ce que**, pendant le déroulement du changement de vitesse, le critère d) est rempli.

7. Procédé selon l'une quelconque des revendications 1 à 6, **caractérisé en ce qu'**au moins un critère est rempli lorsqu'on monte la vitesse d'une vitesse basse à une vitesse plus élevée.

8. Procédé selon l'une quelconque des revendications 1 à 7, **caractérisé en ce qu'**au moins un critère est rempli lorsqu'on descend la vitesse d'une vitesse élevée à une vitesse plus basse.

9. Procédé selon l'une quelconque des revendications 1 à 8, **caractérisé en ce qu'**au moins un critère est rempli aussi bien à l'état de fonctionnement à la traction qu'à l'état de fonctionnement à la poussée.

10. Procédé selon l'une quelconque des revendications 7 à 9, **caractérisé en ce que** le déroulement du changement de vitesse comprend, avant de passer la vitesse visée, un actionnement du dispositif d'embrayage associé à la vitesse visée aux fins d'un débrayage important ou complet (phase I).

11. Procédé selon l'une quelconque des revendications 7 à 10, **caractérisé en ce que** le déroulement du changement de vitesse comprend, avant et/ou pendant le passage de la vitesse visée, un actionnement du dispositif d'embrayage associé à la vitesse de départ aux fins d'une réduction du couple transmissible par le dispositif d'embrayage (phase II).

12. Procédé selon la revendication 11, **caractérisé en ce qu'**à l'état de fonctionnement à la traction, le couple transmissible par le dispositif d'embrayage est réglé à une valeur qui équivaut approximativement au couple fourni momentanément ou préalablement par le dispositif de génération de couple (phase II).

13. Procédé selon la revendication 11 ou 12, **caractérisé en ce qu'**à l'état de fonctionnement à la poussée, le couple transmissible par le dispositif d'embrayage est réglé à une valeur qui se situe en dessous du couple fourni momentanément ou préalablement par le dispositif de génération de couple (phase II).

**14.** Procédé selon l'une quelconque des revendications 7 à 13, **caractérisé en ce que** le déroulement du changement de vitesse avant et/ou pendant et/ou après le passage de la vitesse visée comprend une commande du dispositif de génération de couple aux fins d'une augmentation ou d'une diminution d'un couple fourni par le dispositif de génération de couple (phases II, III).

**15.** Procédé selon l'une quelconque des revendications 7 à 14, **caractérisé en ce qu'**une composante de couple est compensée en se basant sur une accélération ou un freinage survenant pendant le passage de la vitesse visée d'un dispositif de masse de rotation en réglant une composante correspondante de couple de compensation du dispositif de génération de couple et/ou en actionnant en conséquence le dispositif d'embrayage associé à la vitesse de départ (phase II) .

**16.** Procédé selon l'une quelconque des revendications 7 à 15, **caractérisé en ce que** le dispositif d'embrayage associé à la vitesse de départ est amené en état de glissement et qu'ensuite le dispositif d'embrayage associé à la vitesse visée déjà passée est actionné aux fins d'un embrayage et le dispositif d'embrayage associé à la vitesse de départ est actionné aux fins d'un débrayage (phases II, III).

**17.** Procédé selon la revendication 16, **caractérisé en ce que** l'actionnement des dispositifs d'embrayage est effectué les uns en fonction des autres de manière à ce qu'un couple transmis globalement par les dispositifs d'embrayage reste sensiblement constant (phase III).

**18.** Procédé selon la revendication 16 ou 17, **caractérisé en ce que** l'actionnement des dispositifs d'embrayage est effectué les uns en fonction des autres de manière à ce qu'un régime de glissement choisi soit maintenu constant (phase III).

**19.** Procédé selon la revendication 17 ou 18, **caractérisé en ce que** le dispositif d'embrayage associé à la vitesse visée est actionné à la commande aux fins d'un embrayage et le dispositif d'embrayage associé à la vitesse de départ est actionné en régulation aux fins d'un débrayage (phase III).

**20.** Procédé selon la revendication 17 ou 18, **caractérisé en ce que** le dispositif d'embrayage associé à la vitesse de départ est actionné à la commande aux fins d'un débrayage et le dispositif d'embrayage associé à la vitesse visée est actionné en régulation aux fins d'un embrayage (phase III).

**21.** Procédé selon l'une quelconque des revendications 7 à 20, **caractérisé en ce que**, dans l'état de fonctionnement à la traction pendant ou après le réglage du couple transmissible par le dispositif d'embrayage associé à la vitesse visée à une valeur qui équivaut approximativement au couple fourni momentanément ou préalablement par le dispositif de génération de couple, le dispositif de génération de couple est commandé aux fins d'une diminution du couple généré par celui-ci afin d'au moins rapprocher un régime du dispositif de génération de couple d'un régime de l'arbre d'entrée de boîte de vitesses associé à la vitesse visée (phase IV).

**22.** Procédé selon l'une quelconque des revendications 7 à 21, **caractérisé en ce que**, dans l'état de fonctionnement à la poussée pendant ou après un réglage du couple transmissible par le dispositif d'embrayage associé à la vitesse visée à une valeur qui équivaut approximativement au couple fourni momentanément ou préalablement par le dispositif de génération de couple est commandé et/ou le dispositif de génération de couple associé à la vitesse visée est actionné de manière à ce que le couple transmissible par ce dispositif de génération de couple ait une valeur supérieure à celle d'un couple fourni en même temps par le dispositif de génération de couple afin d'au moins rapprocher un régime du dispositif de génération de couple d'un régime de l'arbre d'entrée de boîte de vitesses associé à la vitesse visée (phase IV).

**23.** Procédé selon la revendication 21 ou 22, **caractérisé en ce qu'**une composante de couple est compensée en se basant sur une accélération ou un freinage survenant pendant le rapprochement des régimes d'un dispositif de masse de rotation, le cas échéant par réglage d'une composante correspondante de couple de compensation du dispositif de génération de couple (phase IV).

**24.** Procédé selon l'une quelconque des revendications 21 à 23, **caractérisé en ce que**, pendant ou après le rapprochement du régime du dispositif de génération de couple du régime de l'arbre d'entrée de boîte de vitesses associé à la vitesse visée, le dispositif d'embrayage associé à la vitesse visée est sensiblement complètement embrayé (phase V) .

**25.** Procédé selon l'une quelconque des revendications 21 à 24, **caractérisé en ce que**, pendant ou après le rapprochement du régime du dispositif de génération de couple du régime de l'arbre d'entrée de boîte de vitesses associé à la vitesse visée, le dispositif d'embrayage associé à la vitesse visée est embrayé du moins jusqu'à ce qu'un régime de l'arbre d'entrée de boîte de vitesses associé à la vitesse de départ se soit au moins rapproché du régime de l'arbre d'entrée de boîte de vitesses associé à la vitesse visée (phase V).

**26.** Procédé selon la revendication 25, **caractérisé en ce qu'**une composante de couple est compensée en se basant sur une accélération ou un freinage survenant pendant le rapprochement des régimes d'un dispositif de masse de rotation par réglage d'une composante correspondante de couple de compensation du dispositif de génération de couple (phase V).

**27.** Procédé selon l'une quelconque des revendications 21 à 26, **caractérisé en ce que**, pendant ou après le rapprochement du régime du dispositif de génération de couple du régime de l'arbre d'entrée de boîte de vitesses associé à la vitesse visée, le dispositif de génération de couple est commandé de manière à ce qu'il fournisse un couple qui équivaut au moins approximativement à celui fourni par le dispositif de génération de couple avant le déroulement du changement de vitesse (phase V).

**28.** Procédé selon l'une quelconque des revendications 1 à 27, **caractérisé en ce que** le couple fourni par le dispositif de génération de couple pendant au moins une phase de déroulement de changement de vitesse (phases II, III, IV, V) comprend une composante de couple fournie par l'unité de transmission et une composante de couple fournie par l'agrégat auxiliaire.

**29.** Procédé selon la revendication 28, **caractérisé en ce que** les deux composantes sont positives ou que les deux composantes sont négatives ou qu'une composante est positive et l'autre composante négative.

**30.** Procédé selon l'une quelconque des revendications 1 à 29, **caractérisé en ce qu'**on utilise comme agrégat auxiliaire un générateur de démarrage de vilebrequin (50) et/ou un dispositif de freinage.

**31.** Procédé selon l'une quelconque des revendications 1 à 30, **caractérisé en ce que** la phase de transition est constituée sensiblement par une phase de commutation de recoupement (phase III en figures 2, 3 et 5) dans laquelle les dispositifs d'embrayage sont actionnés en sens inverse afin de transférer un couple à transmettre entre l'unité de transmission et la boîte de vitesses de l'arbre d'entrée de boîte de vitesses associé à la vitesse de départ à l'arbre d'entrée de boîte de vitesses associé à la vitesse visée.

**32.** Procédé selon l'une quelconque des revendications 1 à 30, **caractérisé en ce que** la phase de transition est constituée sensiblement par une phase de commutation de recoupement (phase III en figure 4 ; phase B) dans laquelle les dispositifs d'embrayage sont actionnés en sens inverse afin de transférer un couple à transmettre entre l'unité de transmission et la boîte de vitesses de l'arbre d'entrée de boîte de vitesses associé à la vitesse de départ à l'arbre d'entrée de boîte de vitesses associé à la vitesse visée ainsi que par une phase de gradient (phase II en figure 4 ; phase A) préalable à la phase de commutation de recoupement et/ou une phase de gradient (phase C) suivant la phase de commutation de recoupement pendant laquelle une modification monotone du couple agissant sur le véhicule, le cas échéant du couple se formant sur l'arbre de sortie de boîte de vitesses, est provoquée par une commande correspondante du dispositif de génération de couple et/ou par un actionnement correspondant du dispositif d'embrayage associé à la vitesse de départ ou à la vitesse visée.

**33.** Procédé selon la revendication 31 ou 32, **caractérisé en ce que**, pendant la phase de commutation de recoupement (phase B), les dispositifs d'embrayage sont commandés de manière à obtenir une modification strictement monotone, de préférence au moins approximativement linéaire, du couple se formant sur l'arbre de sortie de boîte de vitesses.

**34.** Procédé selon les revendications 32 et 33, **caractérisé en ce que**, pendant la phase de gradient (phase A) préalable à la phase de commutation de recoupement (phase B) et/ou pendant la phase de gradient (phase C) suivant la phase de commutation de recoupement, le dispositif de génération de couple est commandé et/ou le dispositif de génération de couple associé à la vitesse de départ ou à la vitesse visée est actionné de manière à obtenir une modification strictement monotone, de préférence au moins approximativement linéaire, du couple agissant sur le véhicule se formant le cas échéant sur l'arbre de sortie de boîte de vitesses.

**35.** Procédé selon la revendication 34, **caractérisé en ce que** la commande ou l'actionnement est effectué de manière à ce que, pendant toute la phase de transition (phase A+B+C ; phase II+III en figure 4 ; phase B+C), on obtienne une modification strictement monotone, de préférence au moins approximativement linéaire, du couple agissant sur le véhicule se formant le cas échéant sur l'arbre de sortie de boîte de vitesses.

36. Procédé selon l'une quelconque des revendications 32 à 35, **caractérisé en ce que** la modification monotone, le cas échéant strictement monotone, ou linéaire du couple agissant sur le véhicule se formant le cas échéant sur l'arbre de sortie de boîte de vitesses est réglée dans la phase de gradient (phase A) préalable à la phase de commutation de recoupement (phase B) et/ou dans la phase de gradient (phase C) suivant la phase de commutation de recoupement en se basant sur une modification résultant de la modification du rapport de transmission lors du passage de vitesse d'un couple se formant sur l'arbre de sortie de boîte de vitesses.

37. Procédé selon la revendication 36, **caractérisé en ce que** la modification monotone, le cas échéant strictement monotone, ou linéaire du couple agissant sur le véhicule se formant le cas échéant sur l'arbre de sortie de boîte de vitesses est réglée pendant la phase de gradient correspondante (phase A ou phase C) en prenant comme base un gradient théorique de couple ou un gradient théorique d'accélération et/ou une durée prédéterminée pour la phase de commutation de recoupement et/ou une durée prédéterminée pour la phase de gradient concernée et/ou une durée prédéterminée pour la phase de transition et/ou un rapport de vitesse associé à la vitesse de départ et/ou un rapport de vitesse associé à la vitesse visée et/ou un couple de transmission ou couple de traînage momentané de l'unité de transmission et/ou un couple de transmission ou couple de traînage souhaité de l'unité de transmission.

38. Procédé selon l'une quelconque des revendications 32 à 37, **caractérisé en ce que**, lorsqu'on monte la vitesse d'une vitesse basse à une vitesse plus élevée en état de fonctionnement à la traction, un couple de transmission fourni par l'unité de transmission et/ou le couple transmis ou transmissible par le dispositif d'embrayage associé à la vitesse de départ, pendant la phase de gradient (phase A) préalable à la phase de commutation de recoupement (phase B), est diminué de manière monotone, de préférence strictement monotone, de manière tout à fait préférentielle linéaire, d'une valeur de départ à une valeur intermédiaire.

39. Procédé selon la revendication 38, **caractérisé en ce que**, pendant la phase de commutation de recoupement (phase B), le couple de transmission fourni par l'unité de transmission est relevé de manière monotone, de préférence strictement monotone, de manière tout à fait préférentielle linéaire, depuis la valeur intermédiaire.

40. Procédé selon la revendication 39, **caractérisé en ce que** le couple de transmission fourni par l'unité de transmission est relevé pendant la phase de commutation de recoupement (phase B) à une autre valeur intermédiaire supérieure à la valeur de départ et est amené de préférence au cours d'une phase de gradient (phase C) suivant la phase de commutation de recoupement de l'autre valeur intermédiaire à une valeur finale équivalant au moins approximativement, si on le souhaite, à la valeur de départ.

41. Procédé selon la revendication 40, **caractérisé en ce que** le couple de transmission fourni par l'unité de transmission est relevé pendant la phase de gradient (phase C) suivant la phase de commutation de recoupement de l'autre valeur intermédiaire d'abord à une valeur inférieure à la valeur de départ et ensuite relevé à la valeur finale et/ou qu'un couple transmis ou transmissible par le dispositif d'embrayage associé à la vitesse visée est diminué de manière monotone, de préférence strictement monotone, de manière tout à fait préférentielle linéaire, depuis la/une valeur intermédiaire à la fin de la phase de commutation de recoupement et ensuite le cas échéant de nouveau relevé, notamment une fois que le couple fourni par l'unité de transmission a atteint la valeur finale.

42. Procédé selon l'une quelconque des revendications 32 à 41, **caractérisé en ce que**, lorsqu'on descend la vitesse d'une vitesse élevée à une vitesse plus basse en état de fonctionnement à la traction, un couple de transmission fourni par l'unité de transmission et/ou le couple transmis ou transmissible par le dispositif d'embrayage associé à la vitesse de départ, pendant la phase de gradient (phase A) préalable à la phase de commutation de recoupement (phase B), est relevé de manière monotone, de préférence strictement monotone, de manière tout à fait préférentielle linéaire, d'une valeur de départ à une valeur intermédiaire.

43. Procédé selon la revendication 42, **caractérisé en ce que**, pendant la phase de commutation de recoupement (phase B), le couple fourni par l'unité de transmission est diminué de manière monotone, de préférence strictement monotone, de manière tout à fait préférentielle linéaire, depuis la valeur intermédiaire.

44. Procédé selon la revendication 43, **caractérisé en ce que** le couple fourni par l'unité de transmission, pendant la phase de commutation de recoupement (phase B), est diminué jusqu'à une autre valeur intermédiaire inférieure à la valeur de départ et est amené, de préférence au cours de la phase de gradient (phase C) suivant la phase de commutation de recoupement de l'autre valeur intermédiaire, à une valeur finale équivalant, si on le souhaite, au moins approximativement à la valeur de départ.

**45.** Procédé selon la revendication 44, **caractérisé en ce qu'**un couple transmis ou transmissible par le dispositif d'embrayage associé à la vitesse visée, pendant la phase de gradient (phase C) suivant la phase de commutation de recoupement (phase B), est relevé de manière monotone, de préférence strictement monotone, de manière tout à fait préférentielle linéaire, à une autre valeur intermédiaire équivalant le cas échéant à la valeur finale et est ensuite le cas échéant de nouveau relevé, notamment une fois que le couple fourni par l'unité de transmission a atteint la valeur finale.

**46.** Procédé selon l'une quelconque des revendications 32 à 45, **caractérisé en ce que**, lorsqu'on descend la vitesse d'une vitesse élevée à une vitesse plus basse en état de fonctionnement à la poussée, un couple de traînage appliqué par l'unité de transmission est réduit, pendant la phase de commutation de recoupement (phase B), de manière monotone, de préférence strictement monotone, de manière tout à fait préférentielle linéaire, d'une valeur de départ à une valeur intermédiaire.

**47.** Procédé selon la revendication 46, **caractérisé en ce que** le couple de traînage appliqué par l'unité de transmission est d'abord encore réduit au cours de la phase de gradient (phase C) suivant la phase de commutation de recoupement (phase B) depuis la valeur intermédiaire et est ensuite amené à une valeur finale équivalant au moins approximativement, si on le souhaite, à la valeur de départ.

**48.** Procédé selon la revendication 47, **caractérisé en ce qu'**un couple transmis ou transmissible par le dispositif d'embrayage associé à la vitesse visée est relevé, pendant la phase de gradient (phase C) suivant la phase de commutation de recoupement (phase B), depuis une valeur intermédiaire à la fin de la phase de commutation de recoupement, de manière monotone, de préférence strictement monotone, de manière tout à fait préférentielle linéaire, à une autre valeur intermédiaire équivalant en valeur le cas échéant à la valeur finale et est ensuite éventuellement encore relevé, notamment une fois que le couple de traînage appliqué par l'unité de transmission a atteint la valeur finale.

**49.** Procédé selon l'une quelconque des revendications 32 à 48, **caractérisé en ce que**, lorsqu'on monte la vitesse d'une vitesse basse à une vitesse plus élevée en état de fonctionnement à la poussée, un couple de traînage appliqué par l'unité de transmission est réduit, pendant la phase de gradient préalable à la phase de commutation de recoupement, de manière monotone, de préférence strictement monotone, de manière tout à fait préférentielle linéaire, d'une valeur de départ à une valeur intermédiaire et/ou que le couple transmis ou transmissible par le dispositif d'embrayage associé à la vitesse de départ, pendant la phase de gradient (phase II en figure 4) préalable à la phase de commutation de recoupement (phase III en figure 4), est diminué de manière monotone, de préférence strictement monotone, de manière tout à fait préférentielle linéaire, d'une valeur de départ à une valeur intermédiaire.

**50.** Procédé selon la revendication 49, **caractérisé en ce que** le couple transmissible par le dispositif d'embrayage associé à la vitesse de départ est diminué en valeur pendant la phase de gradient (phase II en figure 4) jusqu'en dessous du couple de traînage appliqué par l'unité de transmission.

**51.** Procédé selon l'une quelconque des revendications 1 à 50, **caractérisé en ce que** la phase de transition est composée du moins partiellement d'une phase de freinage dans laquelle on provoque une modification monotone du couple agissant sur le véhicule par actionnement correspondant d'un/du dispositif de freinage du véhicule, le cas échéant des freins du véhicule agissant sur les roues du véhicule, de préférence au moins pendant une phase partielle de la phase de freinage en fonction d'un actionnement d'au moins un des dispositifs d'embrayage.

**52.** Procédé selon la revendication 51 ainsi que la revendication 32, **caractérisé en ce que** la phase de gradient préalable à la phase de commutation de recoupement et/ou la phase de gradient suivant la phase de commutation de recoupement est constituée du moins partiellement par une phase de freinage et/ou que la phase de commutation de recoupement comprend une phase de freinage ou est en chevauchement avec une phase de freinage.

**53.** Procédé selon l'une quelconque des revendications 1 à 52, **caractérisé en ce qu'**à un couple de freinage se formant en état de fonctionnement à la poussée de l'unité de transmission, pendant au moins une phase (phases II et III en figures 11 à 13) du déroulement du passage de vitesse, est substitué au moins partiellement un couple de freinage de remplacement appliqué par les freins du véhicule agissant sur les roues du véhicule.

**54.** Procédé selon la revendication 53, **caractérisé en ce qu'**il est prévu une substitution telle que, l'un en fonction de l'autre, i) le dispositif d'embrayage introduisant préalablement le couple de freinage de l'unité de transmission dans la boîte de vitesse et associé à la vitesse de départ soit actionné aux fins d'un débrayage et ii) le dispositif de freinage soit actionné aux fins d'une génération de couple de freinage de remplacement.

**55.** Procédé selon la revendication 54, **caractérisé en ce qu'**au moins au début, le couple de freinage de remplacement équivaut sensiblement au couple de freinage transmis préalablement par le dispositif d'embrayage associé à la vitesse de départ, ce dispositif d'embrayage ne transmettant de préférence plus de couple sensible suite à l'actionnement aux fins du débrayage ou **en ce qu'**au moins au début, un couple de freinage additionné composé du couple de freinage de remplacement et d'un couple résiduel encore transmis par le dispositif de freinage associé à la vitesse de départ équivaut sensiblement au couple de freinage transmis auparavant par le dispositif d'embrayage associé à la vitesse de départ.

**56.** Procédé selon l'une quelconque des revendications 53 à 55, **caractérisé en ce que** le couple de freinage de remplacement est réduit en continu, en fonction d'un actionnement du dispositif d'embrayage associé à la vitesse visée aux fins d'un débrayage et/ou d'une modification d'un couple momentané fourni par l'unité de transmission aux fins d'une réduction d'un couple de transmission positif momentané de l'unité de transmission ou aux fins d'une augmentation d'un couple de freinage momentané de l'unité de transmission.

**57.** Procédé selon la revendication 56, **caractérisé en ce que** la réduction du couple de freinage de remplacement se fait de manière à ce que le couple de freinage agissant globalement sur le véhicule change de manière monotone, de préférence strictement monotone, en raison du couple momentané fourni par l'unité de transmission et de l'effet de freinage momentané du dispositif de freinage.

**58.** Procédé selon la revendication 57, **caractérisé en ce que** le couple de freinage de remplacement est réduit en fonction d'une modification continue du couple introduit par le dispositif d'embrayage dans la transmission en raison du couple fourni par l'unité de transmission et disparaît de préférence sensiblement lorsque le dispositif d'embrayage associé à la vitesse visée dépasse sensiblement totalement le ou un couple prédéfini de l'unité de transmission.

**59.** Procédé selon l'une quelconque des revendications 53 à 58, **caractérisé en ce qu'**en état de fonctionnement à la poussée, en préparation d'une descente de vitesse d'une vitesse élevée à une vitesse plus basse, pendant une phase de préparation du déroulement du passage de vitesse, le dispositif d'embrayage associé à la vitesse de départ est sensiblement totalement débrayé, l'unité de transmission est commandée pour fournir un couple de transmission positif et le dispositif d'embrayage associé à la vitesse visée est amené dans un état partiel d'embrayage transmettant un couple d'accélération et équivalant à un embrayage partiel du dispositif d'embrayage, de manière à ce que l'arbre d'entrée de boîte de vitesses associé à la vitesse visée monte en accélération, par l'entremise de ce dispositif d'embrayage, en se basant sur le couple de transmission positif, avec l'unité de transmission elle-même vers un régime synchrone associé à la vitesse visée.

**60.** Procédé selon la revendication 59, **caractérisé en ce que** la vitesse visée est passée lorsque le régime de l'arbre d'entrée de boîte de vitesses associé à la vitesse visée a atteint sensiblement le régime synchrone ou s'est rapproché du régime synchrone suivant un intervalle prescrit de régime différentiel de seuil.

**61.** Procédé selon la revendication 60, **caractérisé en ce qu'**au plus tard après le passage de la vitesse visée, l'unité de transmission est commandée aux fins d'une réduction du couple de transmission positif et de la fourniture d'un couple de freinage, le couple fourni par l'unité de transmission changeant de préférence en continu jusqu'à ce que le couple de freinage fourni ait atteint une valeur prédéterminée, le cas échéant la valeur régnant au début du déroulement du passage de vitesse.

**62.** Ligne de transmission, le cas échéant dans un véhicule automobile, cette ligne de transmission comportant :

- un dispositif de génération de couple (12, 50) qui englobe au moins une unité de transmission (12), le cas échéant sous forme d'un moteur à combustion interne (12), ainsi que, si on le souhaite, un agrégat auxiliaire (50) pour générer un couple auxiliaire,
- une transmission (18) équipée d'un dispositif de synchronisation (52) comprenant au moins deux arbres d'entrée de boîte de vitesses (20, 22) et au moins un arbre de sortie de boîte de vitesses (54), un premier arbre d'entrée de boîte de vitesses (20) étant associé à au moins une première vitesse et un deuxième arbre d'entrée de boîte de vitesses (22) étant associé à au moins une deuxième vitesse ;

- un dispositif d'embrayage multiple (24) disposé entre l'unité de transmission (12) et la boîte de vitesses (18), le cas échéant un double dispositif d'embrayage (24), pour la transmission de couple entre l'unité de transmission (12) et la boîte de vitesses (18) et qui présente un premier dispositif d'embrayage (26) associé au premier arbre d'entrée de boîte de vitesse (20) et un deuxième dispositif d'embrayage (28) associé au deuxième arbre d'entrée de boîte de vitesses (22), les deux dispositifs d'embrayage étant actionnables indépendamment l'un de l'autre ; comportant une unité de commande (36) associée à la ligne de transmission, l'unité de commande présentant des moyens de commande du dispositif de génération de couple et d'actionnement du dispositif d'embrayage suivant le procédé selon l'une quelconque des revendications précédentes.

63. Ligne de transmission selon la revendication 62, **caractérisé en ce que** l'agrégat auxiliaire est un générateur de démarrage de vilebrequin (50) et/ou qu'un dispositif de freinage sert d'agrégat auxiliaire.

64. Ligne de transmission selon la revendication 62 ou 63, **caractérisé en ce que** les dispositifs d'embrayage sont réalisés sous forme de dispositifs d'embrayage à lamelles fonctionnant à l'humidité (26, 28).

65. Ligne de transmission selon la revendication 62 ou 63, **caractérisé en ce que** les dispositifs d'embrayage sont réalisés sous forme de dispositifs d'embrayage à lamelles fonctionnant à sec, de préférence de type à disque de friction.

Fig.1

# Fig. 2

## Schaltablauf: Zug-Hoch-Schaltung

# Fig. 3

## Schaltablauf: Zug-Rück-Schaltung

# Fig. 4

## Schaltablauf: Schub-Hoch-Schaltung

# Fig. 5

Schaltablauf: Schub-Rück-Schaltung

Fig. 6

EP 1 352 187 B1

Schaltablauf: Zug - Hoch - Schaltung

Fig.7

Schaltablauf:  Schub - Rück - Schaltung

Fig. 8

## Schaltablauf: Zug-Rück-Schaltung

Fig.9

## Schaltablauf: Zug-Rück-Schaltung

Fig. 10

# Schaltablauf: Schub-Rück-Schaltung

Fig. 11

## Schaltablauf: Schub-Rück-Schaltung

Fig.12

## Schaltablauf: Schub-Rück-Schaltung

Fig. 13

## Schaltablauf: Schub-Rück-Schaltung

Fig. 14

## Schaltablauf: Schub-Rück-Schaltung

**Fig.15**